# EUROPEAN PATENT APPLICATION

(11) **EP 1 860 837 A1**
(43) Date of publication of application: **28.11.2007**
(21) Application number: 06722210.9
(22) Date of filing: 30.03.2006
(51) Int. Cl.: H04L 12/64

(54) **A METHOD AND SYSTEM FOR IMPLEMENTING ROUTE CONTROL**

(30) Priority: 30.03.2005 CN 200510063952; 07.06.2005 CN 200510075793; 08.06.2005 CN 200510075146; 04.08.2005 CN 200510089901
(71) Applicant: Huawei Technologies Co., Ltd., Longgang District, Shenzhen Guangdong 518129 (CN)
(72) Inventor: GU, Jiongjiong, Huawei Administration Building, Shenzhen, Guangdong 518129 (CN); ZHU, Dongming, Huawei Administration Building, Shenzhen, Guangdong 518129 (CN); ZHANG, Hai, Huawei Administration Building, Shenzhen, Guangdong 518129 (CN); DUAN, Xiaoqin, Huawei Administration Building, Shenzhen, Guangdong 518129 (CN); ZHANG, Peng, Huawei Administration Building, Shenzhen, Guangdong 518129 (CN)
(74) Representative: Beresford, Keith Denis Lewis
(86) International application number: PCT/CN2006/000558
(87) International publication number: WO 2006/102850

(57) **Abstract**

Embodiments of the present invention disclose a method for routing control applied to a communication system including a CS domain and an IMS and in which a Routing Policy Decision-making Point (RPDP) is set; and the method includes: initiating a routing query to the RPDP by an interrogation network unit in the communication system upon receiving a service request; making a routing decision by the RPDP according to routing decision-making related information and the routing policy information, returning the routing decision to the interrogation networking unit by the RPDP; and performing subsequent routing control by the interrogation network unit according to the routing decision. Embodiments of the present invention also disclose a system for routing control. In accordance with the embodiments of the present invention, across-domain routing control is thus realized in different network application environments according to different demands.

## Description

### Field of the Invention

The present invention relates to communication technologies, and particularly, to a method and a system for routing control.

### Background of the Invention

Since Release 5 (R5) of the 3^{rd} Generation Partnership Program (3GPP), the Universal Mobile Telecommunications System (UMTS) core network has been divided into a Circuit Switched (CS) domain, a Packet Switched (PS) domain and an IP Multimedia Subsystem (IMS) domain.

The CS domain, which includes a Mobile Switch Center (MSC Server/CS-MGW), a Gateway Mobile Switching Center (GMSC) and an InterWorking Function (IWF), etc., is used for providing subscribers with connections of circuit switched service. The Mobile Switching Center (MSC) is used for performing switching and signaling control functions in circuit switched services; the GMSC is an MSC used for mobile subscriber routing and addressing in a network, which may be integrated into the MSC or be an independent device; the IWF is closely connected to the MSC and used for interworking between a Public Land Mobile Network (PLMN) and an Integrated Service Data Network (ISDN), a Public Switched Telephone Network (PSTN) or a Public Data Network (PDN), and mainly for converting signaling; the specific functions of IWFs vary according to different services and networks.

The PS domain, which mainly includes a GPRS Support Node (GSN) and a Border Gateway (BG), is used for providing subscribers with connections of packet switched service. The GSN is used for transferring data packages for packet switched service subscribers, and the GSN includes a Serving GSN (SGSN) and a Gateway GSN (GGSN). The SGSN provides a connection between a core network and a wireless access system such as Base Station Subsystem (BSS) and Radio Network Subsystem (RNS), performs the functions of mobility management and session management in packet switched data services and manages the mobile and communication services of a Mobile Station (MS) in a mobile network; the GGSN acts as an interface between a mobile communication system and the other public data networks and in addition performs the function of querying location information; both the SGSN and the GGSN may provide billing information. The BG is used for interworking between two GPRS networks and ensuring the security of network interworking.

In addition, the common functional entities shared by both the CS domain and the PS domain include a Home Location Register (HLR)/ an Authentication Center (AuC). The HLR is used for storing the subscription data of subscribers and managing location information; the subscription data includes a Mobile Station International ISDN Number (MSISDN), an International Mobile Subscriber Identity (IMSI), a Packet Data Protocol Address (PDP ADDRESS), subscribed telephony services, supplementary services and so on; the location information includes a Mobile Station Roaming Number (MSRN), a Mobile Switching Center/Visitor Location Register (MSC/VLR) number, an SGSN number and a Gateway Mobile Location Center (GMLC) address; the AuC stores the authentication algorithms and encryption keys of subscribers. The common functional entities shared by both the CS domain and the PS domain also include a Visitor Location Register (VLR) for processing various data of the subscribers currently visited, an Equipment Identity Register (EIR) for storing the user equipment identities such as an International Mobile station Equipment Identity (IMEI), and a Short Message Service Gateway MSC (SMS-GMSC/SMS IMSC).

The IMS is a subsystem of the WCDMA network, which was added in the 3GPP R5 on the basis of the existing packet switched domain. The IMS employs the PS domain as a bearer channel for the transmission of its upper level control signaling and media data, adopts a Session Initiation Protocol (SIP) as the IMS service control protocol, and provides abundant multimedia services for subscribers by separating the service control from the bearer control, and by utilizing the characteristics of the SIP, i.e., simple, extensible and convenient for a media combination. The main functional entities of the IMS include: a Call Session Control Function (CSCF) for the control of subscriber registration and session control; an Application Server (AS) for various kinds of service logic control; a Home Subscriber Server (HSS) for the management of the subscriber's subscription data in a centralized manner; a Media Gateway Control Function (MGCF)/IMS Media Gateway (IM-MGW) for the interworking between the IMS and the CS domain. A subscriber may access the IMS through a proxy CSCF (P-CSCF) in the visited network and then a session control, a service triggering control and a service control interaction with an AS are performed by the serving CSCF (S-CSCF) of the home network.

The HSS in the IMS, whose functionalities include those of the HLR in the original CS/PS domain, is the superset of the HLR. Since 3GPP R5, there is usually no independent HLR in the CS/PS domain in the 3GPP specifications, but an HSS; however, in the practical networking projects, due to a factor of networking process and so on, the HSS of IMS and the HLR of CS/PS domain may be deployed as entities independent of each other. HSS and HLR are called by a joint name, subscriber subscription server in the following text, including both situations where the two are deployed separately and where they are integrated as one physical entity. When a CS domain subscriber subscription is explicitly mentioned, the subscriber subscription server refers to a CS/PS domain HLR, including either an independent entity deployed separately from an HSS of the IMS or a corresponding logical entity embedded in an HSS of the IMS; similarly, when an subscriber subscription server of the IMS is explicitly mentioned, the subscriber subscription server refers to an HSS of the IMS, including either an independent entity deployed separately from a CS/PS domain HLR or a corresponding logical entity integrated into a CS/PS domain HLR.

The IMS architecture defined by 3GPP solves all the crucial operability problems of multimedia service over IP, such as roaming charging, QoS and security, and therefore, the architecture and corresponding idea are recognized by the industry. Both 3GPP2 and TISPAN define the corresponding IP multimedia network architecture and service system according to a 3GPP model and with reference to the 3GPP model. Meanwhile, 3GPP has started researches on the Interworking of WLAN access with 3GPP system (I-WLAN), Fixed Broadband IMS access (FBI) and the all-IP network, which support multiple access technologies(AIPN), enabling a subscriber to access the IMS according to his subscription through access networks of different access technologies with a single multi-mode terminal or terminals of various types, so as to obtain unified multimedia services, including voice services which are provided in a VoIP manner and are identical with the voice services of the CS domains.

Furthermore, Mobile Number Portability (MNP) is an ability which enables the mobile subscriber to change the subscription network without changing his or her MSISDN number. The main idea of MNP is: establishing a Number Portability DataBase (NPDB) that can be shared by different networks to record the current subscription network of a subscriber, and thereby when each network needs to determine the terminating route of a subscriber, it queries the NPDB in an intelligent network mode or a signaling relay mode so as to determine the current subscription network of the subscriber.

The MNP actually solves the problem of alteration of a home network to which a subscriber subscribes and at a certain time the home network of the subscriber is always unique. However, now there is a different situation that the subscriber may subscribe to different network domains at the same time, e.g., subscriber A may subscribe to the CS domain and IMS at the same time so that subscriber A may access either one or both of the CS domain and IMS with terminals of different access technologies according to his or her own will; while the network just needs to ensure that, as long as subscriber A is reachable in either of the network domains, he or she can receive calls from other subscribers or other service requests of services which can be provided by various network domains, or when subscriber A can be reachable in both network domains, one network domain can be chosen according to the subscriber's preference or an operation policy. As the access status of the subscriber in different domains and the subscriber's preference or the operation policy are diversified, the exiting MNP is not completely suitable for such a flexible policy-controlled routing decision requirement for services which can be provided by various network domains.

### Summary of the Invention

Embodiments of the present invention provide a method and a system for routing control, so that a subscriber can receive a call from the other subscriber or receive other service requests of services which can be provided by various network domains via a domain chosen according to a predetermined policy in the case that the subscriber accesses both or any one of an IMS and a CS domain with terminals supporting different access technologies.

A method for routing control, applied to a communication system including a Circuit Switched (CS) domain and an IP Multimedia Subsystem (IMS), wherein a Routing Policy Decision-making Point (RPDP) connected to an interrogation network unit is set in the communication system and routing policy information is stored in the RPDP, the method includes:
a. initiating, by the interrogation network unit, a routing decision query to the RPDP upon receiving a service request;
b. making, by the RPDP, a routing decision according to the routing policy information stored in the RPDP and routing decision-making related information, and returning the routing decision made by the RPDP to the interrogation network unit; and
c. performing, by the interrogation network unit, subsequent routing control according to the routing decision received from the RPDP.

The routing decision-making related information in step b includes at least one piece of information selected from the group consisting of:
registration status information of a subscriber to which the service request points in each of the CS domain and the IMS, relative service subscription information of the subscriber in each of the CS domain and the IMS, and other terminating side routing decision-making assistant information.

The routing decision-making related information in step b is obtained by the RPDP by querying a subscriber subscription server.

The RPDP queries the subscriber subscription server for the routing decision-making related information through a Mobile Application Part (MAP) protocol, and the routing decision-making related information is obtained through a MAP-ANY-TIME-INTERROGATION (ATI) operation or through a MAP-ANY-TIME-SUBSCRIPTION-INTERROGATION operation; or
the subscriber subscription server communicates with the RPDP through a Diameter protocol, and the routing decision-making related information is obtained through a Diameter User-Data-Request / User-Data-Answer (UDR/UDA) operation, or through a Diameter User-Authorization-Request / User-Authorization-Answer (UAR/UAA) operation, or through a Diameter Location-Info-Request /Location-Info-Answer (LIR/LIA) operation; or
the subscriber subscription server communicates with the RPDP through internal message interaction between the internal modules of the same physical entity or through a shared data section method to query for the routing decision-making related information.

The RPDP queries a Home Location Register (HLR) in CS domain for the routing decision related information through a MAP ATI operation; the HLR initiates a MAP-PROVIDE-SUBSCRIBER-INFO (PSI) operation to the visited MSC (VMSC) which serves the subscriber currently upon the receipt of a MAP ATI request, and returns an MAP ATI response to the RPDP according to the subscriber information carried by a MAP PSI response from the VMSC.

The VMSC which serves the subscriber currently initiates paging a subscriber according to an instruction in the MAP PSI request from the HLR and/or local configuration upon the receipt of the MAP PSI request from the HLR, and returns the subscriber information to the HLR according to the paging result.

The routing decision-making related information in step b is stored in the RPDP; and
the subscriber subscription server updates the routing decision-making related information stored in the RPDP through an interface between the subscriber subscription server and the RPDP.

The subscriber subscription server communicates with the RPDP through a MAP protocol and the routing decision-making related information is updated through a MAP_UPDATE_LOCATION operation or a MAP-INSERT-SUBSCRIBER-DATA /MAP-DELETE-SUBSCRIBER-DATA operation; or
the subscriber subscription server communicates with the RPDP through a Diameter protocol, and the routing decision-making related information is updated through a Diameter Server-Assignment-Request / Server-Assignment-Answer (SAR/SAA) operation, or through a Diameter Push-Profile-Request /Push-Profile-Answer (PPR/PPA) operation, or through a Diameter Subscribe-Notifications-Request / Subscribe-Notifications-Answer (SNR/SNA) operation and Push-Notification-Request / Push-Notification-Answer (PNR/PNA) operation; or
the subscriber subscription server communicates with the RPDP through internal message interaction between the internal modules of the same physical entity or through a shared data section method to update the routing decision-making related information.

The method further includes:
configuring, by an operator, the routing policy information through an interface between an Operation Support System (OSS) and the RPDP, and/or
configuring, by a subscriber, the routing policy information through a Ut interface between a UE and the RPDP; wherein:
   the configuring includes: adding, and/or deleting, and/or modifying, and and/or querying, and/or storing.

The routing policy information is configured by an operator through an interface between an OSS and the RPDP, and the method further includes:
before the routing policy information is configured,
authenticating, by the RPDP, the identity of the operator, and allowing the operator to configure the routing policy information if the authentication passes;
   and/or
the routing policy information is configured by a subscriber through an Ut interface between an RPDP and the UE, and the method further includes:
before the routing policy information is configured,
authenticating, by the RPDP, the identity of the subscriber; and allowing the subscriber to configure the routing policy information if the authentication passes.

The method further includes:
configuring, by the operator or the subscriber, forwarding data when Not Reachable and when No Reply at the Visited Mobile Switch Center (VMSC) serving the subscriber currently through the subscriber subscription server, when the routing policy information includes routing to the IMS in the case that the subscriber is unreachable in the CS domain; wherein
the forwarding data contains a forward-to number pointing to a CS/IMS interworking gateway Media Gateway Control Function (MGCF).

The interrogation network unit includes a Home Location Register (HLR) and a Gateway Mobile Switching Center (GMSC);
the service request is a call establishment request of a CS domain incoming call, hereafter referring to CS incoming call establishment request; and
step a includes:
a11. sending, by the GMSC, a routing query request to the HLR upon receiving the CS incoming call establishment request;
a12. upon receiving the routing query request,
if a direct interrogation manner is adopted,
   sending, by the HLR, the routing decision query request to the RPDP, and then cycle to step b;
if a GMSC interrogation manner is adopted,
   returning, by the HLR, to the GMSC a routing query response containing the

Terminating-CAMEL Subscription Information (T-CSI) of a called subscriber, and
triggering, by the GMSC, a terminating Customized Applications for Mobile network Enhanced Logic (CAMEL) service according to the T-CSI upon receiving the routing query response, and thus sending the routing decision query request to the RPDP acting as a gsmSCF, and then cycle to step b.

The method further includes: after the HLR has received the routing query request in step a12, before the direct interrogation manner or the GMSC interrogation manner is adopted, determining, by the HLR, the interrogation manner; wherein:
the interrogation manner is determined according to pre-configured information, or according to at least one factors selected from the group consisting of: CAMEL support capability of the GMSC contained in the routing query request sent by the GMSC, the status of incoming call barring service of a subscriber recorded in the HLR, the status of operator determined incoming call barring service recorded in the HLR, and local configuration of the HLR.

The direct interrogation manner is adopted in step a12, and if the routing decision made by the RPDP is to deliver the CS domain incoming call via the IMS domain, the routing decision further includes an E.164 number pointing to the CS/IMS interworking gateway MGCF; and
step c includes:
c11. upon receiving the routing decision returned from the RPDP, if the routing decision made by the RPDP is to deliver the CS domain incoming call via the CS domain, continue with step c12; if the routing decision made by the RPDP is to deliver the CS domain incoming call via the IMS, continue with step c13;
c12. sending, by the HLR, a MAP_PROVIDE_ROAMING_NUMBER (PRN) request to the VMSC serving the called subscriber currently, and returning, by the HLR, a Mobile Station Roaming Number (MSRN), returned by the VMSC in a PRN response, to the GMSC in the routing query response; and routing, by the GMSC, the CS domain incoming call to the VMSC serving the called subscriber currently according to the MSRN; and terminate the procedure;
c13. returning, by the HLR, the E.164 number pointing to a CS/IMS interworking gateway MGCF, provided by the RPDP in the routing decision, to the GMSC in the routing query response,
routing, by the GMSC, the CS domain incoming call to the MGCF according to the E.164 number, and
delivering, by the MGCF, the CS domain incoming call to the IMS; and terminate the procedure.

The GMSC interrogation manner is adopted in step a12; if the routing decision is to deliver the CS domain incoming call via the IMS, the routing policy information in step b further includes an E.164 number pointing to the CS/IMS interworking gateway MGCF; and
step c includes:
c21. upon receiving the routing decision by the GMSC, if the routing decision is to deliver the CS domain incoming call via the CS domain, continue with step c22, if the routing decision is to deliver the CS domain incoming call via the IMS, continue with step c23;
c22. initiating, by the GMSC, to the HLR a routing query request with a suppress T-CSI indication,
sending, by the HLR, a PRN request to the VMSC serving the called subscriber currently upon receiving the routing query request,
returning, by the HLR, the MSRN, returned by the VMSC in a PRN response, to the GMSC in the routing query response,
routing, by the GMSC, the call to the VMSC serving the called subscriber according to the MSRN; and terminate the procedure;
c23. routing, by the GMSC, the CS domain incoming call to the MGCF according to the .164 number provided by the RPDP in the routing decision and
pointing to the CS/IMS interworking gateway MGCF upon receiving the routing decision; and
delivering, by the MGCF, the CS domain incoming call to the IMS; and terminate the procedure.

The interrogation network unit includes an HLR and an SMS-GMSC, and the service request is a terminating short message; and
step a includes:
a21. sending, by the SMS-GMSC, a short message routing query request to the HLR upon receiving the terminating short message; and
a22. sending, by the HLR, a routing decision query request directly to the RPDP upon receiving the short message routing query request; and
the routing decision made by the RPDP in step b is to deliver the terminating short message via the CS domain or IMS; if the routing decision made by the RPDP is to deliver the terminating short message via the IMS, the routing decision further includes: address information of a CS/IMS short message interworking gateway;
step c includes:
c31. upon receiving the routing decision from the RPDP by the HLR, if the routing decision made by the RPDP is to deliver the terminating short message via the CS domain, continue with step c32; if the routing decision made by the RPDP is to deliver the terminating short message via the IMS, continue with step c33;
c32. returning, by the HLR, address information of a VMSC serving the called subscriber currently to the SMS-GMSC in a short message routing query response, and
routing, by the SMS-GMSC, the terminating short message to the VMSC serving the called subscriber currently; and terminate the procedure;
c33. returning, by the HLR, address information of a CS/IMS short message interworking gateway, returned by RPDP in the routing decision, to the SMS-GMSC in the short message routing query response,
routing, by the SMS-GMSC, the terminating short message to the CS/IMS short message interworking gateway, and
performing, by the CS/IMS short message interworking gateway, interworking and short message routing in the IMS.

The interrogation network unit includes an Home Subscriber Server (HSS) and a Call Session Control Function (CSCF), the CSCF includes an Interrogating-CSCF (I-CSCF) and a Serving-CSCF (S-CSCF), and the service request is a session establishment request of an IMS incoming session, hereafter referring to IMS incoming session establishment request, and
step a includes:
a31. sending, by the I-CSCF, a routing query request to the HSS upon receiving the IMS incoming session establishment request;
a32. upon receiving the routing query request,
if a direct interrogation manner is adopted,
   sending, by the HSS, a routing decision query request to the RPDP, and continue with step b;
if an S-CSCF interrogation manner is adopted, continue with step a33;
a33. returning, by the HSS, to the I-CSCF a routing query response containing the domain name of the S-CSCF allocated for the called subscriber, or the S-CSCF capability information needed for the I-CSCF for performing the S-CSCF assignment,
a34. forwarding, by the I-CSCF, upon receiving the routing query response, the IMS service request to the S-CSCF determined according to the domain name of the S-CSCF allocated for the called subscriber, or the S-CSCF capability information needed for the I-CSCF for performing the S-CSCF assignment returned by the HSS, and
performing, by the S-CSCF, IMS service triggering according to IMS service triggering data in subscriber's subscription data, and forwarding the IMS service request as the routing decision query request to the RPDP acting as an Application Server (AS), and continue with step b.

The method further includes:
in step 32, after the HSS has received the routing query request, and before the direct interrogation manner or the S-CSCF interrogation manner is adopted, determining, by the HSS, the interrogation manner; and
the interrogation manner is determined by according to local configuration of the HSS; or
when the routing query request in step a31 further includes the service attributes and related information contained in the routing query request extended by the I-CSCF, determining, by the HSS, the interrogation manner in step 32 according to at least one of local configuration of the HSS and service attributes contained in the extended routing query request by the I-CSCF.

The direction interrogation manner is adopted in step a32; and if the routing decision is to deliver the IMS incoming session via the CS domain, the routing decision information further includes: a domain name of the CS/IMS interworking gateway MGCF; and
step c includes:
c41. upon receiving the routing decision by the HSS,
if the routing decision is to deliver the IMS incoming session via the CS domain, continue with step c42; if the routing decision is to deliver the IMS incoming session via the IMS, continue with c43;
c42. returning, by the HSS, a domain name of the CS/IMS interworking gateway MGCF, returned to the HSS by the RPDP, as the S-CSCF domain name, to the I-CSCF in a routing query response,
forwarding, by the I-CSCF, the IMS service request to the MGCF regarded as the S-CSCF, and
delivering, by the MGCF, the IMS incoming session to the CS domain; and terminate the procedure;
c43. returning, by the HSS, the domain name of the S-CSCF allocated for the called subscriber, or the S-CSCF capability information needed for the I-CSCF for performing the S-CSCF assignment returned by the HSS to the I-CSCF in a routing query response,
forwarding, by the I-CSCF, the IMS service request to the S-CSCF determined according to the domain name of the S-CSCF allocated for the called subscriber, or the S-CSCF capability information needed for the I-CSCF for performing the S-CSCF assignment returned by the HSS, and
performing, by the S-CSCF, IMS service triggering and subsequent IMS routing control; and terminate the procedure.

The direct interrogation manner is adopted in step 32, the routing decision in step b is to deliver the IMS incoming session via the CS domain, and the routing decision includes an E.164 number pointing to a CS/IMS interworking gateway MGCF; and
step c includes:
c51. upon receiving the routing decision,
inserting, by the HSS through a Push-Notification-Request operation, the E.164 number pointing to the CS/IMS interworking gateway MGCF and returned by the RPDP in the routing decision, into an AS which will be triggered in subsequent service process;
returning, in the routing query response, by the HSS, the domain name of the S-CSCF allocated for the called subscriber, or the S-CSCF capability information needed for the I-CSCF for performing the S-CSCF assignment returned by the HSS to the I-CSCF;
c52. forwarding, by the I-CSCF, the IMS incoming session establishment request to the S-CSCF determined according to the domain name of the S-CSCF allocated for the called subscriber, or the S-CSCF capability information needed for the I-CSCF for performing the S-CSCF assignment returned by the HSS;
c53. performing, by the S-CSCF, the IMS service triggering, and under the control of the AS into which the E.164 number is inserted, routing the IMS incoming session establishment request, to the MGCF via a BGCF, and
performing, by the MGCF, subsequent interworking and CS domain routing control; and terminate the procedure.

The S-CSCF interrogation manner is adopted in step a32 and the routing decision made by the RPDP in step b is to deliver the IMS incoming session via the CS domain;
the routing decision includes: an E.164 number pointing to a CS/IMS interworking gateway MGCF;
the process of returning the routing decision to the interrogation network unit includes:
modifying, by the RPDP, the Request-URI in the IMS incoming session establishment request received as the routing decision query request from the S-CSCF into the E.164 number pointing to the CS/IMS interworking gateway MGCF, and
sending the modified IMS incoming session establishment request to the S-CSCF; and
step c includes:
routing, by the S-CSCF, the IMS incoming session establishment request to the MGCF via a BGCF according to the E.164 number pointing to the CS/IMS interworking gateway MGCF in the Request-URI in the modified IMS incoming session establishment request returned by the RPDP acting as the AS, and
performing, by the MGCF, interworking and routing in the CS domain.

The S-CSCF interrogation manner is adopted in step a32, and the routing decision made by the RPDP is to deliver the IMS incoming session via the IMS in step b;
the process of returning the routing decision to the interrogation network unit includes:
sending, by the RPDP, the IMS incoming session establishment request to the S-CSCF without modifying the Request-URI in the IMS incoming session establishment request received as the routing decision query request from the S-CSCF; and
step c includes:
performing, by the S-CSCF, subsequent IMS service triggering according to the Request-URI unmodified in the IMS incoming session establishment request returned by the RPDP acting as the AS, and performing routing in the IMS.

The interrogation network unit includes an HLR and an SMS-GMSC, and the service request is a terminating short message; and
step a includes:
a41. sending, by the SMS-GMSC, a short message routing query request to the HLR upon receiving the terminating short message; and
a42. intercepting, by the RPDP, the short message routing query request, and treating the short message routing query request as a routing decision query request; and continue with step b.

The routing decision made by the RPDP is to deliver the terminating short message via the IMS in step b;
step b includes:
providing, by the RPDP, the routing decision by returning a short message routing query response to the SMS-GMSC directly, wherein the routing decision includes address information of a CS/IMS short message interworking gateway; and
step c includes:
routing, by the SMS-GMSC, the terminating short message to the CS/IMS short message interworking gateway according to the short message routing query response; and
performing, by the CS/IMS short message interworking gateway, subsequent interworking and short message routing in the IMS.

The routing decision made by the RPDP is to deliver the terminating short message via the CS domain in step b;
the process of returning the routing decision to the interrogation network unit in step b includes:
forwarding, by the RPDP, the short message routing query request from the SMS-GMSC to the HLR; and
step c includes:
returning, by the HLR, a short message routing query response containing the address information of the VMSC serving the called subscriber currently to the RPDP;
forwarding, by the RPDP, the short message routing query response to the SMS-GMSC; and
routing, by the SMS-GMSC, the terminating short message to the VMSC serving the called subscriber currently according to the short message routing query response.

The interrogation network unit includes an HLR and a GMSC, and the service request is a call establishment request of a CS domain incoming call, hereafter referring to CS incoming call establishment request;
step a includes:
c 51. sending, by the GMSC, a routing query request to the HLR upon receiving the CS incoming call establishment request; and
c52. intercepting, by the RPDP, the routing query request, and treating the routing query request as the routing decision query request, and continue with step b.

The routing decision made by the RPDP is to deliver the CS domain incoming call via the CS domain in step b;
the process of returning the routing decision to the interrogation network unit in step b includes:
forwarding, by the RPDP, the routing query request from the GMSC to the HLR; and
step c includes:
c61. communicating, by the HLR, with the VMSC serving the called subscriber currently to obtain an MSRN, and sending the MSRN contained in a routing query response to the RPDP;
c62. forwarding, by the RPDP, the routing query response containing the MSRN to the GMSC, and
routing, by the GMSC, the CS domain incoming call to the VMSC serving the called subscriber currently according to the MSRN.

The routing decision made by the RPDP in step b is to deliver the CS domain incoming call via the CS domain, and for the CS domain incoming call in the CS domain, the subscriber has at least one incoming call barring service selected from the group consisting of: an activated incoming call barring service and an operator determined incoming call barring service;
the process of returning the routing decision to the interrogation network unit in step b includes:
forwarding, by the RPDP, the routing query request from the GMSC to the HLR; and
step c includes:
c71. sending, by the HLR, a routing query rejection response containing a rejection reason to the RPDP according to subscriber's subscription;
c72. according to the rejection reason contained in the routing query rejection response,
making, by the RPDP, the routing decision again according to the routing policy information and the routing decision-making related information stored in the CS/IMS domain; and
if the routing decision made by the RPDP is to deliver the CS domain incoming call via the IMS,
sending, by the RPDP, to the GMSC, a routing query response containing an E.164 number pointing to a CS/IMS interworking gateway MGCF;
if the routing decision made by the RPDP is still to deliver the CS domain incoming call via the CS domain,
forwarding, by the RPDP, the routing query rejection response containing the rejection reason to the GMSC, and
rejecting, by the GMSC, the CS incoming call establishment request according to the routing query rejection response.

When the routing decision made by the RPDP is to deliver the CS domain incoming call via the IMS in step b, the process of returning the routing decision to the interrogation network unit in step b includes:
sending, by the RPDP, the routing query response directly to the GMSC and returning an E.164 number pointing to a CS/IMS interworking gateway MGCF in the routing query response; and
step c includes:
routing, by the GMSC, the CS domain incoming call to the MGCF according to the E.164 number upon receiving the routing query response, and performing, by the MGCF, subsequent interworking and routing in the IMS.

When the interrogation network unit includes an HLR and more than one GMSC and the service request is a call establishment request of a CS domain incoming call, hereafter referring to CS incoming call establishment request, and step a includes:
a60. sending, by a current GMSC, a routing query request to the HLR upon receiving the CS incoming call establishment request;
a61. intercepting, by the RPDP, the routing query request which is sent by the current GMSC to the HLR, checking whether the current GMSC fulfills an RPDP interrogation manner requirement; and
if the current GMSC fulfills the RPDP interrogation manner requirement, continue with step a62;
if the current GMSC does not fulfill the RPDP interrogation manner requirement,,
returning, by the RPDP, the routing information of a second GMSC which fulfills the RPDP interrogation manner requirement to the current GMSC, routing, by the current GMSC, the CS domain incoming call to the second GMSC, sending, by the second GMSC acting as the current GMSC, the routing query request to the HLR, and repeating step a61;
a62. obtaining, by the RPDP, a T-CSI from the HLR, and returning the T-CSI to the current GMSC, performing, by the current GMSC, the terminating service triggering according to the T-CSI, and thus sending the routing decision query request to the RPDP; and continue with step b.

After the routing query request sent by the current GMSC to the HLR is intercepted in step a61 and before checking whether the GMSC fulfills the RPDP interrogation manner requirement, the method further includes:
a611. forwarding, by the RPDP, the routing query request to the HLR directly, or communicating, by the RPDP, with the HLR to check whether the subscriber has subscribed to the terminating CAMEL service, and/or the subscriber has an activated incoming call barring service, and/or the subscriber has an activated operator determined incoming call barring service for the CS domain incoming call in the CS domain;
if the checking result is selected from the group consisting of that: the subscriber has not subscribed to the terminating CAMEL service, the subscriber has an activated incoming call barring service, and the subscriber has an activated operator determined incoming call barring service for the CS domain incoming call in the CS domain, making, by the RPDP, the routing decision directly;
if the routing decision made by the RPDP is to deliver the CS domain incoming call via the CS domain, forwarding, by the RPDP, the routing query request to the HLR; otherwise, continuing, by the RPDP, the process of checking whether the GMSC fulfills the RPDP interrogation manner requirement, and performing different handling according to the checking result;
a622. if a rejection response containing a rejection reason returned by the HLR is received by the RPDP after forwarding the routing query request,
making, by the RPDP, the routing decision again according to the routing policy information and the routing decision-making related information stored in the CS/IMS domain according to the rejection reason contained in the rejection response;
if the routing decision made by the RPDP is to deliver the CS domain incoming call via the IMS,
sending a routing query response to the GMSC and returning an E.164 number pointing to a CS/IMS interworking gateway MGCF in the routing query response to the GMSC; and
if the routing decision made by the RPDP is still deliver the CS domain incoming call via the CS domain,
forwarding, by the RPDP, the routing query rejection response to the GMSC, and
rejecting, by the GMSC, the CS incoming call establishment request according to the rejection response; and terminate the procedure.

The routing decision made by the RPDP is to deliver the CS domain incoming call via the IMS or CS domain in step b;
if the routing decision made by the RPDP is to deliver the CS domain incoming call via the IMS, the routing decision includes an E.164 number pointing to a CS/IMS interworking gateway MGCF, and step c includes:
   routing, by the current GMSC, the CS domain incoming call to the MGCF according to the E.164 number included in the routing decision, and performing, by the MGCF, interworking and routing in the IMS; and
   if the routing decision made by the RPDP is to deliver the CS domain incoming call via the CS domain, step c includes:
c81. initiating, by the current GMSC, to the HLR the routing query request with a suppress T-CSI indication, wherein the routing query request again passes through the RPDP acting as a Signaling Transfer Point (STP), and transmitting transparently, by the RPDP, the routing query request to the HLR according to at least one of: the signaling message type of the routing query request and the key information in the routing query request; and
c82. sending, by the HLR, a PRN request to the VMSC serving the called subscriber, returning, by the HLR, the MSRN, returned by the VMSC in a PRN response, in a routing query response to the RPDP acting as the STP, transmitting transparently, by the RPDP, the routing query response to the current GMSC according to at least one of: the message type of the routing query response and the key information in the routing query response, and routing, by the current GMSC, the CS domain incoming call to the VMSC serving the called subscriber.

The routing information of the second GMSC that fulfills the RPDP interrogation manner requirement in step a61 is chosen at random from the route information saved in the RPDP of the GMSCs that fulfill the RPDP interrogation manner requirement, or is chosen according to predetermined priority level.

The process of checking whether the GMSC fulfills the RPDP interrogation manner requirement in step a61 includes:
checking whether the GMSC is capable of supporting CAMEL according to a special information element indication in the routing query request sent by the GMSC; or
checking whether the Origination Signaling Point Code contained in the routing query request sent by the GMSC is coincident with the Signaling Point Code configured in the RPDP.

The interrogation network unit is a network unit in the CS domain and the service request is a call establishment request of a CS domain incoming call, hereafter referring to CS incoming call establishment request; when the routing decision made by the RPDP is to deliver the CS domain incoming call via the IMS in step b, the routing decision includes: an E.164 number pointing to a CS/IMS interworking gateway MGCF, and the E.164 number is composed as a virtual Mobile Station Roaming Number (MSRN) according to a roaming number composition scheme based on a local configured MGCF number; and
step c includes:
c91. forwarding, by the GMSC in the interrogation network unit of the CS domain, the CS incoming call establishment request to the CS/IMS interworking gateway MGCF according to the virtual MSRN; and
c92. restoring, by the MGCF, subscriber's Mobile Station International ISDN Number (MSISDN) according to the virtual MSRN, performing CS/IMS interworking of the CS domain incoming call to establish a CS-IMS interworking call, and routing the CS domain incoming call to the IMS.

The process of returning the routing decision to the interrogation network unit in step b includes:
initiating, by the RPDP, a PRN operation to the MGCF, obtaining the virtual MSRN which is allocated by the MGCF, including the virtual MSRN in the routing decision to be returned to the interrogation network unit; and
recording, by the MGCF, the relation between the allocated virtual MSRN and the MSISDN of the subscriber; and
step 92 includes:
restoring, by the MGCF, the MSISDN according to the virtual MSRN in the incoming call signaling and the recorded relation between the allocated virtual MSRN and the MSISDN of the subscriber.

The process of returning the routing decision to the interrogation network unit in step b includes:
generating, by the RPDP, the virtual MSRN according to the MGCF information and the MSISDN information of the subscriber, returning the routing decision carrying the virtual MSRN to the interrogation network unit; and
step c92 includes:
restoring, by the MGCF, the MSISDN according to the virtual MSRN in the CS incoming call establishment request and an agreed virtual MSRN composition scheme.

Step b further includes:
storing, by the RPDP, the routing decision made by the RPDP of the CS domain incoming call, and
the process of routing the CS domain incoming call to the IMS in step c92 includes:
   c9211. sending, by the interrogation network unit of the IMS, a routing decision query request to the RPDP; and
   c9212. returning, by the RPDP, upon receiving the routing decision query request, the routing decision according to the routing decision of the CS domain incoming call stored in step b.

The process of routing the CS domain incoming call to the IMS in step c92 includes:
c9221. adding, by the MGCF, the indication of suppress routing decision query in the IMS incoming session establishment request obtained by the CS/IMS interworking, and
c9222. directly performing, by the interrogation network unit of the IMS, the standard CS-IMS interworking session establishment procedure without querying the RPDP according to the indication of suppress routing decision query.

The interrogation network unit is a network unit in the IMS and the service request is a session establishment request of an IMS incoming session, hereafter referring to IMS incoming session establishment request, the routing decision made by the RPDP is to deliver the IMS incoming session via the CS domain in step b, and the routing decision includes an MSRN of the called subscriber in the CS domain; and
the process of returning the routing decision to the interrogation network unit in step b includes:
sending, by the RPDP, a routing query to the HLR, sending, by the HLR, a PRN request to the MSC/VLR serving the subscriber currently, returning, by the HLR, to the RPDP a routing query response containing the MSRN returned by the MSC/VLR in a PRN response, and returning, by the RPDP, the routing decision containing the MSRN to the interrogation network unit.

Step c includes:
c1001. returning, by the HSS contained in the interrogation network unit of the IMS, the routing query response containing the MSRN obtained from the RPDP in the extended signaling to the I-CSCF upon receiving the routing decision;
c1002. forwarding, by the I-CSCF, the IMS incoming session establishment request to the BGCF upon receiving the routing query response;
c1003. sending, after having chosen an MGCF by the BGCF, the IMS incoming session establishment request to the MGCF;
c1004. performing, by the MGCF receiving the IMS incoming session establishment request, IMS/CS interworking of the IMS incoming session upon receiving the IMS incoming session establishment request, and forwarding the IMS incoming session to the CS domain,
determining, by the CS domain, that the MSRN belongs to MSRN segment, and routing the IMS incoming session directly to the VMSC serving the subscriber currently; and
c1005. paging and connecting, by the VMSC, the called subscriber, and continuing to establish an IMS-CS interworking call.

Step c includes:
c1101. returning, by the HSS contained in the interrogation network unit of the IMS, upon receiving the routing decision, the routing query response to the I-CSCF; wherein the routing information sent to the I-CSCF carries the S-CSCF domain name allocated for the called subscriber by the IMS domain in the case that the called subscriber registers to the IMS domain, or carries the S-CSCF domain name allocated for the called subscriber by the IMS domain in the case that the called subscriber does not register to the IMS domain, or carries the S-CSCF capability requirement information for allocating the S-CSCF by the I-CSCF;
c1102. setting, by the HSS, through an Sh interface, data for forwarding the IMS incoming session to the MSRN obtained form the RPDP, at an AS which will be triggered to control the IMS incoming session according to subscriber's subscription data;
c1103. forwarding, by the I-CSCF, the IMS incoming session establishment request to the S-CSCF determined according to the received routing query response; triggering, by the S-CSCF, the IMS incoming session to the AS at which the data has been set for forwarding the IMS incoming session to the MSRN;
c1104. modifying, by the AS, the session destination address of the IMS incoming session into the MSRN of the called subscriber in the CS domain according to the data set by the HSS, forwarding, by the S-CSCF, the IMS incoming session to the BGCF, according to the analysis of the session destination address of the IMS incoming session modified by the AS;
c1105. sending, by the BGCF, the IMS incoming session establishment request to an MGCF after having chosen the MGCF;
c1106. performing, by the MGCF which receives the IMS incoming session establishment request, IMS/CS interworking of the IMS incoming session, and forwarding the IMS incoming session to the CS domain, determining, by the CS domain, that the MSRN belongs to MSRN segment, and routing the IMS incoming session directly to the VMSC serving the subscriber currently; and
c1107. paging and connecting, by the VMSC, the called subscriber and continuing to establish an IMS-CS interworking call.

Step c includes:
c1201. forwarding, by the S-CSCF contained in the interrogation network unit of the IMS, the IMS incoming session to the BGCF according to the MSRN, upon receiving the routing decision;
c1202. sending, upon having chosen an MGCF by the BGCF, an IMS incoming session establishment request to the MGCF;
c1203. performing, by the MGCF which receives the IMS incoming session establishment request, IMS/CS interworking of the IMS incoming session, and forwarding the IMS incoming session to the CS domain; determining, by the CS domain, that the MSRN belongs to MSRN segment, and routing the IMS incoming session directly to the VMSC serving the subscriber currently; and
c1204. paging and connecting, by the VMSC, the called subscriber and continuing to establish an IMS-CS interworking call.

The interrogation network unit is a network unit in the IMS and the service request is the IMS incoming session establishment request of an IMS incoming session, and when the routing decision made by the RPDP is to deliver the IMS incoming session via the CS domain in step b, the routing decision includes MGCF information selected from the group consisting of: the number of the MGCF, the serial number of the MGCF and the domain name of the MGCF; and
step c includes:
c1301. returning, by the HSS contained in the interrogation network unit of the IMS, a routing information containing the MGCF domain name obtained from the MGCF information to the I-CSCF upon receiving the routing decision;
c1302. forwarding, by the I-CSCF, the IMS incoming session establishment request to the MGCF upon receiving the routing information;
c1303. performing, by the MGCF, IMS/CS interworking of the IMS incoming session upon receiving the IMS incoming session establishment request and initiating a CS routing query directly to the HLR according to the subscriber number segment and local configuration;
c1304. initiating, upon receiving the CS routing query, by the HLR, a PRN operation to the VMSC serving the subscriber currently according to the originating signaling point of the CS routing query and local configuration without querying for routing decision, and returning the MSRN obtained from the PRN response to the MGCF;
c1305. routing, by the MGCF, according to MSRN analysis, the IMS incoming session to the VMSC serving the subscriber currently; and
paging and connecting, by the VMSC, the called subscriber, and continuing to establish an IMS-CS interworking call.

The method further includes:
after the MGCF initiates the CS routing query directly to the HLR,
returning, by the HLR, subscriber's T-CSI according to subscriber subscription; and
performing, by the MGCF, an intelligent service triggering of the subscriber at the terminating side in the CS domain according to the subscriber's T-CSI returned by the HLR; and
after a SCP indicates continuing the call connection,
initiating, by the MGCF, to the HLR a CS routing query with suppresses T-CSI indication; and continue step c1304.

The method further includes:
after routing the call in the CS domain to the VMSC serving the subscriber currently in step c,
triggering, at the terminating office through VT-CSI subscription, the intelligent service of the subscriber at the terminating side in the CS domain.

A system for routing control, applied to a communication system including a Circuit Switched (CS) domain and an IP Multimedia Subsystem (IMS), includes an interrogation network unit and a Routing Policy Decision-making Point (RPDP), wherein:
the interrogation network unit is connected to the RPDP, and is capable of receiving a service request destined to a subscriber in the communication network, querying the RPDP for a routing decision, and performing the subsequent routing control for the service request according to the routing decision returned by the RPDP; and
the RPDP is capable of storing routing policy information, making the routing decision according to the routing policy information and routing decision-making related information, and returning the routing decision to the interrogation network unit.

The RPDP includes an interface with an Operation Support System (OSS); the interface is capable of receiving operation signals initiated by an operator to perform at least one operation of the routing policy information stored in the RPDP; the at least one operation is selected from the group consisting of: adding, deleting, querying, storing and modifying.

The RPDP includes an interface with a subscriber's terminal; the interface is capable of receiving operation signals initiated by the subscriber through the subscriber's terminal to perform at least one operation of the routing policy information stored in the RPDP; the at least one operation is selected from the group consisting of: adding, deleting, querying, storing and modifying.

The interrogation network unit includes a subscriber subscription server and a routing control entity; and
the subscriber subscription server is selected from the group consisting of: a Home Location Register (HLR) of the CS domain, a Home Subscriber Server (HSS) of the IMS, and a physical entity composed of both the HLR and the HSS, and is capable of storing and providing the routing decision-making related information for the RPDP.

The RPDP is selected from the group consisting of: an independent physical entity, a logical entity embedded in the HLR of the CS domain, a logical entity embedded in the HSS of the IMS, and a logical entity embedded in a physical entity composed of both the HLR and the HSS; and
the subscriber subscription server is capable of performing signaling interaction with the RPRP through at least one protocol selected from the group consisting of a Mobile Application Part (MAP) protocol and a Diameter protocol if the RPDP is an independent entity; and
the RPDP is capable of communicating with the subscriber subscription server through an internal message interaction between the internal modules of the same physical entity or through a shared data section method if the RPDP is embedded in the subscriber subscription server.

The service request destined to the subscriber is a session/call establishment request or a terminating short message from the originating side, and the routing control entity is a GMSC, or a CSCF, or an SMS-GMSC; and
the subscriber subscription server is capable of directly querying the RPDP for the routing decision upon receiving a routing query request from the routing control entity, and providing the routing control entity with routing information determined according to the routing decision; or subscriber subscription server is capable of returning routing query result information to the routing control entity according to the subscriber's subscription data and the current status/location information of the subscriber upon receiving a routing query request from the routing control entity; and
the routing control entity is capable of sending the routing query request to the subscriber subscription server upon receiving the service request destined to the subscriber, and performing routing control according to the routing decision upon receiving the routing information determined according to the routing decision returned by the subscriber subscription server; or the routing control entity is capable of sending the routing decision query request to the RPDP upon receiving the routing query result information returned by the subscriber subscription server, and performing routing control according to the routing decision returned by the RPDP.

The subscriber subscription server is further capable of determining whether to adopt the manner in which the subscriber subscription server directly queries the RPDP for the routing decision upon receiving the routing query request from the routing control entity and provides the routing control entity with the routing information which is determined according to the routing decision, or to adopt the manner in which the subscriber subscription server returns the routing query result information to the routing control entity according to the subscriber's subscription data and the current status/location information of the subscriber;
wherein the interrogation manner is determined according to at least one factor selected from the group consisting of: CAMEL support capability of the routing control entity contained in the routing query request sent by the routing control entity, the status of incoming call barring service of the subscriber recorded in the subscriber subscription server, the status of operator determined incoming call barring service recorded in the subscriber subscription server, and local configuration of the subscriber subscription server.

The routing control entity is further capable of sending to the subscriber subscription server the routing query request expanded to contain the service attribute of the service request and related information, according to which the subscriber subscription server may choose a routing decision interrogation manner.

The routing control entity is a GMSC which communicates with the RPDP through a CAMEL Application Part (CAP) protocol interface and the service request of the subscriber is a CS incoming call establishment request; and
the GMSC is further capable of triggering a terminating Customized Applications for Mobile network Enhanced Logic (CAMEL) service according to CAMEL subscription information provided by the subscriber subscription server in the routing query result information, and thus sending the routing decision query request to the RPDP, and performing routing control according to the routing decision made by the RPDP.

The routing control entity is a Call Session Control Function (CSCF) and the service request of the subscriber is an IMS incoming session establishment request;
the CSCF further includes an Interrogating-CSCF (I-CSCF) and a Serving-CSCF (S-CSCF);
the I-CSCF is further capable of determining the S-CSCF according to a domain name of the S-CSCF allocated for the called subscriber, or the S-CSCF capability information needed for the I-CSCF for performing the S-CSCF assignment returned by the HSS, and routing the IMS incoming session establishment request to the S-CSCF; and
the S-CSCF is further capable of communicating with the RPDP through a Session Initiation Protocol (SIP) protocol interface, triggering an IMS terminating service according to the IMS service triggering data in the subscriber's subscription data, and thus sending the routing decision query request to the RPDP, and performing routing control according to the routing decision made by the RPDP.

The service request destined to the subscriber is a call establishment request or a terminating short message from the originating side of short message; the routing control entity is a GMSC or an SMS-GMSC; the routing control entity is capable of communicating with the RPDP through a MAP protocol interface, and the RPDP is capable of communicating with the subscriber subscription server of the CS domain through the MAP protocol interface;
the routing control entity is capable of sending a routing query request to the subscriber subscription server upon receiving the service request destined to the subscriber, and performing routing control according to the routing decision returned by the RPDP; and
the RPDP is further capable of intercepting the routing query request sent by the routing control entity to the subscriber subscription server, using the intercepted routing query request as the routing decision query request, determining routing information according to the routing decision made by RPDP, and returning the routing information as the routing decision to the routing control entity.

The RPDP makes the routing decision to deliver the service request via the CS domain;
the RPDP is further capable of sending the intercepted routing query request directly to the subscriber subscription server, and obtaining the routing information from the subscriber subscription server;
the subscriber subscription server is further capable of providing the routing information upon receiving the routing query sent by the RPDP;
if the service request is a terminating short message, and the routing information includes the number of the VMSC serving the subscriber currently; and
if the service request is a CS incoming call establishment request, and the routing information includes an MSRN, and the subscriber subscription server is further capable of obtaining the MSRN as the routing information.

The service request is a CS incoming call establishment request, the routing control entity is a GMSC; when the routing decision is to deliver the service request via the IMS, the routing information is a virtual MSRN pointing to a CS/IMS interworking gateway MGCF;
the RPDP is further capable of sending to the GMSC a routing query response including the virtual MSRN pointing to the CS/IMS interworking gateway MGCF; and
the GMSC is capable of routing the CS domain incoming call to the MGCF which performs the subsequent routing in the IMS, according to the virtual MSRN pointing to the CS/IMS interworking gateway MGCF, upon receiving the routing query response sent by the RPDP.

The service request is a terminating short message, the routing control entity is an SMS-GMSC; when the routing decision is to deliver the service request via the IMS, the routing information is address information of the CS/IMS short message interworking gateway; and
the RPDP is further capable of sending a short message routing query response directly to the SMS-GMSC and returning the address information of the CS/IMS short message interworking gateway to the SMS-GMSC through a short message routing query response;
the SMS-GMSC is capable of routing the terminating short message to the CS/IMS short message interworking gateway which performs the subsequent routing in the IMS, upon receiving the short message routing query response sent by the RPDP.

The service request is a CS incoming call establishment request, the routing control entity is a GMSC; when the routing decision is to deliver a CS incoming call via the CS domain and the subscriber has at least one incoming call barring service selected from the group consisting of: an activated incoming call barring service and an operator determined incoming call barring service for the CS incoming call,
the RPDP is further capable of forwarding the routing query request sent from the GMSC to the subscriber subscription server, and making the routing decision again according to a routing query rejection reason in a rejection response returned by the subscriber subscription server, routing policy information and routing decision-making related information; capable of sending a routing query response to the GMSC including a virtual MSRN pointing to a CS / IMS interworking gateway MGCF if the routing decision is changed to deliver the CS incoming call via the IMS; and capable of forwarding the routing query rejection response containing the rejection reason, which is returned by the subscriber subscription server, to the GMSC, if the routing decision is still to deliver the CS incoming call via the CS domain;
the GMSC is capable of routing the CS domain incoming call to the MGCF which performs the subsequent routing in the IMS, according to the virtual MSRN pointing to the CS/IMS interworking gateway MGCF if receiving the routing query response sent by the RPDP, and capable of rejecting the CS incoming call establishment request if receiving the routing query rejection response sent by the RPDP; and
the subscriber subscription server is further capable of sending the routing query rejection request containing the rejection reason to the RPDP, according to the subscriber subscription, upon receiving the routing query request from the RPDP.

The routing control entity includes more than one GMSC, the GMSC is capable of communicating with the RPDP through a MAP protocol interface, and the RPDP is capable of communicating with the subscriber subscription server of the CS domain through the MAP protocol interface as well;
the subscriber subscription server is further capable of providing routing query result information according to the routing query request forwarded by the RPDP;
the RPDP is further capable of intercepting the routing query request sent by a current GMSC to the subscriber subscription server and determining whether the current GMSC fulfills the RPDP interrogation manner requirement; obtaining the routing query result information from the subscriber subscription server and providing the current GMSC with the routing query result information which includes the T-CSI if the current GMSC fulfills the RPDP interrogation manner requirement; providing the current GMSC with the routing information pointing to another GMSC which fulfills the RPDP interrogation manner requirement if the current GMSC fails to fulfill the RPDP interrogation manner requirement; determining the routing decision upon receiving the routing decision query request sent by the GMSC which fulfills the RPDP interrogation manner requirement and according to the routing policy and the called subscriber information provided by the subscriber subscription server, and providing the routing decision made by the RPDP for the GMSC which fulfills the RPDP interrogation manner requirement;
the routing control entity is capable of sending the routing query request to the subscriber subscription server upon receiving a CS incoming call establishment request, performing routing of the incoming call according to the routing information provided by the RPDP and pointing to the GMSC which fulfills the RPDP interrogation manner requirement if receiving the routing information, and performing routing of the CS domain incoming call according to the routing decision, if receiving the routing decision; and
the GMSC which fulfills the RPDP interrogation manner requirement is capable of communicating with the RPDP through a CAP protocol interface, and further capable of triggering a terminating CAMEL service according to the subscriber's T-CSI obtained from the subscriber subscription server and provided for the GMSC by the RPDP, in order to send a routing decision query request to the RPDP.

After the RPDP has intercepted the routing query request sent from current GMSC to the subscriber subscription server and before verifying whether the GMSC fulfills the RPDP interrogation manner requirement,
the RPDP further communicates with the subscriber subscription server and forwards the routing query request directly to the subscriber subscription server, or, verifies whether the subscriber has a terminating CAMEL service, and/or, whether the subscriber has an activated incoming call barring service and/or an operator determined incoming call barring service for the incoming call, if the subscriber does not subscribe to the terminating CAMEL service or there is the activated incoming call barring service and/or the operator determined incoming call barring service for the incoming call, the RPDP determines the routing decision directly and, when current routing decision is to deliver the incoming call via the CS domain, forwards the routing query request to the subscriber subscription server; and
the RPDP is further capable of making the routing decision again based on the reason of rejection in the reject response and according to the routing policy and routing decision related information saved in the CS/IMS domain, when a reject response includes the reason of rejection is returned by the subscriber subscription server after the routing query request is forwarded; if the current routing decision is changed to deliver the incoming call via the IMS domain, the RPDP sends a routing query response to the GMSC and returning through the routing query response to the GMSC a virtual roaming number pointing to the CS/IMS interworking gateway MGCF; if the current routing decision is still to deliver the incoming call via the CS domain, the RPDP forwards the routing query reject response containing the reason of rejection to the GMSC; and
the GMSC further rejects current call request according to the reject response.

In accordance with the embodiments of the present invention, when connecting a service request of a service which can be provided in various network domains, the terminating routing of a called subscriber can be determined through a preset routing policy decision-made point (RPDP) and according to routing policy and routing decision-making related information corresponding to the called subscriber. Therefore, routing decisions can be determined flexibly according to a certain operation policy, the subscriber's subscription in various domains and the subscriber's preference, and then the service request can be delivered via the chosen network domain according to the routing decision. Through the present invention, when accessing both of or any one of the IMS and the CS domain through terminals supporting different access technologies, the subscriber can receive calls initiated by other subscribers or service requests of services which can be provided in various networks according to the predetermined policy, thus the experience of a user is improved and the application and development of CS/IMS /WLAN network is facilitated.

The present invention also provides various embodiments to satisfy the requirements of different network application environment, and hence it can be realized to perform across-domain routing control in different network application environments according to different requirements. Furthermore, the present invention also meets the demand of cross-domain routing control over service requests of different services which can be provided in both the CS/IMS, including the across-domain routing control of calls/sessions and widely applied short message service. Thus the user experience is improved and the application of CS, WLAN and IMS networks is facilitated.

### Brief Description of the Drawings

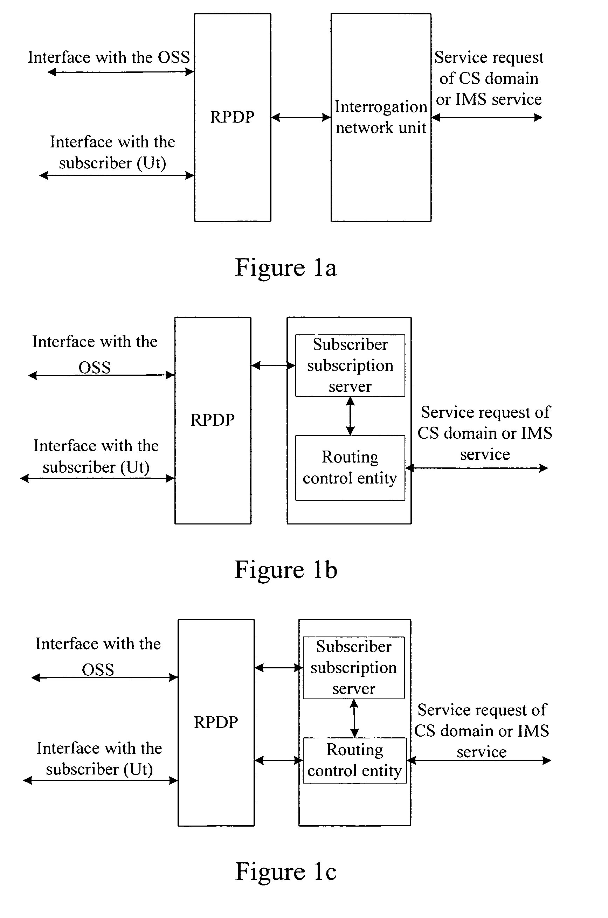

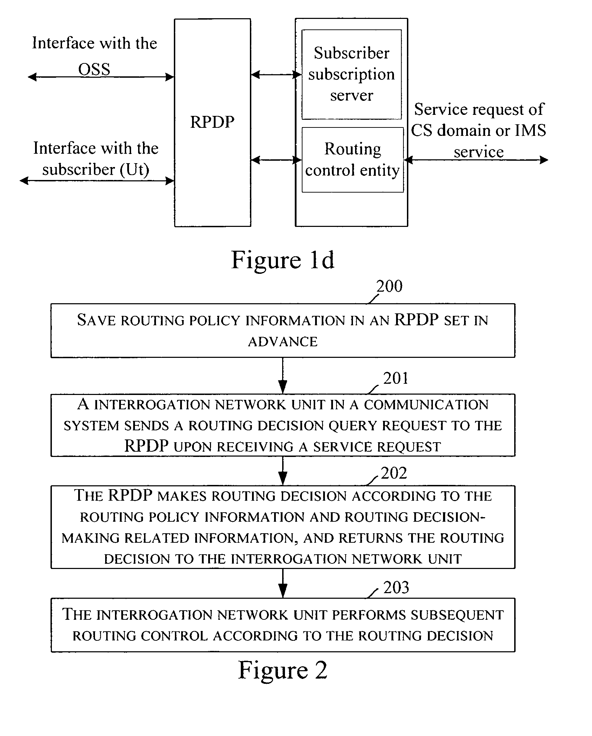

Figure 1 includes four parts from Figure 1a to 1d. Figure 1a is a schematic drawing of a system architecture in accordance with an embodiment of the present invention; Figure 1b is a schematic drawing of a system architecture in accordance with another embodiment of the present invention in which a direct interrogation manner is adopted; Figure 1c is a schematic drawing of system architecture in accordance with another embodiment of the present invention in which an indirect interrogation manner or a mixed interrogation manner is adopted; Figure 1d is a schematic drawing of a system architecture in accordance with another embodiment of the present invention in which an interception manner is adopted.
Figure 2 is a flow chart of the method in accordance with another embodiment of the present invention.

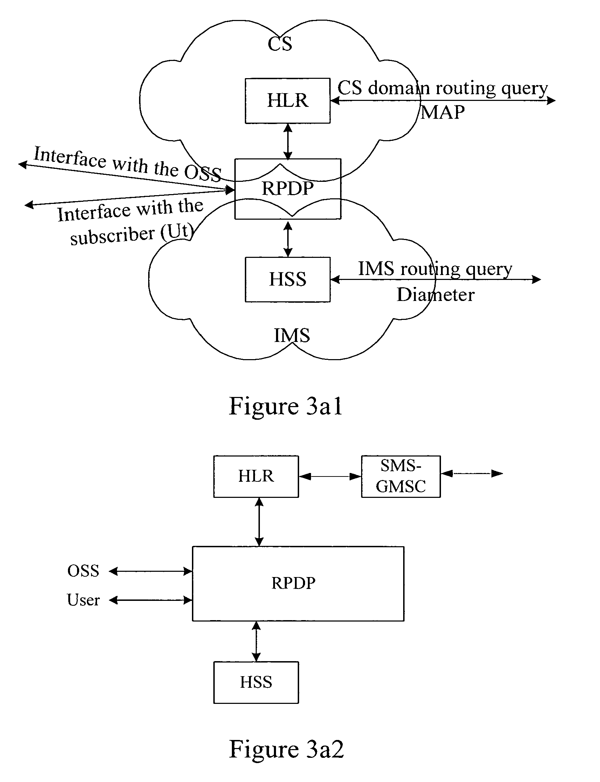

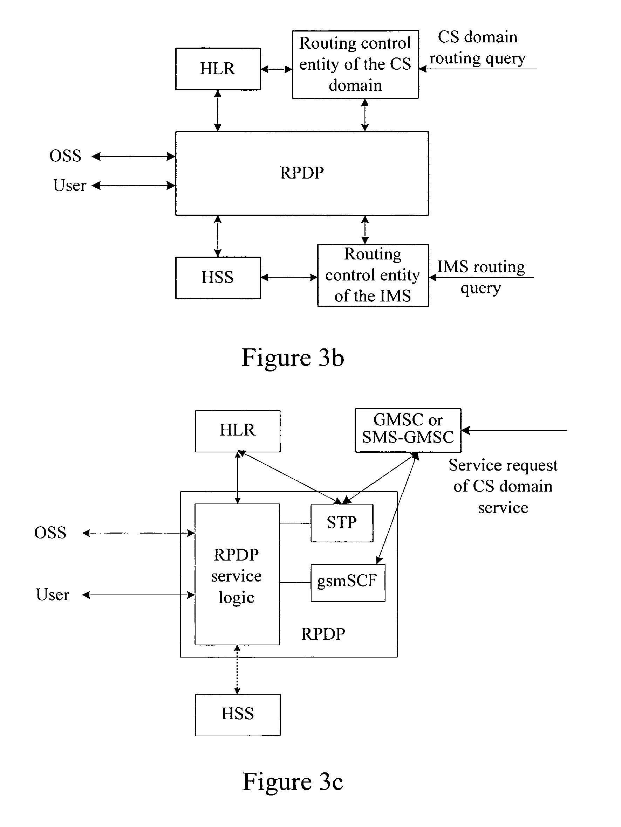

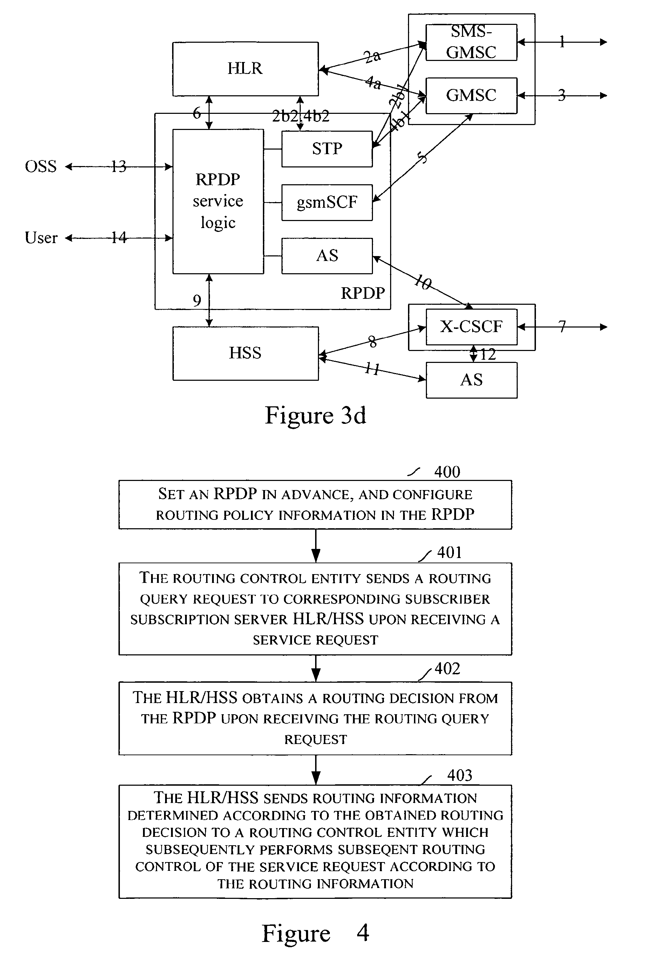

Figure 3 includes Figures 3a1, 3a2, 3b, 3c and 3d. Figure 3a1 is an architecture schematic drawing of a specific embodiment of the present invention in accordance with the system illuminated in Figure 1b; Figure 3a2 is an architecture schematic drawing of a specific embodiment of the present invention for a terminating short message based on the system illuminated in Figure 1b; Figure 3b is an architecture schematic drawing in accordance with another embodiment of the present invention based on the system illuminated in Figure 1c; Figure 3d is an architecture schematic drawing of a networking embodiment based on the system illuminated in Figures 1b, 1c and 1d.
Figure 4 is a flow chart of across-domain route control based on Figure 3a1, 3a2 or 3d in which a direct interrogation manner is adopted.
Figure 5, combined with Figure 3a1 or 3d, is the flow chart of another embodiment in which a direct interrogation manner is adopted for a call establishment request of a CS domain incoming call, hereafter referring to a CS incoming call establishment request, to query an HLR for a routing decision and deliver the incoming call via the IMS.
Figure 6, combined with Figure 3a1 or 3d, is the flow chart of another embodiment in which a direct interrogation manner is adopted for a CS incoming call establishment request to query for a routing decision through an HLR and deliver the incoming call via the IMS.
Figure 7, combined with Figure 3a1 or 3d, is the flow chart of another embodiment in which a direct interrogation manner is adopted for a CS incoming call establishment request to query an HLR for a routing decision and deliver the incoming call via the CS domain.
Figure 8, combined with Figure 3a1 or 3d, is the flow chart of another embodiment in which a direct interrogation manner is adopted for a session establishment request of an IMS incoming session, hereafter referring to IMS incoming session establishment request, to query an HSS for a routing decision and deliver the incoming session via the CS domain.
Figure 9, combined with Figure 3a1 or 3d, is the flow chart of another embodiment in which a direct interrogation manner is adopted for an IMS incoming session establishment request to query an HSS for a routing decision and deliver the incoming session via the CS domain.
Figure 10, combined with Figure 3a1, 3a2 or 3d, is the flow chart of another embodiment in which a direct interrogation manner is adopted for a CS terminating short message to query an HLR for a routing decision and deliver the CS terminating short message via the CS domain or the IMS.
Figure 11, combined with Figure 3b or 3d, is the flow chart of another embodiment of the routing control method in which a mixed or an indirect interrogation manner is adopted.
Figure 12, combined with Figure 3b or 3d, is the flow chart of another embodiment of the routing control method in which a mixed or an indirect interrogation manner is adopted.
Figure 13, combined with Figure 3b or 3d, is the flow chart of another embodiment of the routing control method in which a mixed or an indirect interrogation manner is adopted.
Figure 14, combined with Figure 3b or 3d, is the flow chart of another embodiment of the routing control method in which a mixed or an indirect interrogation manner is adopted.
Figure 15, combined with Figure 3b or 3d, is the flow chart of another embodiment of the routing control method in which a mixed or an indirect interrogation manner is adopted.
Figure 16, combined with Figure 3c or 3d, is the flow chart of another embodiment of the routing control method in which an interception manner is adopted.
Figure 17, combined with Figure 3c or 3d, is the flow chart of another embodiment of the routing control method in which an interception manner is adopted.

### Embodiments of the Invention

As shown in Figure 1a, a system in accordance with an embodiment of the present invention includes at least an interrogation network unit and an RPDP. The interrogation network unit is connected to the RPDP and used for querying the RPDP for a routing decision upon receiving a service request destined to a subscriber, and performing subsequent routing control for the service request according to a routing decision returned by the RPDP; the RPDP is used for making a routing decision according to the current routing policy information and routing decision-making related information, and returning the routing decision to the interrogation network unit. The RPDP may also store the current routing policy information.

The routing policy information may refer to: when the subscriber is reachable only in the IMS or in the CS domain, the incoming call is delivered via the domain in which the subscriber is reachable; or, when the subscriber is reachable in both the IMS and the CS domain, the incoming call is delivered via the domain of which the type is same as the network domain from which the incoming call is initiated; or the incoming call is delivered according to the priority given in the CS domain or in the IMS based on the subscriber/network configuration or combined with other factors such as time; or, no matter whether the subscriber is reachable in the IMS or in the CS domain, the incoming call is delivered via the IMS or via the CS domain compulsorily according to the subscriber/network configuration or combined with other factors such as time, etc.

In the present invention, the RPDP further may include an interface to the Operation Support System (OSS), and the interface is used for receiving the operation signals initiated by the operator so as to perform one or any combination of the following operations on the routing policy information stored in the RPDP: adding, deleting, querying, storing and modifying.

Similarly, the RPDP may further include an interface to the subscriber's terminal, and the interface is used for receiving the operation signals initiated by the subscriber's terminal so as to perform one or any combination of the following operations on the routing policy information stored in the RPDP: adding, deleting, querying, storing and modifying.

As shown in Figures 1b, 1c and 1d, the interrogation network unit further consists of a subscriber subscription server and a routing control entity corresponding to current service. The subscriber subscription server is used for storing routing decision-making related information and providing routing decision-making related information for the RPDP, and in practical applications, both the subscriber subscription server and routing control entity in the interrogation network unit may obtain a routing decision from the RPDP, which corresponds to different interrogation manners of the present invention respectively.

As the RPDP needs to exchange related information with the subscriber subscription server, the RPDP may be an independent physical entity, or a logical entity embedded in an HLR which functions as the subscriber subscription server in the CS domain or in an HSS which functions as the subscriber subscription server in the IMS; or the RPDP may be an independent logical entity embedded in a same physical entity with the HLR and the HSS. And when the RPDP is an independent entity, the HLR/HSS performs signaling interaction with the RPRP through the Mobile Application Part (MAP) protocol and/or the Diameter protocol. When the RPDP is embedded in the HLR/HSS, the HLR/HSS communicates with RPDP through an internal interaction method, for example, through internal message transmission between internal modules of the same physical entity or through a shared data section.

It should be noted that several concepts are proposed in the present invention. They are direct interrogation manner, indirect interrogation manner and mixed interrogation manner.

The subscriber subscription server may send a routing decision query request to the RPDP directly upon receiving a routing query request from the routing control entity so as to obtain a terminating routing decision; such routing decision interrogation manner is called a direct interrogation manner. The subscriber subscription server may perform direct interrogations upon receiving routing query request from different routing control entities, such as from a GMSC, an SMS-GMSC or a CSCF; therefore, the across-domain routing control of session/call establishment request and terminating short message is supported.

Accordingly, an interrogation manner in which the routing control entity queries the RPDP is called an indirect interrogation manner, or a routing control entity interrogation manner, or, according to the type of the routing control entity which sends the routing decision query request, the interrogation manner can be called a GMSC interrogation manner, an SMS-GMSC interrogation manner or a CSCF interrogation manner respectively. In indirect interrogation manner, the routing query includes: sending, by a routing control entity such as a GMSC, an SMS-GMSC or a CSCF, a routing query request to the subscriber subscription server, and returning, by the subscriber subscription server, a routing query response to the routing control entity upon receiving the routing query request; upon receiving the routing query response, sending, by the routing control entity, a routing decision query request to the RPDP in corresponding format according to the protocol adopted for the interface between the routing control entity and the RPDP, so as to obtain the routing decision from the RPDP.

According to the above, embodiments of the present invention also support the simultaneous application of both interrogation manners mentioned above, namely the mixed interrogation manner. The mixed interrogation manner includes the process of: determining an interrogation manner first by the subscriber subscription server upon receiving the routing query request from the routing control entity; if a direct interrogation manner is adopted, sending, by the subscriber subscription server, a routing decision query request to the RPDP directly to obtain the routing decision from the RPDP and sending the routing information determined on the basis of the routing decision to the routing control entity which performs routing control according to the routing information; or, if an indirect interrogation manner or a routing control entity interrogation manner is adopted, sending, by the subscriber subscription server, a routing query response which contains the routing query result to the routing control entity which initiated the routing query request, and then the routing control entity querying the RPDP to directly obtain a routing decision from the RPDP and performing routing and service delivery according to the routing decision. Moreover, if there is a connection established in advance between the routing control entity and the RPDP, they may communicate directly through the connection established in advance; or, the routing control entity may trigger a Customized Applications for Mobile network Enhanced Logic (CAMEL) service according to the CSI in the routing query response, or trigger an IMS service according to IMS service triggering data, so as to establish a service connection to the RPDP and communicate with the RPDP; or, the routing control entity and the RPDP may also communicate through other means of wired or wireless communication.

In different interrogation manners, there are different information flows among the subscriber subscription server contained in the interrogation network unit, the routing control entity contained in the interrogation network unit, and the RPDP. The interrogation manners are explained as follows with reference to the corresponding system architecture schematic drawings.

The direct interrogation manner in accordance with an embodiment of the present invention is introduced in the following with reference to Figure 1b.

As shown in Figure 1b, when the direct interrogation manner is adopted, the routing control entity first sends a routing query request to the subscriber subscription server upon receiving a service request destined to a subscriber, and then the subscriber subscription server queries the RPDP directly, obtains a routing decision and provides routing information made according to the routing decision for the routing control entity; after that, the routing control entity performs subsequent routing control according to the routing information received. Figure 1b shows that, when the direct interrogation manner is adopted, only the subscriber subscription server is connected to the RPDP to perform interaction of the routing decision query, and the routing control entity is not connected to the RPDP, but is connected to the subscriber subscription server. With regard to different service requests, the routing control entity may be a GMSC, an SMS-GMSC, or a CSCF, which corresponds respectively to a call establishment request of an incoming CS call, a terminating short message from the originating side, or a session establishment request of an incoming IMS session.

The indirect interrogation manner and mixed interrogation manner in accordance with the present invention is introduced as follows with reference to Figure 1c.

As shown in Figure 1c, when the indirect interrogation manner or the mixed interrogation manner is adopted, the routing control entity also sends a routing query request to the subscriber subscription server upon receiving a service request destined to a subscriber; however, the subscriber subscription server will not query the RPDP directly but to return a routing query response containing routing query result to the routing control entity according to the subscription data and the current status/location information of the subscriber, the routing control entity then sends, upon receiving the routing query response from the subscriber subscription server, a routing decision query request to the RPDP and performs routing control according to a routing decision returned by the RPDP. Figure 1c shows that, when the indirect interrogation manner is adopted, the routing control entity has to communicate with both the subscriber subscription server and the RPDP to obtain the routing query result and the routing decision, while the subscriber subscription server may also be connected to the RPDP to provide routing decision-making related information for the RPDP. As the prior art cannot support the interaction between an SMS-GMSC and the RPDP in a service control manner, the service request destined to a subscriber is a CS incoming call establishment request or an IMS incoming session establishment request, and accordingly, the routing control entity is a GMSC or a CSCF respectively; if the interaction between the SMS-GMSC and the RPDP is supported by a customized interface or through building the RPDP in the SMS-GMSC, the routing control entity can also be the SMS-GMSC and the service request destined to a subscriber is accordingly a terminating short message.

It can be seen from the above that, whether the direct interrogation or the indirect interrogation manner is adopted, the routing control entity first sends the routing query request to the subscriber subscription server upon receiving the service request destined to the subscriber; therefore, the subscriber subscription server may further determine the interrogation manner upon receiving the routing query request from the routing control entity, and perform corresponding handling according to determined interrogation manner, i.e., the mixed interrogation manner is supported; here the system needs to support both the direct and indirect interrogation manners so as to implement the mixed interrogation manner, and the related entities and the connections between entities involved are also shown in Figure 1 c.

Besides the direct interrogation, indirect interrogation and mixed interrogation manners mentioned above, when the routing control entity in the CS domain (such as the GMSC or the SMS-GMSC) sends a routing query request to the subscriber subscription server, the RPDP may also intercept the routing query request directly and treat the intercepted request as a routing decision query request, make a routing decision accordingly, and return a determined routing decision. Such a handling manner is called interception manner, which is described as follows with reference to Figure 1d.

As shown in Figure 1d, when interception manner is adopted, the routing control entity is not directly connected to the subscriber subscription server while both the routing control entity and the subscriber subscription server are connected to the RPDP respectively; upon intercepting the routing query request sent by the routing control entity, the RPDP obtains, according to the demand of making a routing decision, routing decision-making related information or performs interaction of routing query through the connection to the subscriber subscription server, and finally returns the routing decision to the routing control entity which performs subsequent routing control according to the routing decision.

To be specific, the interception manner can be further divided into two application manners: direct handling after interception and handling by combining with the routing control entity interrogation manner. The two manners will be described later with reference to embodiments of the present invention.

According to the system shown in Figure 1, in accordance with an embodiment of the present invention, an interrogation network unit in a communication system shall send, upon receiving a service request, a routing decision query request to an RPDP set in advance; the RPDP shall make a routing decision according to the current routing policy information and routing decision-making related information which corresponds to the called subscriber, and return the routing decision to the interrogation network unit; then the interrogation network unit shall perform subsequent routing control according to the current routing decision.

As shown in Figure 2, the method in accordance with an embodiment of present invention includes the following blocks.

Block 200: Storing the current routing policy information in an RPDP set in advance.

The current routing policy information, such as routing policies representing the operating policies of an operator, is set by the operator via an interface between the RPDP and an OSS; and/or, the current routing policy information, such as routing policies representing the routing preference of a subscriber, is set by the subscriber via a Ut interface between the RPDP and a subscriber's terminal; the setting process may include at least one of the following operations: adding, deleting, modifying, querying, and storing.

For the communication security, when the current routing policy information is set by the operator, before setting the current routing policy information via the interface between the OSS and the RPDP, the RPDP may authenticate the identity of the operator, and allow the operator to set the current routing policy information only after the authentication is passed; similarly, when the routing policy is set by the subscriber, before setting the routing policy information through the Ut interface to the RPDP, the RPDP may authenticate the identity of the subscriber, and allow the subscriber to set the routing policy information only after the authentication is passed.

Block 201: Sending a routing query request to the RPDP by an interrogation unit in the communication system upon receiving a service request. The service request may be the call establishment request of a CS domain incoming call, a session establishment request of an IMS incoming session or a terminating short message.

The interrogation network unit may include the subscriber subscription server, i.e., the HLR/HSS, and the routing control entity of the network domain in which the service request destined to the subscriber is received. With regard to different service requests, the routing control entity may be a GMSC, a CSCF or an SMS-GMSC. And the CSCF further includes an I-CSCF and an S-CSCF.

As described above, for the CS domain and the IMS, the subscriber subscription servers are the HLR and the HSS respectively, and in different networking applications, the HLR and the HSS can be co-located in one physical entity, or be deployed separately. The HLR and the HSS mentioned later indicate their corresponding functionalities, including both situations where they are co-located in one physical entity and where they are deployed separately.

When the interrogation network unit includes the HLR and the GMSC, and the service request is a call establishment request of a CS domain incoming call, the process of initiating the routing decision query request can be performed in the mixed interrogation manner: the GMSC sends a routing query request to the HLR upon receiving the call establishment request of the CS domain incoming call; the HLR determines the interrogation manner upon receiving the routing query request and sends, if a direct interrogation manner is adopted, a routing decision query request to the RPDP directly; or, if an indirect interrogation manner is adopted, the HLR returns a routing query response which contains the terminating CAMEL subscription information (T-CSI) of the called subscriber to the GMSC; the GMSC triggers terminating CAMEL service according to the T-CSI upon receiving the routing query response and thus sends a routing decision query request to the RPDP which acting as a gsmSCF. The interrogation manner may be determined according to pre-configured information, or determined dynamically according to one or any combination of the following factors: CAMEL support capability contained in the routing query request from the GMSC, the status of incoming call barring service and/or operator determined incoming call barring service of the subscriber recorded in the HLR, and local configuration of the HLR.

Obviously, the HLR may also omit the process of determining the interrogation manner and stick to the direct interrogation or the indirect interrogation manner, so as to implement the direct interrogation manner or the indirect interrogation manner in accordance with embodiments of the present invention.

When the interrogation network unit includes an HLR and an SMS-GMSC, and the service request is a terminating short message, the process of initiating the routing decision query request can be performed in the direct interrogation manner as follows: the SMS-GMSC sends a short message routing query request to the HLR upon receiving the terminating short message; and the HLR sends a routing decision query request to the RPDP directly upon receiving the short message routing query request.

The handling process of terminating short message performed in the indirect interrogation manner is not mentioned here because currently there is no mature technology that supports the interaction between the SMS-GMSC and the RPDP. However, it is obvious that when the interaction between the SMS-GMSC and the RPDP is supported by adopting a customized interface or through installing the RPDP in the SMS-GMSC, the indirect interrogation manner, i.e., SMS-GMSC interrogation manner, as well as the mixed interrogation manner in which the function of determining interrogation manner is added to the HLR, can also be supported in the across-domain routing control of terminating short message.

When the interrogation network unit includes an HSS and a CSCF, and the service request is an IMS incoming session establishment request, the process of initiating the routing decision query request can be performed in the mixed interrogation manner as follows: the I-CSCF sends a routing query request to the HSS upon receiving the IMS incoming session establishment request sent to the subscriber of the domain where the I-CSCF locates, and the HSS determines the interrogation manner; if the direct interrogation manner is adopted, the HSS sends a routing decision query request to the RPDP directly; or, if indirect interrogation manner, i.e., S-CSCF interrogation manner, is adopted, the HSS returns to the I-CSCF a routing query response which contains information of the S-CSCF, which may be the domain name of the S-CSCF allocated for the called subscriber, or may be the S-CSCF capability information needed for the I-CSCF for performing the S-CSCF assignment; the I-CSCF forwards, upon receiving the routing query response, the IMS service request to the S-CSCF which corresponds to the received S-CSCF domain name or determined according to the received the S-CSCF capability information, the S-CSCF then performing IMS service triggering according to IMS service triggering data in the subscriber's subscription data and thus forwards the IMS service request as a routing decision query request to the RPDP which acts as an AS. Similarly, the interrogation manner can be determined according to the local configuration of the HSS, or according to the service attributes and related information contained in the extended routing query request sent by the I-CSCF, or according to both the local configuration of the HSS and the service attributes and related information contained in the extended routing query request.

Obviously, the HSS may also omit the process of determining the interrogation manner and stick to direct interrogation or indirect interrogation, thereby implementing the direct interrogation manner or indirect interrogation manner in accordance with embodiments of the present invention.

When the interrogation network unit includes an HLR and a GMSC, and the service request is the call establishment request of a CS domain incoming call, the process of initiating the routing decision query request can be performed in the interception manner: the GMSC sends a routing query request to the HLR upon receiving the CS incoming call establishment request, the RPDP intercepts the routing query request and takes the intercepted routing query request as a routing decision query request.

When the interrogation network unit includes an HLR and more than one GMSC, the process of initiating the routing decision query request can be performed in the interception manner combined with the GMSC interrogation manner as follows: a current GMSC sends a routing query request to the HLR upon receiving the CS incoming call establishment request of the subscriber, the RPDP intercepts the routing query request sent by the current GMSC to the HLR, checking whether the current GMSC fulfills an RPDP interrogation manner requirement; if the current GMSC fulfills the RPDP interrogation manner requirement, the RPDP transmits transparently the routing query request to the HLR, and then obtains the T-CSI from the routing query response returned by the HLR and returns the T-CSI to the current GMSC, which then triggers a terminating CAMEL service according to the T-CSI, so as to send a routing decision query request to the RPDP via a CAMEL Application Part (CAP) protocol interface between the current GMSC and the RPDP; or, if the current GMSC fails to fulfill the RPDP interrogation manner requirement, the RPDP returns to the current GMSC the routing information point to a second GMSC which fulfills the RPDP interrogation manner requirement, the current GMSC then routes the call to the second GMSC which functions as the current GMSC now and sends another routing query request to the HLR, and the RPDP determines that the second GMSC fulfills the RPDP interrogation manner requirement and performs subsequent process described above when the current GMSC fulfills the RPDP interrogation manner requirement.

Obviously, for the terminating short message, the interception manner can also be applied, the only difference is that corresponding routing control entity is the SMS-GMSC and the routing query request is a short message routing query request.

Block 202: Making a routing decision by the RPDP according to a current routing policies and routing decision-making related information, and returning the routing decision to the interrogation network unit.

With regard to different interrogation manners, the RPDP may return the routing decision only to the interrogation network unit, or return the routing decision and additional information thereof, or return the routing information obtained or determined according to the current routing decision. Because all these indicate the final routing decision, they are called jointly a routing decision later.

The routing policy information may include: when a subscriber is reachable only in the IMS or in the CS domain, all the incoming calls are delivered via the domain in which the subscriber is reachable; or, when the subscriber is reachable in both the IMS and the CS domain, the incoming call is delivered via the domain of which the type is the same as that of the network domain where the incoming call is originated; or the incoming call is delivered via the CS domain or the IMS according to the subscriber/network configuration or other factors such as time; or, no matter whether the called subscriber is reachable in the IMS or in the CS domain, the incoming call is delivered via the IMS or the CS domain compulsorily according to the subscriber network configuration or other factors such as time, etc.

The routing decision-making related information may be: register status information of the subscriber to which the service request destined in every network domain, related service subscription information of the subscriber in every network domain and one or any combination of other terminating routing decision-making assistant information.

In the routing decision-making related information, the register status information and related service subscription information of the subscriber in the CS domain and the IMS are managed by corresponding subscriber subscription server; therefore, the RPDP may query the corresponding subscriber subscription server for the above information if necessary.

Obviously, the routing decision-making related information may also be stored in the RPDP in advance. Then, the corresponding subscriber subscription server may update the routing decision-making related information in the CS domain or IMS on its own initiative, which is managed by the subscriber subscription server and stored in the RPDP, regularly or irregularly via an interface to the RPDP to maintain data synchronization.

As described above, the RPDP may be an independent physical entity, or embedded in an independently deployed HLR or HSS, or the RPDP, the HLR and the HSS are embedded in one same physical entity. When the RPDP is an independent physical entity, it may communicate with the HLR/HSS through the MAP and/or Diameter protocol; when the RPDP is embedded in the HLR/HSS, they may interact with each other through an internal interaction method, for example, through internal message interaction between the internal modules of the same physical entity or through a shared data section.

To be specific, when the RPDP communicates with the subscriber subscription server through the MAP protocol, the interrogation interaction of the routing decision-making related information can be performed through a MAP-ANY-TIME-INTERROGATION (ATI) operation or through a MAP-ANY-TIME-SUBSCRIPTION-INTERROGATION operation; and the update interaction of the above routing decision-making related information can be performed through a MAP_UPDATE_LOCATION operation or a MAP-INSERT-SUBSCRIBER-DATA / MAP-DELETE-SUBSCRIBER-DATA operation.

When the RPDP communicates with the subscriber subscription server through the Diameter protocol, the interrogation interaction of routing decision-making related information can be performed through a Diameter User-Data-Request/User-Data-Answer (UDR/UDA) operation, or through a Diameter User-Authorization-Request/User-Authorization-Answer (UAR/UAA) operation, or through a Diameter Location-Info-Request/Location-Info-Answer (LIR/LIA) operation; and the update interaction of the routing decision-making related information can be performed through a Diameter Server-Assignment-Request/Server-Assignment-Answer (SAR/SAA) operation, or through a Diameter Push-Profile-Request/ Push-Profile-Answer (PPR/PPA) operation, or through a Diameter Subscribe-Notifications-Request/Subscribe-Notifications-Answer (SNR/SNA) operation and a Push-Notification-Request/Push-Notification-Answer (PNR/PNA) operation.

Furthermore, when the interception manner is adopted in the routing decision query, in order to avoid that the subscriber is unreachable even though the status of the subscriber in the subscriber subscription server of the determined network domain is "registered", which affects the probability of successful service delivery, the subscriber subscription server of the CS domain, the HLR, may further initiate a MAP-PROVIDE-SUBSCRIBER-INFO (PSI) operation towards the Visited MSC (VMSC) where the subscriber locates upon receiving the MAP ATI initiated by the RPDP to obtain the routing decision-making related information, and the HLR will then returns a ATI response to the RPDP according to the subscriber information contained in the PSI response returned by the VMSC. Meanwhile, upon receiving the MAP PSI operation request from the HLR, the VMSC where the subscriber locates can further initiate a paging process towards the subscriber according to the instruction in the MAP PSI operation request from the HLR and/or local configuration, and return current information of the subscriber to the HLR according to the paging result. In this way, it is guaranteed to the greatest extent that the RPDP will receive precise information about whether the subscriber is reachable in the CS domain, thereby making a right routing decision.

Moreover, the routing decision-making related information also includes other terminating routing decision-making assistant information, such as: current call status information of the subscriber in the CS domain and the IMS, capability information of a current terminal of the subscriber, capability information of the access network, etc.; the RPDP may determine the routing decision by combining with the terminating routing decision-making assistant information.

Block 203: The interrogation network unit performs subsequent routing control according to the routing decision.

It is obvious that Block 203 shall be performed in different ways with regard to the above different interrogation manners, service requests and routing decisions. With respect to the above three interrogation manners, the technical schemes provided by the present invention are explained as follows by embodiments of the present invention; and while explaining the embodiment in accordance with a direct interrogation manner, the follow-up routing control manners and related applications, which are independent of interrogation manners but dependent of different service requests and routing decisions respectively, are given and will not be explained repeatedly in embodiments of other interrogation manners.

### I. Direct interrogation manner

Figure 3a1 is a schematic drawing illustrating the architecture of a system in which a direct interrogation manner is adopted in accordance with an embodiment of the present invention, and Figure 3a2 is a schematic drawing illustrating the architecture of a system which handles a terminating short message in the direct interrogation manner in accordance with another embodiment of the present invention.

In the present embodiment the subscriber subscription server is an HLR in the CS domain and an HSS in the IMS, the routing control entity may be a GMSC, an SMS-GMSC of the CS domain or an I-CSCF of the IMS (not shown in Figure 3a) respectively according to different service requests handled by the routing control entity.

As shown in Figures 3a1 and 3a2, the system in accordance with the embodiment at least includes the CS domain, the IMS and an RPDP. The CS domain includes at least an HLR, and a GMSC or an SMS-GMSC; the IMS includes at least an HSS and an I-CSCF. Both the HLR in the CS domain and the HSS in the IMS are connected to the RPPD. As the direct interrogation interaction between the HLR/HSS and the RPDP is the focus of the embodiment, Figure 3a1 does not show the routing control entity that sends corresponding routing query request, and Figure 3a2 which illustrates the handling process of terminating short message shows the routing control entity corresponding to terminating short message, i.e., the SMS-GMSC.

The HSS is an access point of an IMS routing query, used for storing the IMS subscription data and registration status information of a subscriber; the HSS is further equipped with following functions so as to perform across-domain routing control in accordance with the present embodiment of the present invention: querying the RPDP for a current routing decision; providing the RPDP with the subscription data and registration status information of the subscriber in the domain in which the HSS is located; determining routing information according to the routing decision returned by the RPDP and providing the routing information for the routing control entity (I-CSCF); and cooperating, when necessary, with the interrogation network to route the session to the CS domain according to the requirement of the manner chosen and the routing decision returned by the RPDP.

The HLR is an access point of a CS domain routing query, used for storing the subscriber's CS subscription data and location update information which includes the CS domain registration status information of the subscriber; the HLR is further equipped with following functions so as to perform across-domain routing control in accordance with the embodiment of the present invention: querying the RPDP for the current routing decision; providing the RPDP with the subscription data and registration status information of the subscriber in the domain in which the HLR is located; determining the routing information according to the routing decision returned by the RPDP and providing the routing information for the GMSC or the SMS-GMSC.

The RPDP is used for storing the current routing policy and providing the HSS/HLR which queries the RPDP with a routing decision determined according to current routing policies and the information obtained from the HLR/HSS about whether the subscriber is reachable in the two domains.

The HLR/HSS and the RPDP shown in Figures 3a1 and 3a2 are logical entities, in practical applications they can be co-located together or be deployed independently, i.e., the RPDP can be deployed independently or embedded in the HLR/HSS. When the HLR, the HSS and the RPDP are deployed into one physical entity, they interact through internal interaction; when the RPDP is embedded in the HLR/HSS, the interface between the RPDP and the HLR/HSS in which the RPDP is embedded becomes an internal interface, and the two parts of the RPDP, when embedded respectively in the HLR and the HSS, may also realize data synchronization through customized internal interface or the interfaces with the subscriber and the OSS; when all the HLR/HSS/RPDP are, or multiple of them are, independent physical entities, they may communicate with each other through a MAP protocol or a Diameter protocol; obviously, when the RPDP is an independent physical entity, it may also choose other appropriate protocols and extended necessary protocols to communicate with the HLR/HSS.

In fact, though the relationship between the RPDP and the subscriber subscription server is described in the above paragraphs with the embodiment in which a direct interrogation manner is adopted for a system, such relationship is always the same in other embodiments in which other interrogation manners are adopted for a system. Therefore, it will not be explained repeatedly hereinafter.

As shown in Figure 4, the across-route control method based on the system shown in Figures 3a1 and 3a2 includes the following processes.

Block 400: Setting an RPDP in advance, and configuring routing policy information in the RPDP.

As described above, corresponding routing policy information can be configured through the interface between the RPDP and the OSS and/or a user terminal. During the configuration procedure, the RPDP may further authenticate the operator or the subscriber before allowing the routing policy to be configured, so as to guarantee network operation security.

Block 401: Sending a routing query request to corresponding subscriber subscription server HLR/HSS by the routing control entity upon receiving a service request.

The routing control entity may be a GMSC, an SMS-GMSC or an I-CSCF with regard to different service requests. When the service request is the call establishment request of a CS domain incoming call, the routing control entity is the GMSC of the CS domain, which initiates a routing query request to the HLR through a MAP SRI message (MAP_SEND_ROUTING_INFORMATION); when the service request is a terminating short message, the routing control entity is the SMS-GMSC, which initiates a short message routing query to the HLR through a MAP SRI_for_SMS message; when the service request is the session establishment request of an IMS incoming session, the routing control entity is the I-CSCF of the IMS, which initiates a routing query to the HSS through Diameter LIR (Location-Info-Request).

Block 402: Obtaining a routing decision from the RPDP by the HLR/HSS upon receiving the routing query request.

The block includes: sending a routing decision query request by the HLR/HSS to the RPDP upon receiving the routing query request; making a routing decision according to above-mentioned routing policy information and the current routing decision-making related information by the RPDP upon receiving the routing decision query message, and sending the routing decision to the HLR/HSS.

As explained above, in a system shown in Figures 3a1 and 3a2, when the RPDP needs, according to the current routing policy, to obtain subscriber's relevant information managed by the HLR and the HSS, for example, information about whether the subscriber is reachable currently (register status information) and the subscriber's subscription information as the routing decision-making related information, on the one hand, RPDP may send corresponding information query request to the HLR and the HSS respectively upon receiving the routing decision query request, and furthermore, if the HLR/HSS sends relevant information of their respective domains to the RPDP in the routing decision query request, the RPDP needs only initiates the corresponding information query request to the other domain, i.e., it is not needed to store relevant information in the RPDP locally in this manner, and query operations can be reduced; on the other hand, the RPDP may also store relevant information locally, and when the subscriber performs a location update in the CS domain or registration/de-registration the IMS or there is a change of the subscriber data in either of these two domains, the HLR/HSS may initiatively inform the RPDP of the information of their own domains that is needed in a routing decision process and update the information stored in the RPDP through a message such as MAP-UPDATE-LOCATION or MAP-INSERT-SUBSCRIBER-DATA. Therefore, the RPDP just performs its functions according to relevant information stored locally. Obviously, if the RPDP determines according to the current routing policy that relevant information of the subscriber in the two domains is not needed, the process of obtaining relevant information of the called subscriber in the two domains can be omitted.

And particularly, when the RPDP adopts the interrogation manner described above, but does not receive information for which the RPDP has queried within a time limit, the RPDP may perform subsequent processes according to the default processing manner configured locally, e.g., according to the case that the subscriber is unreachable in the domain.

The routing decision returned by the RPDP to the HLR/HSS querying for the routing decision can be to continue to route an incoming call in the original domain or to deliver the incoming call via another network domain.

When the routing decision is to continue to route the incoming call in the original network domain in which the routing decision query is initiated, the RPDP returns to the HLR/HSS an indication that the incoming call shall be routed in the original network; the indication may be any indication that can be understood by the HLR/HSS, e.g. a rejection response, which carries a specific reason value, to the previous query message.

When the routing decision is to deliver the incoming call via another network domain, the process can be performed in two ways respectively according to the network domain in which the routing decision query is initiated.

### (1) The routing decision query is initiated in the CS domain and the routing decision is to deliver the incoming call via the IMS.

With regard to the call establishment request of a CS domain incoming call, the routing decision returned to the HLR may include an E.164 number, which is regarded as a virtual MSRN composed according to roaming number composition scheme and according to the MGCF number configured locally; furthermore, the RPDP may store relevant information so that the same routing decision can be returned when the HSS queries the RPDP later for the routing decision for the same incoming call.

For the restoration of the MSISDN number subsequently in the MGCF, either of the following methods may be adopted:
1) inserting the MSISDN key information of the subscriber into the virtual MSRN so that the MGCF may restore the MSISDN directly from the virtual MSRN in the incoming call signaling;
2) adding an operation similar to a Providing Roaming Number (PRN) operation between the RPDP and the MGCF, in which the MGCF allocates the virtual MSRN and records the relationship between the allocated virtual MSRN and the MSISDN of the subscriber, so that the MGCF can restore the MSISDN from the virtual MSRN in the incoming call signaling according to its local record.

With regard to a terminating short message, the routing decision returned to the HLR may include address information point to a CS/IMS short message interworking gateway.

### (2) The routing decision query is initiated in the IMS and the routing decision is to deliver the incoming session via the CS domain.

The routing decision returned by the RPDP to the HLR may include the MSRN allocated for corresponding subscriber in the CS domain; when the RPDP interacts with the HLR through MAP interface, the RPDP may send a routing query request, i.e., a Send Routing Information (SRI) request, to the HLR to obtain the MSRN and return the MSRN obtained in the SRI response from the HLR to the HSS; particularly, in order to avoid loop, the HLR shall, upon receiving the SRI request from the RPDP, perform the PRN operation directly with the MSC/VLR serving the subscriber currently according to standard procedure instead of querying the RPDP again. Obviously, when the RPDP interacts with the HLR through an internal interface, the RPDP can obtain the MSRN through an internal indication which can be understood by the HLR.

The RPDP may also insert the information of the designated CS/IMS interworking gateway MGCF in the routing decision returned to the HSS directly without obtaining the MSRN from the HLR. The MGCF information may be one of, but not limited to, the number of the MGCF, the serial number of the MGCF and the domain name of the MGCF.

Block 403: Sending the routing information determined according to the obtained routing decision by the HLR/HSS to the routing control entity. The routing control entity performs subsequent routing control of the service request according to the routing information, with the cooperation of the HLR/HSS when necessary.

Similarly, the step can be performed in different ways with regard to different network domains that initiate the routing decision query, different service requests and different routing decisions made.

When the routing decision is to continue to deliver the incoming call/session in the network domain in which the routing decision query is initiated, the HLR/HSS continues to perform standard routing query procedure in the network domain upon receiving the routing decision returned by the RPDP. The standard procedure is a common knowledge in the art and will not be explained here.

When the routing decision is to deliver the incoming call/session via another network domain, one of the following processes shall be adopted according to the routing decision returned in Block 402.

### (1) Process performed by the HLR of the CS domain

When the service request is a call establishment request of a CS domain incoming call, the HLR directly returns to corresponding routing control entity (for example, GMSC) the virtual MSRN contained in the routing decision received from the RPDP and pointing to the MGCF; the routing control entity (for example, GMSC) forwards the CS domain incoming call according to the virtual MSRN to the CS/IMS interworking gateway MGCF; the MGCF restores the real number of corresponding subscriber according to the method through which the RPDP obtains the virtual MSRN, performs the CS/IMS interworking, and delivers the CS domain incoming call via the IMS.

Furthermore, consideration should be given on how to solve the problem that, when the service request is routed in the IMS, a second routing decision query may generate a different routing decision.

So, when the I-CSCF of the IMS queries the HSS for a route, the HSS sends a routing decision query request to the RPDP again, and, as described in Block 402, the RPDP stores relevant information and shall return the same routing decision when the HSS queries for the routing decision of the same call again.

Besides, when the MGCF forwards an IMS incoming session establishment request to the I-CSCF, the MGCF can determine according to the virtual MSRN that the call is forwarded from the CS domain according to the routing decision and add a specific indication in the IMS incoming session establishment request. Therefore, when the I-CSCF queries the HSS for the routing information, it can add an indication for suppressing routing decision query in the sent routing query request according to the indication added by the MGCF in the received IMS incoming session establishment request, thus routing decision query will not be performed by the HSS according to the indication contained in the routing query request, i.e., the HSS directly performs the standard procedure of the IMS without querying the RPDP.

As the E.164 number pointing to the MGCF, which is provided by the RPDP for the HLR in the routing decision, is finally transferred to corresponding routing control entity, i.e., the GMSC, the processes related to the E.164 number in Blocks 402 and 403, except the transmission to the GMSC via the HLR, including the composing of the E.164 number and the process performed by the MGCF, and the handling to avoid the second routing decision query, can also be applied to other routing decision interrogation manners provided by the present invention for routing the CS domain incoming call to the IMS. The other routing decision interrogation manners include indirect interrogation (GMSC interrogation) manner, mixed interrogation manner and two interception interrogation manners, in which the call establishment request of a CS domain incoming call can be delivered via the IMS.

With regard to a terminating short message, the HLR directly returns to corresponding routing control entity (SMS-GMSC) the address information pointing to the CS/IMS short message interworking gateway, which is included in the routing decision returned by the RPDP, the routing control entity (SMS-GMSC) forwards the terminating short message to the CS/IMS short message interworking gateway according to the address information, and the CS/IMS short message interworking gateway performs CS/IMS short message interworking and forwards the terminating short message to the subscriber via the IMS.

Similarly, as the information returned by the RPDP to the HLR is finally transferred to corresponding SMS-GMSC, the processes related to the address information pointing to the CS/IMS short message interworking gateway in Blocks 402 and 403, except the transmission to the SMS-GMSC via the HLR, can also be applied to other routing decision interrogation manners for routing terminating short message to the IMS in accordance with the embodiment of the present invention. The other routing decision interrogation manners include indirect interrogation (SMS-GMSC interrogation) manner, mixed interrogation manner and interception interrogation manner, in which the CS domain terminating short message can be routed to the subscriber via the IMS.

### (2) Process performed by the HSS of the IMS

As explained in Block 402, the routing decision returned by the RPDP may include the MSRN allocated for the subscriber in the CS domain, or the information of the CS/IMS interworking gateway MGCF.

When the information returned by the RPDP includes an MSRN, either of the following process can be adopted.
1) The MSRN can be returned to the I-CSCF through Cx interface extension; the I-CSCF forwards a session to the BGCF through a function extension according to the MSRN, and the BGCF chooses the CS/IMS interworking gateway MGCF to deliver the session via the CS domain.
2) A standard procedure can also be adopted, in which the S-CSCF domain name currently allocated for the subscriber or allocated for an unregistered subscriber, or the S-CSCF capability information for allocating the S-CSCF, is returned through a Cx interface, and at the same time the data for forwarding the session to the MSRN are inserted through an Sh interface into an AS which will be triggered during the handling of the session and has corresponding control capability, so that the session is routed by the I-CSCF to the S-CSCF allocated for the subscriber, and forwarded by the S-CSCF to the AS which is thus triggered, and the AS controls the subsequent forwarding process, i.e., the AS modifies the destination address in a message before returning the message to the S-CSCF, the S-CSCF further forwards the session to the BGCF according to the MSRN in the modified destination address, and the BGCF will choose the CS/IMS interworking gateway MGCF which then forwards the session to the CS domain.

Obviously, after the BGCF has chosen the CS/IMS interworking gateway MGCF to forward the session to the CS domain, the CS domain determines that the number belongs to an MSRN segment and thus routes the call directly to the VMSC serving the subscriber currently, i.e., the call will not go through the GMSC of the CS domain to perform the terminating routing query, thus the terminating intelligent service which is triggered during the terminating routing query procedure will not be triggered. Therefore, the terminating intelligent service of the subscriber in the CS domain should be triggered at the terminating VMSC through VT-CSI subscription.

Because in the indirect interrogation manner the routing decision query is initiated by the S-CSCF to the RPDP, in Block 403, the process of providing the MSRN allocated for the subscriber in the CS domain, which is provided in the routing decision by the RPDP to the HSS, for the routing control entity of the IMS, cannot be adopted in the indirect interrogation manner or in the indirect interrogation steps of the mixed interrogation manner. However, the processes of obtaining and providing the MSRN by the RPDP for the interrogation network unit in Block 402, and the process of triggering the terminating intelligent service by the terminating VMSC instead of the GMSC, can be adopted in the indirect interrogation (S-CSCF interrogation) manner or the mixed interrogation manner to deliver the session establishment request of an IMS incoming call via the CS domain.

Alternatively, when the information returned by the RPDP includes the MGCF information, the HSS returns to the I-CSCF the MGCF domain name obtained from the MGCF information as the domain name of the S-CSCF. If the MGCF information returned by the RPDP is the number of the MGCF or the serial number of the MGCF instead of the domain name of the MGCF, the HSS needs to restore the MGCF domain name according to local configuration first. The I-CSCF routes the session to the MGCF according to the result returned by the HSS, and the MGCF initiates a CS domain routing query to the HLR according to the origination of the message or the called number. The HLR decides, on the basis of the originating signaling point in the routing query request and local configuration, to perform a PRN operation directly to obtain the MSRN without querying for the routing policy, and then returns the obtained MSRN to the MGCF which performs IMS/CS interworking and routes the call to the VMSC serving the called subscriber according to the MSRN.

In the above process, because the call will not go through the GMSC of the CS domain which performs the terminating routing interrogation, the CS terminating intelligent service of the subscriber shall be triggered at the terminating VMSC through the VT-CSI subscription, or the MGCF shall further support SSP function and trigger the CS terminating intelligent service instead of the GMSC.

In the indirect interrogation manner the routing decision query is performed by the S-CSCF which can not handle MGCF information, the processes related to the MGCF information in Blocks 402 and 403 cannot be adopted in the indirect interrogation manner or in the indirect interrogation steps of the mixed interrogation manner.

Different methods adopted in the direct interrogation manner are further explained as follows with reference to different embodiments.

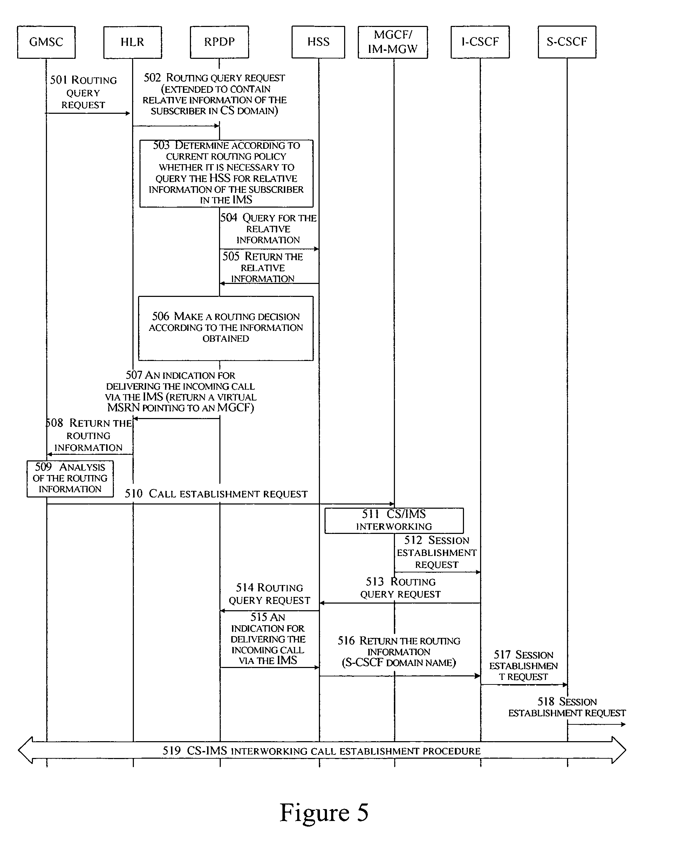

For example, Figure 5 is the flow chart of Embodiment 1 in which for a call establishment request of a CS domain incoming call, a routing decision is queried by the HLR, and the CS domain incoming call is controlled to be delivered via the IMS. As shown in Figure 5, the embodiment includes the following steps.

501-502: The GMSC sends a routing query request to the HLR upon receiving the call establishment request of a CS domain incoming call; the HLR sends a routing decision query request to the RPDP upon receiving the routing query request, e.g., when MAP interface interaction is adopted, the HLR sends an SRI message which may further contain relative information of the subscriber in the CS domain that is needed in the routing decision-making process, such as the subscriber's addressing number in the CS domain, i.e. MSISDN, the information about whether the subscriber has completed location update in the CS domain (whether the subscriber has registered in the CS domain), the information about whether the subscriber has registered and activated the supplementary services such as call forwarding unconditionally or incoming call barring which may make it impossible to deliver the incoming call to the subscriber via the CS domain.

503: The RPDP determines, according to current routing policy, whether it is necessary to query for relative information of the subscriber in the IMS; if it is necessary to query for the relative information of the subscriber in the IMS, 504 shall be performed; otherwise, 504-505 of the procedure are skipped.

504-505: The RPDP sends an information query message to the HSS, e.g. an ATI when MAP interface interaction is adopted, and the HSS returns the relative information of the called subscriber in the IMS upon receiving the information query message.

506-508: The RPDP makes a routing decision, which is to deliver the incoming call via the IMS, according to the current routing policy and routing decision-making related information such as the relative information in the CS and the IMS, and sends to the HLR an indication for delivering the incoming call via the IMS, including the virtual MSRN pointing to a CS/IMS interworking gateway MGCF. The virtual MSRN is composed according to the MSRN composition scheme based on the MGCF information configured locally in advance and the key information of the MSISDN of the subscriber, or allocated and returned to the RPDP by the MGCF upon receiving the PRN request sent by the RPDP according to the MGCF information configured locally in advance. Therefore, it is guaranteed that the MGCF is able to restore the subscriber's number upon receiving the call in the subsequent steps; furthermore, the RPDP stores the decision information of the call and returns the same routing decision when the HSS performs a routing decision query again for the same call. Upon receiving the indication of delivering the incoming call via the IMS, the HLR returns the virtual MSRN to the GMSC (SRI_ack).

509-510: The GMSC routes the call to the MGCF according to an analysis of the virtual MSRN.

511-512: The MGCF performs CS/IMS interworking upon receiving the call, restores the number of the subscriber according to the virtual MSRN, and routes corresponding IMS incoming session establishment request to the I-CSCF.

513-519: The I-CSCF sends a routing query request to the HSS, the HSS sends, upon receiving the routing query request, a routing decision query request to the RPDP, the RPDP returns a consistent decision, i.e., an indication for delivering the incoming call via the IMS, to the HSS according to the decision information stored in the previous steps; the HSS sends, upon receiving the indication, the routing information which includes the S-CSCF domain name to the I-CSCF; the I-CSCF sends the IMS incoming session establishment request to the S-CSCF, then the session establishment procedure will be performed according to a standard procedure and a CS-IMS interworking call will be established. Therefore, the CS domain incoming call is successfully delivered via the IMS.

In the present embodiment and other related embodiments, to simplify the description, the RPDP and the subscriber subscription server are always supposed to interact through MAP interface in the routing decision query and routing decision-making related information query, however, as described in the fore-going description, Diameter interface interaction, or internal interface interaction when these entities are embedded in one physical entity, can also be adopted to achieve the same result.

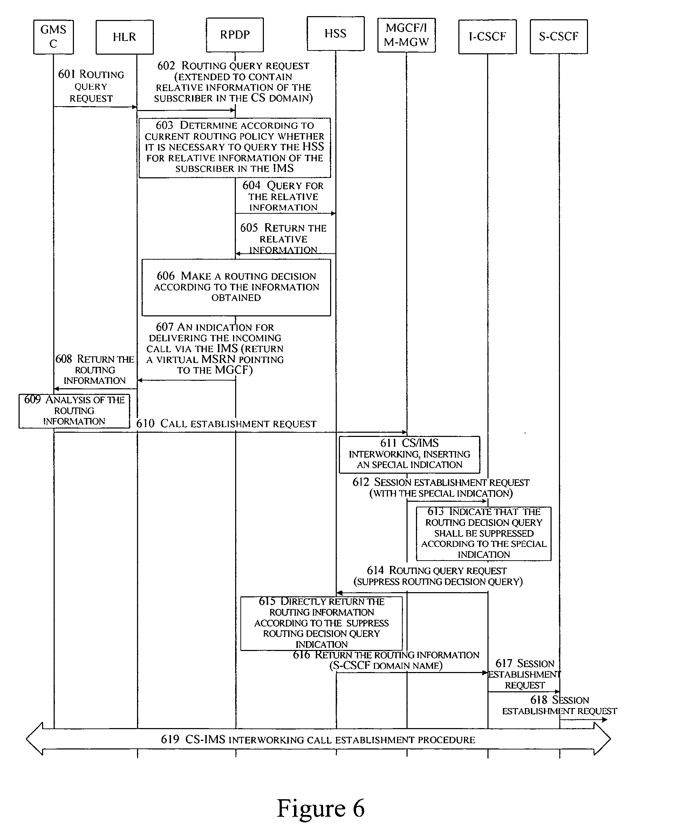

Figure 6 is the flow chart of Embodiment 2 in which, for a call establishment request of a CS domain incoming call, a routing decision is queried by the HLR, and the call incoming call is controlled to be delivered via the IMS. As shown in Figure 6, the present embodiment includes the following steps.
601-605: The same as 501-505 in Embodiment 1;
606-608: Basically the same as 506-508 in Embodiment 1. The RPDP also makes the routing decision, which is to deliver the incoming call via the IMS, sends to the HLR an indication for delivering the incoming call via the IMS, which contains the virtual MSRN pointing to an MGCF of the IMS via which the incoming call shall be delivered, the HLR returns, upon receiving the indication, the virtual MSRN to the GMSC (SRI_ack); and the only difference is that the RPDP is not required to store the decision information for the call.
609-610: The same as 509-510 in Embodiment 1;
611-612: The MGCF performs CS/IMS interworking for the call and restores the subscriber's number according to the virtual MSRN, furthermore, the MGCF determines according to the virtual MSRN that the call is forwarded from the CS domain according to a routing decision, and therefore, inserts a special indication into the corresponding IMS incoming session establishment request while forwarding the IMS incoming session establishment request to the I-CSCF.
613-619: The I-CSCF, while querying the HSS for a route in the standard procedure, inserts a "suppress routing decision query" indication into the routing query request, and the HSS then directly returns the S-CSCF domain name as the standard procedure without querying routing decision according to the "suppress routing decision query" indication, the I-CSCF forwards, according to the S-CSCF domain name, the IMS incoming session establishment request to the S-CSCF, which further route the IMS incoming session establishment request to the P-CSCF and the called subscriber according to the subscriber's registration information, and continues with establishment of the CS-IMS interworking call.

Through the compare of Embodiment 1 and Embodiment 2, the difference between the two embodiments is that different methods are adopted to avoid call/session being forwarded back and forth between two network domains caused by different routing decisions received in two query processes performed by the CS domain and IMS respectively for the same call. In Embodiment 1, the RPDP needs to store the routing decision made in the query performed by the HLR in the CS domain, and provides the same routing decision (deliver the incoming call via IMS) when the HSS in the IMS queries for the routing decision again, so that the routing decisions offered in two query processes are the same. In Embodiment 2, according to the determination of the MGCF and the I-CSCF, the I-CSCF inserts an indication into the routing query request sent to the HSS to suppress the routing decision query, and the HSS determines, according to the indication, to return the routing information of its own domain directly without querying the RPDP, so that the second query process is omitted to avoid the receipt of different routing decisions in two query processes.

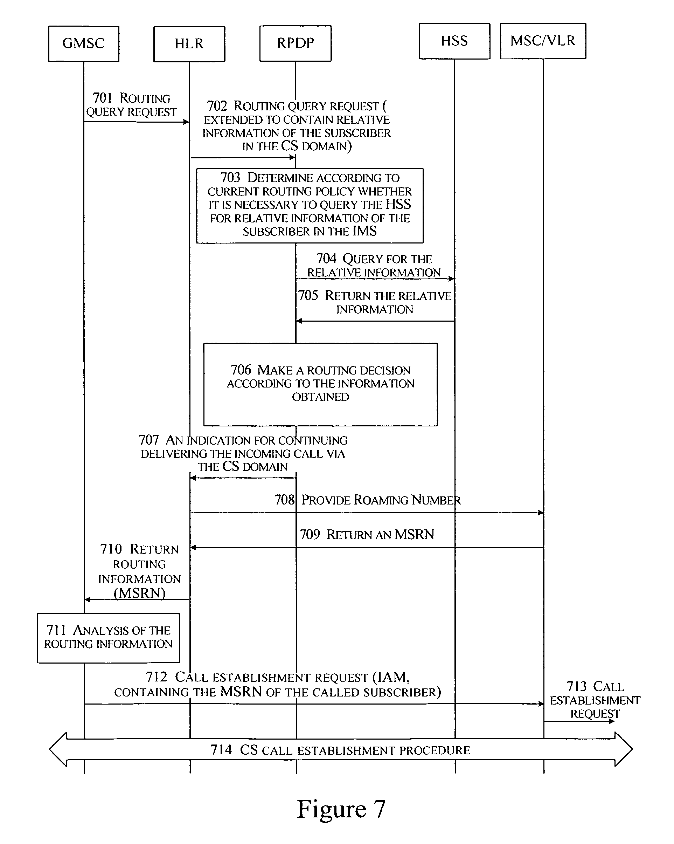

Embodiment 3 is introduced as follows with reference to Figure 7 to explain the process in which the HLR queries for a routing decision for a call establishment request of a CS domain incoming call, and the incoming call is controlled to be delivered via the CS domain.

As shown in Figure 7, Embodiment 3 includes the following steps.

701-705: The same as corresponding steps in the previous two embodiments, e.g., 501-505 or 601-605;

706-710: The RPDP makes a routing decision, which is to deliver the incoming call via the CS domain, according to the current routing policy and relative information of a subscriber in the CS and IMS, returns an indication for continuing to deliver the incoming call via the CS domain to the HLR, and the HLR initiates, upon receiving the indication, a PRN operation to the MSC/VLR serving the called subscriber currently according to the CS standard procedure, and returns the MSRN obtained by the PRN operation to the GMSC (SRI_ack).

711-713: The GMSC performs route analysis according to the MSRN returned by the HLR and forwards the CS incoming call establishment request that contains the MSRN of the called subscriber to the MSC/VLR which subsequently establishes a call connection according to normal call procedures.

In the embodiment shown in Figure 7, the RPDP sends an indication to the HLR indicating that the call shall continue being delivered via the CS domain. Therefore, the subsequent processing is totally the CS domain standard terminating procedure, and is only introduced briefly in the present embodiment. In the case of an activated terminating supplementary service or CAMEL service, the handling shall be a little more complicated, yet is still the CS domain standard terminating procedure and is not related to the technical scheme provided by the present invention.

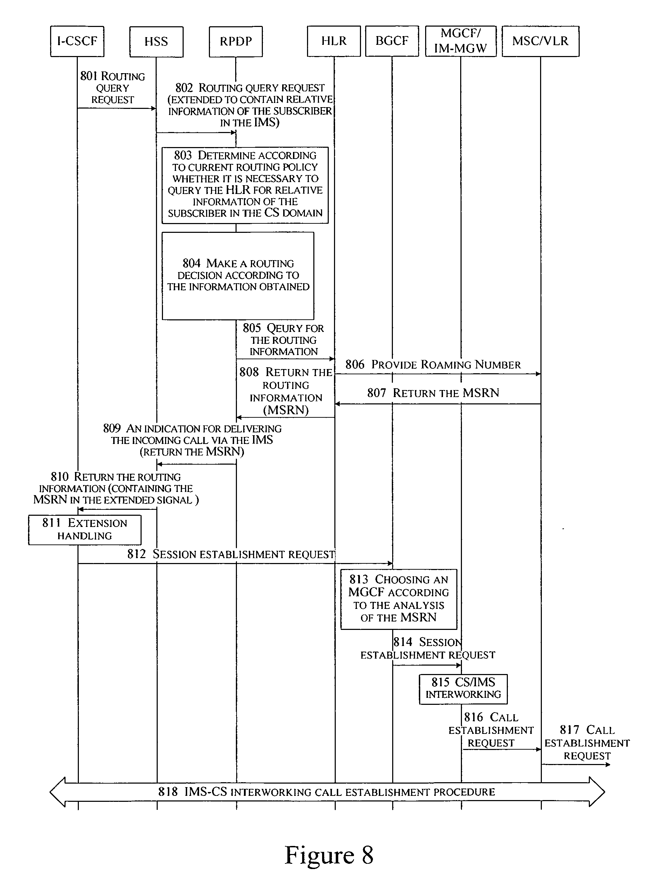

Embodiment 4 is introduced as follows to explain a process in which the HSS queries for a routing decision for a session establishment request of an IMS incoming session, and the incoming session is controlled to be delivered via the CS domain. As shown in Figure 8, the embodiment includes the following steps.

801-802: The I-CSCF sends a routing query request to the HSS upon receiving an IMS incoming session establishment request pointing to the subscriber, and the HSS sends a routing decision query request (e.g., Sending Routing Information (SRI)), which may further contain relative information of the subscriber in the IMS that is needed for the routing decision, to the RPDP upon receiving the routing query request.

803-804:The RPDP determines, according to current routing policy, whether it is necessary to query for relative information of the subscriber in the CS domain to make a decision, if it is not necessary to query for the relative information of the subscriber in the CS domain, the RPDP shall makes the routing decision, directly according to the current routing policy and the relative information of the subscriber in the IMS (or plus the relative information of the subscriber in the CS domain which has already been stored locally); if the RPDP needs to query for the relative information of the subscriber in the CS domain, the RPDP shall obtain the relative information of the subscriber in the CS domain from the HLR (not shown in Figure 8, may be performed together with 805-808), and makes a routing decision according to the current routing policy and the relative information of the subscriber in the CS and the IMS. In present embodiment, the routing decision the RPDP made is to deliver the incoming call via the CS domain.

805-808: The RPDP initiates a Sending Routing Information (SRI) query to the HLR, and the HLR initiates a PRN operation to the MSC/VLR serving the called upon receiving the SRI query and returns the obtained MSRN to the RPDP in an SRI query response (SRI_ack).

809-810: The RPDP returns an indication for delivering the incoming call via the CS domain, which contains the MSRN obtained from the HLR, to the HSS, the HSS then sends, upon receiving the indication, a routing query response to the I-CSCF and contains the MSRN obtained from the RPDP in the extended signaling.

811-812: The I-CSCF forwards the IMS incoming session establishment request to the BGCF upon receiving the routing query response. The BGCF chooses an MGCF and sends the IMS incoming session establishment request to the MGCF. The MGCF performs, upon receiving the IMS incoming session establishment request, IMS/CS interworking of the session and forwards the session to the CS domain. The CS domain determines that the number belongs to an MSRN segment, and directly routes the session to the VMSC serving the subscriber. The VMSC then pages the called subscriber and continues the establishment of the IMS-CS interworking call.

As described above, the GMSC of the CS domain is not passed through in the process; therefore, when the subscriber needs to trigger a terminating intelligent service, the terminating intelligent service shall be triggered at the terminating VMSC through VT-CSI.

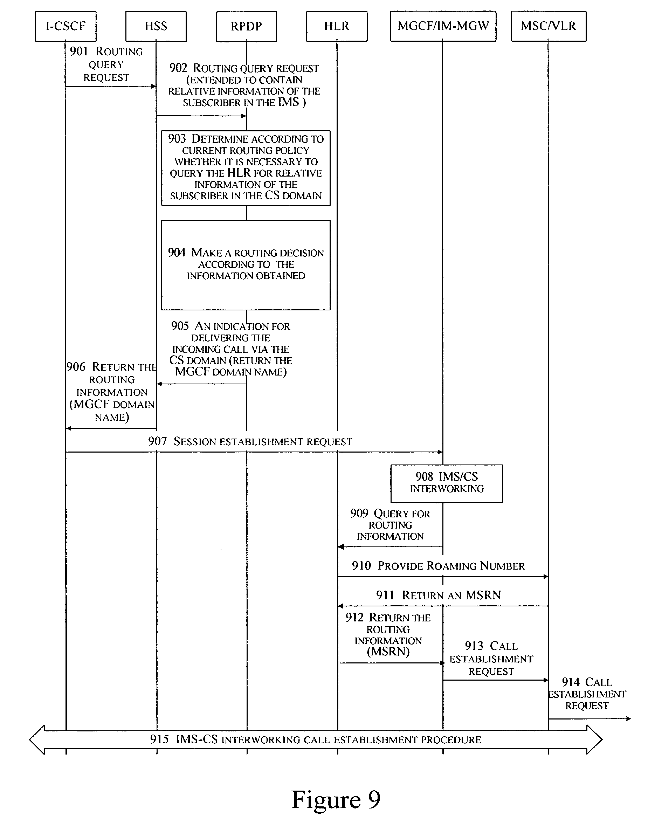

Embodiment 5 is introduced as follows with reference to Figure 9 to explain the process in which the HSS queries for a routing decision for a session establishment request of an IMS incoming call, and the incoming session is controlled to be delivered via the CS domain.

As shown in Figure 9, the present embodiment includes the following steps.
901-904: The Same as 801-804 in the embodiment shown in Figure 8.
905-906: The RPDP directly returns the information of the chosen MGCF in the indication for delivering the incoming session via the CS domain according to local configuration, and the HSS returns corresponding MGCF domain name as the S-CSCF domain name to the I-CSCF.
907-912: The I-CSCF forwards, according to the standard procedure, the IMS incoming session establishment request to the MGCF which is regarded as the S-CSCF; the MGCF performs IMS/CS interworking and initiates a CS routing query, i.e. an SRI query, directly to the HLR according to the subscriber number segment and the local configuration; and the HLR directly initiates, according to the origination of the SRI query and the local configuration, the PRN operation to the MSC/VLR serving the subscriber without querying the RPDP for current routing decision, and returns the obtained MSRN to the MGCF in an SRI_ack.
913-915: The MGCF routes, according to MSRN analysis, the call in the CS domain to the VMSC serving the subscriber currently, the VMSC pages the called subscriber and performs the subsequent IMS-CS interworking call establishment procedure.

Similarly, as described above, the GMSC of the CS domain is not passed through in the process. Therefore, when the subscriber needs to trigger the terminating intelligent service, the terminating intelligent service shall be triggered by the MGCF instead of the GMSC or at the terminating VMSC through VT-CSI.

A compare of the above two embodiments shown in Figure 8 and Figure 9 illustrates respectively, that the difference between them is the different information carried by the routing decision from the RPDP indicating that the incoming call is to be delivered via CS domain, which then results in the differences in the subsequent handling.

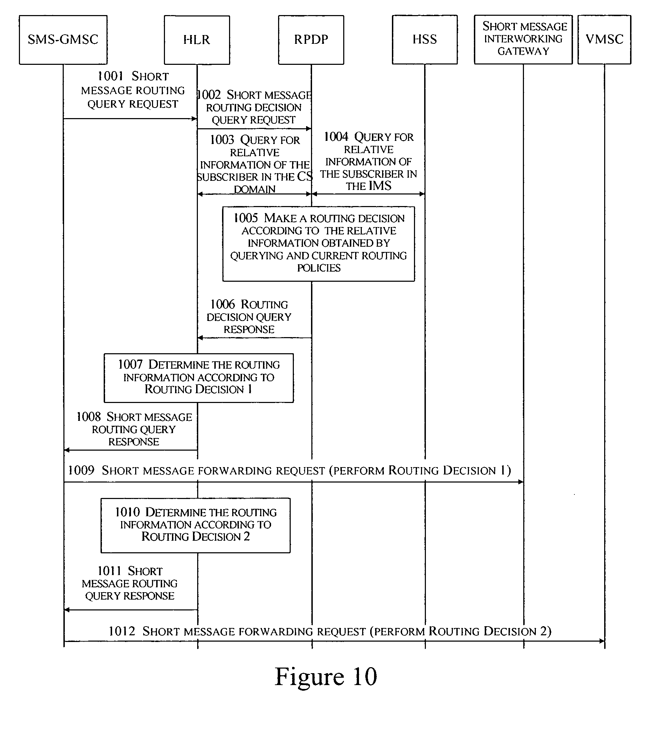

Figure 10 is the flow chart of an embodiment in which the HLR queries for the routing decision for a CS domain terminating short message to perform across-domain routing control.

As shown in Figure 10, the embodiment includes the following steps.
1001: The SMS-GMSC of the CS domain sends a short message routing query request to the HLR upon receiving the terminating short message.
1002: The HLR directly sends a routing decision query request to the RPDP;
1003-1006: Upon receiving the routing decision query request, the RPDP optionally interacts with the HLR and the HSS respectively according to current routing policies to query for relative information of the subscriber in the CS domain and the IMS, makes a routing decision according to the relative information of the subscriber obtained and the current routing policies, and returns the routing decision to the HLR.
1007-1009 and 1010-1012 correspond to two different routing decisions respectively, and one of them shall be chosen according to the routing decision made by the RPDP.
1007-1009: When the routing decision made by the RPDP is to deliver the CS domain terminating short message via the IMS (Routing Decision 1), the RPDP returns to the HLR an address information pointing to the CS/IMS short message interworking gateway, the HLR returns the address information to the SMS-GMSC in a short message routing query response, and the SMS-GMSC performs Routing Decision 1 accordingly, forwarding the CS domain terminating short message to the CS/IMS short message interworking gateway which subsequently perform interworking and routing the CS domain terminating short message to the IMS.
1010-1012: When the routing decision made by the RPDP is to deliver the CS domain terminating short message via the CS domain (Routing Decision 2), the RPDP sends an indication to the HLR indicating that the CS domain terminating short message shall continue to be delivered via the CS domain, the HLR returns to the SMS-GMSC a VMSC address stored locally during a location update process in a short message routing query response, and the SMS-GMSC performs Routing Decision 2 accordingly, forwarding the CS domain terminating short message to the VMSC serving the called subscriber which then delivers the terminating short message to the called subscriber.

As described above, when the RPDP decides to continue delivering the terminating short message in current domain, the subsequent routing control process shall be performed according to the standard process and is not related to the present invention. Therefore, the process is introduced according to a simplest situation in the embodiments.

### II. Indirect interrogation manner and mixed interrogation manner

As described above, the mixed interrogation manner and the indirect interrogation manner are based on the same system architecture, and when it is determined to adopt the indirect interrogation manner in the mixed interrogation manner, the subsequent processing will be the same as corresponding handling in the indirect interrogation manner. Therefore, only the embodiment of mixed interrogation manner is introduced hereinafter to explain both the mixed interrogation manner and indirect interrogation manner.

Figure 3b is a schematic system architecture of an embodiment based on Figure 1c in which the mixed interrogation manner and the indirect interrogation manner are adopted.

As shown in Figure 3b, in the present embodiment the subscriber subscription server is an HLR of the CS domain and an HSS of the IMS, so the system shown in Figure 3b includes the HSS, the HLR, an RPDP and a routing control entity. As described above, the routing control entity may be, according to the service request and determined interrogation manner, a GMSC or an SMS-GMSC of the CS domain, or an I-CSCF and an S-CSCF of the IMS. The RPDP is connected to the routing control entity which needs to perform a routing decision query and the HSS/HLR, and the routing control entity is connected to the HSS/HLR. When the routing control entity is a CSCF, the RPDP is connected to the S-CSCF in the CSCF, i.e., only the S-CSCF among the routing control entities of the IMS needs to perform the routing decision query.

The subscriber subscription server, HSS/HLR, is firstly used for storing subscription data and current register status information of the subscriber in the IMS/CS domain and providing the RPDP with relative information of the subscriber in the IMS/CS domain needed for the routing decision-making; in the mixed interrogation manner, the subscriber subscription server also needs to determine the interrogation manner upon receiving the routing query request from the routing control entity and performs corresponding handling according to the interrogation manner determined. When it is determined to adopt the direct interrogation manner, corresponding functions in the direct interrogation manner, as described in the fore-going description, need to be supported; when it is determined to adopt the indirect interrogation manner, only the routing query result information needs to be returned according to the standard procedure and the routing control entity shall queries the RPDP directly.

The routing control entity is not only used for sending the routing query request to the HSS/HLR as in the direct interrogation manner, but also used for sending the routing decision query request to the RPDP and performing subsequent routing control according to the routing decision returned by the RPDP in the indirect interrogation manner and in the mixed interrogation manner when the indirect interrogation manner is adopted. In the mixed interrogation manner when the direct interrogation manner is adopted, the routing control entity has to support the handling in the direct interrogation manner, i.e., receiving the routing information determined by the HLR/HSS according to the routing decision and performing subsequent routing control according to the routing information.

In the indirect interrogation manner and in the mixed interrogation manner when the indirect interrogation manner is adopted, the routing control entity which initiates the routing decision query shall establish a connection to the RPDP in advance, and to perform a routing decision query interaction according to the connection established in advance; obviously, when the RPDP does not establish a connection to the routing control entity in advance, the routing control entity may further triggers the terminating CAMEL service according to the CAMEL subscription information provided by the HSS/HLR, or triggers the IMS service according to the IMS service triggering data provided by the HSS, and establishes a connection to the RPDP through a service triggering manner.

The general requirement to the RPDP is the same in the indirect interrogation manner or mixed interrogation manner as in the direct interrogation manner, however, as the interaction interface between the RPDP and the routing control entity in the indirect interrogation manner is different from the interaction interface between the RPDP and the subscriber subscription server in the direct interrogation manner, the specific processes employed in the two interrogation manners are different, and will be explained later by combining with embodiments.

In the mixed interrogation manner, the HLR determines the interrogation manner according to a preset configuration, or dynamically determines according to a CAMEL support capability of the routing control entity GMSC contained in the routing query request, or the status of incoming call barring service of the subscriber stored in the HLR, or the status of operator determined incoming call barring service of the subscriber stored in the HLR, or local configuration of the HLR.

Through the determination of the interrogation manner, the HLR performs the routing decision query directly when the routing control entity GMSC does not support CAMEL, or when GMSC can not perform the routing decision query through triggering the CAMLE service because the CS service logic conflicts with the CAMEL service due to activated incoming call barring service of the subscriber or operator determined incoming call barring service. In this way the technical scheme of CS/IMS across-domain routing control is still workable in above mentioned cases.

Similarly, the HSS may determine the interrogation manner according to one or any combination of: a preset configuration, service attributes and related information of the IMS service request contained in the routing query request sent by the I-CSCF, and local configuration of the HSS.

Through the determination of the interrogation manner, the S-CSCF interrogation manner is adopted to handle an IMS service request which needs to be handled according to specific information in the IMS service request, so that the routing decision process will not be affected by the problem that the routing query request can not carry all the attributes of the incoming session in the direct interrogation manner, and thus a more flexible across-domain routing control based on the session attributes (for example, service request type) is realized.

The technical schemes of the mixed interrogation manner and the indirect interrogation manner are described as follows combining with accompanying drawings and embodiments of the present invention.

As current routing method may be routing in the CS domain or in the IMS, the RPDP may finally determine to route a CS/IMS incoming call/session in the CS domain or in the IMS, which is shown in the following embodiments. Meanwhile, as the follow-up routing control processes which are independent of the interrogation manner and their application ranges have already been described in the embodiments adopting the direct interrogation manner. Therefore, in the following embodiments, for the convenience of description, the two routing decisions are described in the names of Routing Decision 1 and Routing Decision 2 respectively without repeated explanation of the subsequent routing control processes which are the same as those in the direct interrogation manner.

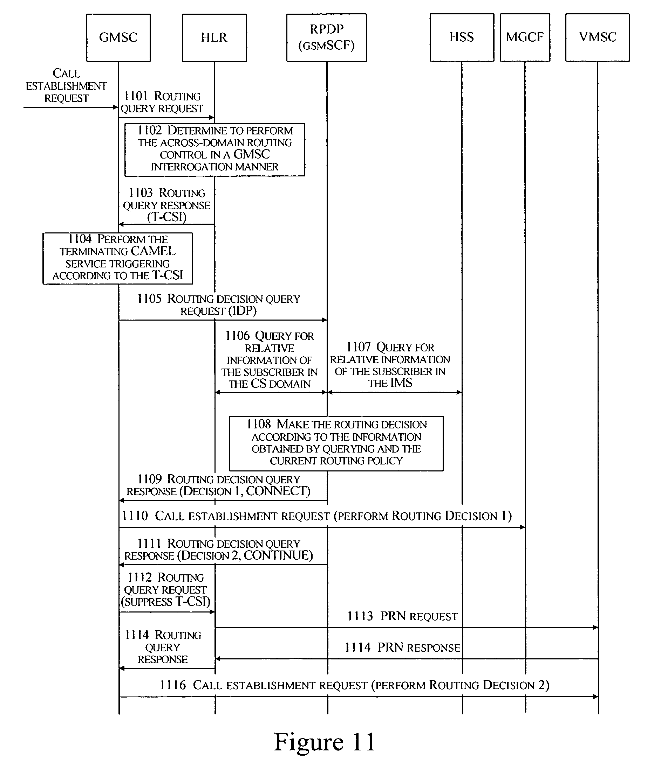

Figure 11 shows an embodiment in which the HLR determines to adopt the indirect interrogation manner, i.e., the GMSC routing decision interrogation manner to perform the across-domain routing control of a call establishment request of a CS domain incoming call. The embodiment includes the following steps.

1101: The GMSC of the CS domain sends a routing query request to the HLR upon receiving the call establishment request of a CS domain incoming call.

1102-1103: The HLR determines, upon receiving the routing query request, to adopt an indirect interrogation manner, i.e., the GMSC routing decision interrogation manner, to perform the across-domain routing control according to one or any combination of CAMEL support capability of the GMSC contained in the routing query request, the status of incoming call barring service or operator determined incoming call barring service of the subscriber stored in the HLR, and local configuration of the HLR, so the HLR returns a routing query response which contains the T-CSI of the called subscriber to the GMSC.

It can be seen from the above description that the present embodiment corresponds to the indirect interrogation manner in the CS domain provided by the present invention if the indirect interrogation manner is adopted directly without determination process in the present embodiment.
1104-1105: The GMSC triggers the terminating CAMEL service according to the T-CSI upon receiving the routing query response, establishes a service connection to the RPDP and sends a routing decision query request (IDP) to the RPDP which acts as a gsmSCF.
1106-1108: Upon receiving the routing decision query request (IDP), the RPDP which act as the gsmSCF optionally interacts with the HLR and the HSS respectively according to the current routing policy to query for relative information of the subscriber in the CS and IMS, then the RPDP makes a routing decision according to the relative information obtained by querying and the current routing policy.
1109-1110: When the routing decision is to deliver the incoming call via the IMS (called Routing Decision 1 in Figure 11), the RPDP which functions as the gsmSCF sends to the GMSC a CONNECT message which contains a redirection number, i.e., the virtual MSRN described in the direct interrogation manner, pointing to the CS/IMS interworking gateway MGCF; the GMSC performs Routing Decision 1 according to the redirection number, routes the incoming call to the MGCF which subsequently continues to deliver the incoming call via the IMS, and the procedure is terminated.
1111-1116: When the routing decision made is to deliver the incoming call via the CS domain (called Routing Decision 2 in Figure 11), the RPDP which acts as the gsmSCF sends to the GMSC a CONTINUE message indicating that the incoming call shall be routed according to the original called number, the GMSC performs Routing Decision 2, sends a routing query request with a suppress T-CSI indication, to the HLR; the HLR sends, upon receiving the routing query request, a PRN request to the VMSC serving the called subscriber currently, and returns the MSRN, provided by the VMSC in a PRN response, to the GMSC in a routing query response, and the GMSC routes the incoming call accordingly to the VMSC serving the called subscriber currently.

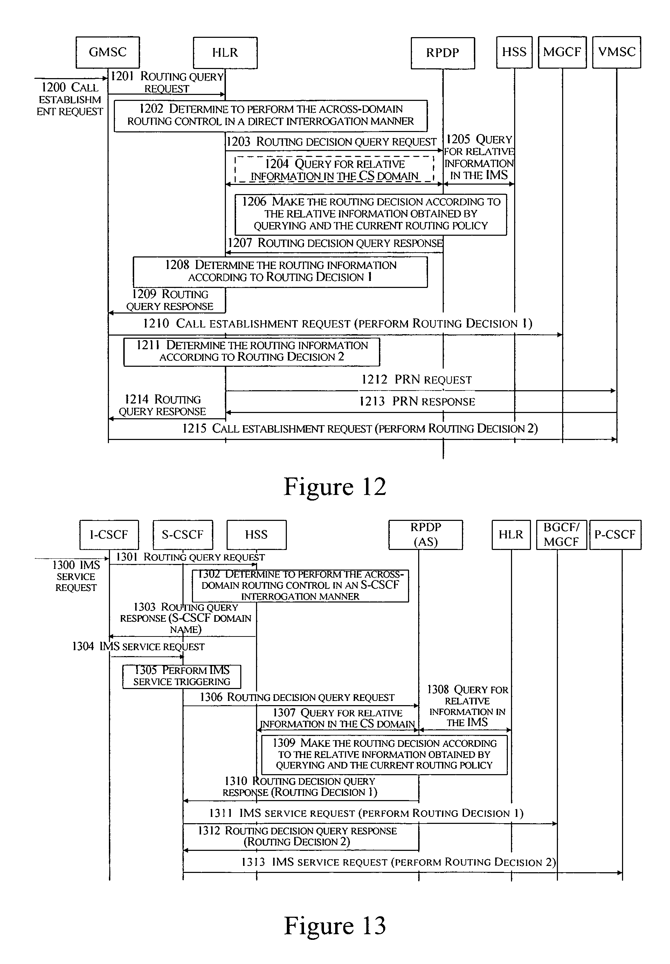

The procedure, in which the HLR determines to adopt the direct interrogation manner to perform the routing control for the call establishment request of a CS domain incoming call, is explained as follows combining with Figure 12.

As shown in Figure 12, the present embodiment includes the following steps.
1200-1201: The GMSC of the CS domain sends a routing query request to the HLR upon receiving the call establishment request of a CS domain incoming call.
1202-1203: The HLR determines to adopt the direct routing decision interrogation manner to perform the across-domain routing control according to one or any combination of CAMEL support capability of the GMSC contained in the routing query request, the status of incoming call barring service or operator determined incoming call barring service of the subscriber stored in the HLR, and local configuration of the HLR, so the HLR sends a routing decision query request directly to the RPDP.
1204-1207: Upon receiving the routing decision query request, the RPDP optionally interacts with the HLR and the HSS respectively according to the current routing policy to query for relative information of subscriber in the CS and IMS, makes a routing decision according to the relative information obtained by querying and the current routing policy, and returns the routing decision made by the RPDP to the HLR.
1208-1210: When the routing decision made is to deliver the incoming call via the IMS (called Routing Decision 1 in Figure 12), the HLR returns the virtual MSRN pointing to a CS/IMS interworking gateway MGCF, which has been returned by the RPDP to the HLR, in a routing query response to the GMSC, and the GMSC performs Routing Decision 1 accordingly and routes the incoming call to the MGCF which continues to deliver the incoming call via the IMS, and the procedure is terminated.
1211-1215: When the determined routing decision is to deliver the incoming call via the CS domain (called Routing Decision 2 in Figure 12), the HLR sends a PRN request to the VMSC serving the called subscriber according to the indication for continuing to deliver the incoming call via the CS domain returned from the RPDP, and returns the MSRN, which has been returned by the VMSC in a PRN response, to the GMSC in a routing query response, and the GMSC performs Routing Decision 2 accordingly and routes the incoming call to the VMSC serving the called subscriber.

In the two embodiments shown in Figure 11 and Figure 12, when the determined routing decision is to deliver the incoming call via the IMS, a number provided by the RPDP and pointing to a CS/IMS interworking gateway MGCF is crucial to the whole process. The composition of the number and the process of restoring the real number of the called subscriber based on the number have already been explained in the above description of embodiments adopting the direct interrogation manner and will not be introduced here repeatedly.

Figure 13 is a flow chart of an embodiment in which the HSS determines to adopt an indirect interrogation manner, i.e., the S-CSCF routing decision interrogation manner to perform the across-domain routing control for an IMS service request.

As shown in Figure 13, the present embodiment includes the following steps.
1301: The I-CSCF of the IMS sends a routing query request to the HSS upon receiving an IMS service request destined to a subscriber in the IMS, and optionally, the I-CSCF may contain service attributes and related information in the extended routing query request.
1302-1303: The HSS determines to adopt S-CSCF routing decision interrogation manner to perform the across-domain routing control according to the service attributes and the related information contained in the extended routing query request and/or the HSS local configuration, and the HSS returns, to the I-CSCF in a routing query response, the domain name of an S-CSCF which has been allocated for the called subscriber or the S-CSCF capability information for the I-CSCF to allocate an S-CSCF for the called subscriber.
1304-1306: The I-CSCF determine accordingly the S-CSCF allocated for the called subscriber and forwards the IMS service request to the S-CSCF allocated for the called subscriber, and the S-CSCF performs the service triggering according to the IMS service triggering data in the subscriber's subscription data and thus sends a routing decision query request (forwarded IMS service request) to the RPDP which acts as an AS.
1307-1309: Upon receiving the routing decision query request, the RPDP which acts as an AS optionally interacts with the HLR and the HSS respectively according to the current routing policy to query for relative information of the subscriber in the CS and IMS, then the RPDP makes a routing decision according to the relative information obtained by querying and/or the information contained by the routing decision query request (forwarded IMS service request) sent from the S-CSCF and the current routing policy.
1310-1311: When the determined routing decision is to deliver the incoming session via the CS domain (called Routing Decision 1 in Figure 13), the RPDP which acts as an AS modifies the Request-URI of the IMS service request to be returned to the S-CSCF into an E.164 number pointing to a CS/IMS interworking gateway MGCF. As described above, the E.164 number pointing to the CS/IMS interworking gateway MGCF can be the MSRN allocated for the called subscriber in the CS domain and obtained by the RPDP. The S-CSCF performs Routing Decision 1 accordingly, routing the IMS service request via the BGCF to the MGCF which continues to deliver the incoming session via the CS domain.
1312-1313: When the determined routing decision is to deliver the incoming session via the IMS (called Routing Decision 2 in Figure 13), the RPDP which acts as an AS does not modify the Request-URI of the IMS service request to be returned to the S-CSCF which performs Routing Decision 2 accordingly, continues to perform the subsequent IMS service triggering and route the IMS service request to the P-CSCF through which the subscriber accesses to the network.

Similarly, it can be seen from the fore-going description that, the present embodiment corresponds to the indirect interrogation manner provided by the present invention in the IMS if the indirect interrogation manner is adopted directly without determination process in the present embodiment.

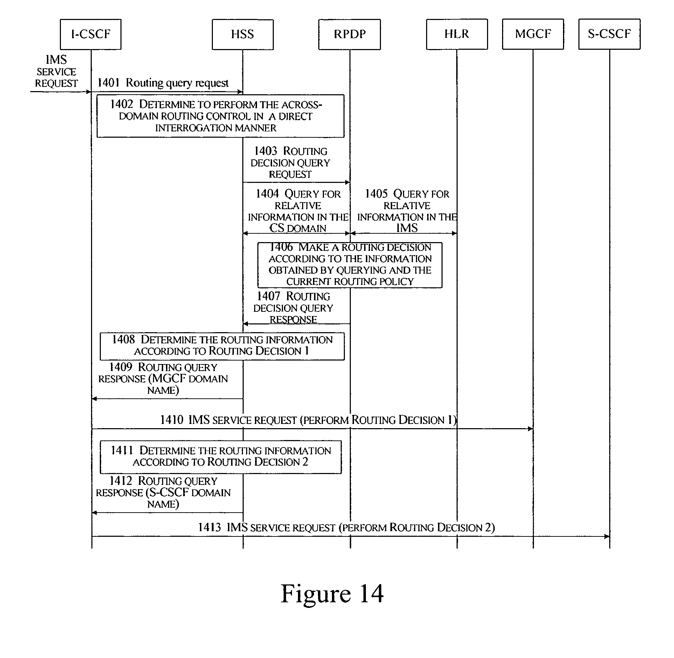

Figure 14 is a flow chart of Control Method 1 through which the HSS determines to adopt the direct interrogation manner to perform the across-domain routing control for an IMS incoming call.
1401: The I-CSCF of the IMS sends a routing query request to the HSS upon receiving an IMS service request destined to a subscriber in the IMS, optionally, the I-CSCF may contain service attributes and related information in the extended routing query.
1402-1403: The HSS determines to adopt the direct interrogation manner to perform the across-domain routing control according to the service attributes and the related information in the extended routing query and/or local configuration of the HSS, and the HSS sends a routing decision query request to the RPDP.
1404-1407: Upon receiving the routing decision query request, the RPDP optionally interacts with the HLR and the HSS respectively according to the current routing policy to query for relative information of the subscriber in the CS and IMS, determines current routing decision according to the relative information obtained by querying and the current routing policy, and returns the current routing decision to the HSS.
1408-1410: When the routing decision is to deliver the incoming session via the CS domain (called Routing Decision 1 in Figure 14), the RPDP returns the domain name of a CS/IMS interworking gateway MGCF to the HSS which subsequently returns the domain name of the MGCF as an S-CSCF domain name to the I-CSCF in a routing query response. The I-CSCF performs Routing Decision 1 accordingly, i.e. routes the IMS service request to the MGCF which is regarded as the S-CSCF. The MGCF continues to deliver the incoming session via the CS domain.
1411-1413: When the determined routing decision is to deliver the incoming session via the IMS (called Routing Decision 2 in Figure 14), the RPDP returns corresponding indication to the HSS which accordingly returns the domain name of an S-CSCF to the I-CSCF in a routing query response. The I-CSCF performs Routing Decision 2 accordingly and forwards the IMS service request to the S-CSCF which subsequently completes the IMS service triggering and then routes the IMS service request to the P-CSCF through which the subscriber accesses to the network.

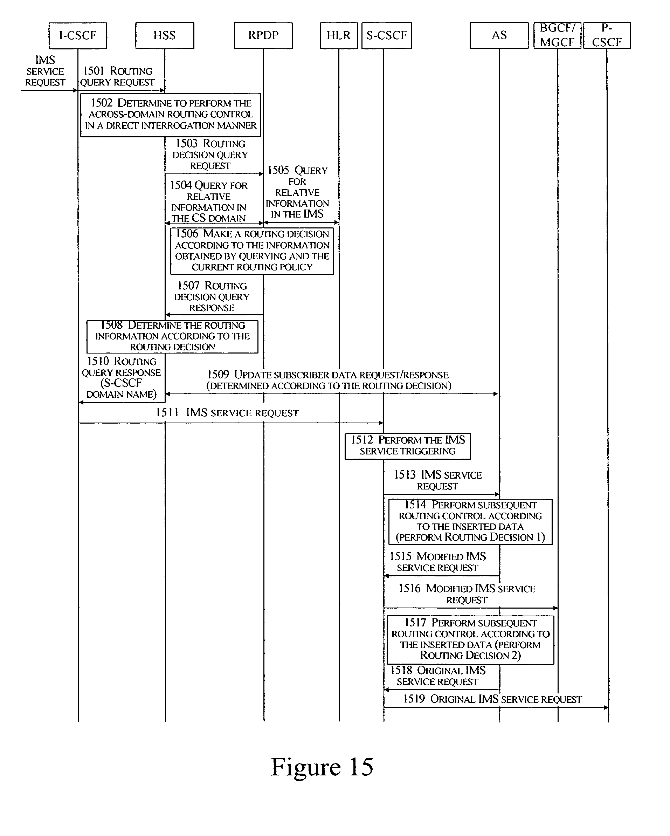

Figure 15 is a flow chart of Control Method 2 through which the HSS determines to adopt the direct interrogation manner to perform the across-domain routing control for an IMS incoming call. The difference between the embodiments shown in Figures 14 and 15 is the implementation manner in which Routing Decision 1 is performed to deliver the incoming session via the CS domain.

As shown in Figure 15, the present embodiment includes the following steps.
1501: The I-CSCF of the IMS sends a routing query request to the HSS upon receiving an IMS service request destined to the subscriber in the IMS, optionally, the I-CSCF may contain service attributes and related information in the extended routing query.
1502-1503: The HSS determines to adopt the direct interrogation manner to perform the across-domain routing control according to the service attributes and related information in the extended routing query and/or local configuration of the HSS, and the HSS sends a routing decision query request to the RPDP.
1504-1506: Upon receiving the routing decision query request, the RPDP optionally interacts with the HLR and the HSS respectively according to the current routing policy to query for relative information of the subscriber in the CS and IMS, makes a routing decision according to the relative information obtained by querying and the current routing policy.
1507-1513: The RPDP returns the determined routing decision to the HSS. When the routing decision made is to deliver the incoming session via the CS domain (called Routing Decision 1 in Figure 15), the routing decision returned by the RPDP includes an E.164 number pointing to a CS/IMS interworking gateway MGCF. As described above, the E.164 number pointing to a CS/IMS interworking gateway MGCF can be the MSRN allocated for the subscriber in the CS domain and obtained by the RPDP, and the HSS inserts the E.164 number into an AS which will be triggered in the subsequent service process through an update subscriber data operation, that is, Push-Notification-Request. Then, no matter whether the determined routing decision is to deliver the incoming session via the CS domain or via the IMS, the HSS shall return the domain name of an S-CSCF to the I-CSCF in a routing query response, the I-CSCF accordingly forwards the IMS service request to the S-CSCF, and the S-CSCF performs the IMS service triggering and forwards the IMS service to the AS into which data has been inserted by the HSS when the routing decision is to deliver the incoming session via the CS domain.
1514-1516: When the routing decision made is to deliver the incoming session via the CS domain (called Routing Decision 1 in Figure 15), the AS modifies the Request-URI of the service request into the E.164 number pointing to a CS/IMS interworking gateway MGCF upon receiving the service request forwarded by the S-CSCF while performing service triggering, according to the data inserted by the HSS. The AS returns the modified service request to the S-CSCF which routes the IMS service request via the BGCF to the MGCF according to the modified Request-URI of the service request under the control of the AS. The MGCF continues to deliver the incoming session via the CS domain.
1517-1519: When the routing decision made is to deliver the incoming session via the IMS (called Routing Decision 2 in Figure 15), the AS does not modify the Request-URI of the service request according to the data inserted by the HSS upon receiving the service request forwarded by the S-CSCF while performing service triggering. The AS returns the service request to the S-CSCF which completes the IMS service triggering and subsequently routes the call to the P-CSCF through which the subscriber accesses to the network.

### III. Interception

Figure 3c is a schematic architecture of a system when the interception manner is adopted in accordance with an embodiment of the present invention, based on Figure 1d.

As shown in Figure 3c, in the present embodiment the interrogation network unit includes one or more than one GMSC, or SMS-GMSC, and HLR. In the present embodiment the RPDP also has to be set in advance and the routing policy information has to be configured in the RPDP. When the GMSC or the SMS-GMSC sends corresponding routing query request to the HLR, the RPDP obtains the routing query request through MAP signaling interception and regards the routing query request as a routing decision query request, the RPDP then performs subsequent routing decision determination and control procedure, and finally makes a routing decision according to the current routing policy information and routing decision-making related information, and according to the chosen one of the two implementation manner, the RPDP sends the routing decision or the routing information determined according to the a routing decision to the GMSC or the SMS-GMSC. The GMSC or the SMS-GMSC performs the subsequent routing control according to the information received.

A signaling point code in the No. 7 signaling network can be allocated for the RPDP which acts as a Signaling Transfer Point (STP) to realize the interception function, and according to the signaling routing configuration of the signaling network, the signaling returned to and from the HLR shall be sent to the STP which may determine to forward or to intercept the signaling.

The RPDP may make and perform a routing decision through either of the following two methods.

The first method includes a process in which: the routing query request is regarded as a routing decision query request directly; the routing decision shall be made according to current routing policy and routing decision-making related information, and the routing information shall further be determined according to the routing decision made; then the RPDP sends the routing information determined according to the routing decision to the GMSC or the SMS-GMSC which initiates the routing query request, and the GMSC or the SMS-GMSC performs subsequent routing control for corresponding service request according to the routing information received.

The handling processes in which the first method is adopted when the service request is the call establishment request of a CS domain incoming call are explained hereinafter.

When the routing decision made is to deliver the incoming call via the CS domain, the RPDP continues to forward the routing query request from the GMSC to the HLR; the HLR interacts with the VMSC serving the called subscriber currently to obtain the MSRN and sends the MSRN to the RPDP, the RPDP sends a routing query response which contains the MSRN to the GMSC, and the GMSC routes the incoming call to the VMSC serving the called according to the MSRN.

When the routing decision made is to deliver the incoming call via the IMS, the RPDP sends a routing query response to the GMSC directly and returns a virtual MSRN pointing to the CS/IMS interworking gateway MGCF in the response; the GMSC routes the incoming call to the MGCF upon receiving the routing query response according to the virtual MSRN, and the MGCF continues to deliver the incoming call via the IMS. The handling process of the virtual MSRN has been explained in the description of the embodiments adopting the direct interrogation manner.

Through such method, the RPDP can only perform corresponding control when the GMSC performs the routing query. In the CS domain the subscriber may lose the radio connection to the network and subscriber status stored in the HLR, or even in the VMSC/VLR, may not be updated. Therefore, in order to get the accurate subscriber status information so as to make the routing decision, the embodiment of the present invention further includes methods on the basis of querying the HLR for the routing decision-making related information of the subscriber by the RPDP.

Firstly, the HLR initiates a MAP PSI operation towards the VMSC serving the subscriber upon receiving a MAP ATI request from the RPDP, and returns the ATI response to the RPDP according to the information of subscriber returned in a PSI response from the VMSC.

Furthermore, when the VMSC serving the subscriber supports a pre-paging function, the VMSC initiates, upon receiving a MAP PSI request from the HLR, a subscriber paging according to the instruction in the MAP PSI request from the HLR and/or local configuration, and returns current information of the subscriber to the HLR according to the paging result.

Through the above methods, the relative accurate subscriber status and location information stored in the VMSC serving the subscriber can be obtained and the problem of inaccurate status information in the HLR can be solved when the subscriber powers off his phone without notifying the HLR; furthermore, current accurate status and location information of the subscriber can be obtained by pre-paging.

However, some networks do not support the pre-paging function. Therefore, when current routing policy requires the call shall be forwarded to the IMS if the subscriber can not be paged in the CS domain, the operator or the subscriber may configure the above routing policy as well as data of Forwarding when Not Reachable and Forwarding when No Reply in the VMSC serving the subscriber through the HLR according to the existing service configuration method, wherein, the forward-to number points to a CS/IMS interworking gateway MGCF so that, when the RPDP makes the routing decision according to the relative accurate status and location information obtained of the subscriber and controls the GMSC to deliver the incoming call to the VMSC, and there is no response to the subscriber paging or the subscriber does not give a reply, the VMSC can still trigger corresponding forwarding process according to these data and routes the incoming call to the CS/IMS interworking gateway MGCF which subsequently delivers the incoming call via the IMS.

The handling process in which the first method is adopted to handle the service request, i.e. a CS domain terminating short message, is described as follows.

When the routing decision made is to deliver the CS domain terminating short message via the CS domain, the RPDP forwards the short message routing query request from the SMS-GMSC to the HLR and subsequently, forwards the routing query response returned from the HLR to the SMS-GMSC; the SMS-GMSC performs subsequent short message routing control and routes the CS domain terminating short message to the VMSC serving the called subscriber according to the routing information, e.g., the number of the VMSC serving the subscriber, provided in the routing query response.

When the routing decision made is to deliver the CS domain terminating short message via the IMS, the RPDP sends a routing query response directly to the SMS-GMSC and returns an address information pointing to a CS/IMS short message interworking gateway in the routing query response; according to the address information, the SMS-GMSC routes the CS domain terminating short message to the CS/IMS short message interworking gateway which subsequently performs interworking and delivers the CS domain terminating short message via the IMS.

The second method includes a process in which: the RPDP intercepts a routing query request sent by current GMSC to the HLR and checking whether the current GMSC fulfills an RPDP interrogation manner requirement; if the GMSC fails to fulfill the RPDP interrogation manner requirement, the RPDP returns routing information pointing to the second GMSC which fulfills the RPDP interrogation manner requirement to the current GMSC, and the current GMSC routes the incoming call to the second GMSC which then, as new current GMSC, sends another routing query request to the HLR; the RPDP intercepts the routing query request sent by the new current GMSC and checks again whether the new current GMSC fulfills the RPDP interrogation manner requirement; if the first GMSC (original current GMSC) or the second GMSC(new current GMSC) fulfills the RPDP interrogation manner requirement, the RPDP obtains the T-CSI from the HLR and provides the T-CSI for the original or new current GMSC so that the original or new current GMSC can trigger the terminating CAMEL service and sends a routing decision query request to the RPDP; the RPDP makes, upon receiving the routing decision query request, a routing decision according to current routing policy and routing decision-making related information, and sends the routing information determined according to the routing decision to the original or new current GMSC which subsequently performs routing control according to the routing information received.

The routing information of the GMSC that fulfills the RPDP interrogation manner requirement is chosen at random from the routing information, stored in the RPDP itself, of the GMSCs that fulfill the RPDP interrogation manner requirement, or is chosen according to predetermined priority level. Whether the GMSC fulfills the RPDP interrogation manner requirement can be checked through checking whether CAMEL can be supported according to a special information element indication in the routing query request sent by the GMSC, or through checking whether the origination signaling point code carried by the routing query request sent from the GMSC is identical with the signaling point code configured in the RPDP.

When a routing decision is to deliver the incoming call via the IMS, the routing decision shall include the redirection number pointing to the CS/IMS interworking gateway MGCF; and upon receiving the current routing decision, the GMSC routes the incoming call to the MGCF according to the redirection number and the MGCF will continue with delivering the incoming call via the IMS.

When the routing decision made is to deliver the incoming call via the CS domain, the process of the routing control performed by current GMSC according to the routing information received includes as follows. The current GMSC sends a routing query request with a suppress T-CSI indication to the HLR. When the routing query request passes through the RPDP which acts as an STP again, the RPDP determines to transmit the routing query request transparently to the HLR directly according to the signaling message type or the key information of the routing query request. The HLR sends a PRN request to the VMSC serving the called subscriber, inserts an MSRN returned by the VMSC through a PRN response into a routing query response, and sends the routing query response to the current GMSC via the RPDP which acts as an STP. The RPDP determines to transmit the routing query response transparently to the current GMSC directly according to the signaling message type or the key information of the routing query response. The current GMSC routes the incoming call to the VMSC serving the called accordingly.

Furthermore, the RPDP may interact, in order to avoid vain process, with the HLR first after intercepting a routing query request from a GMSC to the HLR and before checking whether the GMSC fulfills the RPDP interrogation manner requirement, to check whether the subscriber has subscribed to the terminating CAMEL service, and/or whether the subscriber has an activated incoming call barring service and/or operator determined incoming call barring service for the incoming call. If the subscriber has not subscribed to a terminating CAMEL service or the subscriber has an activated incoming call barring service and/or an operator determined incoming call barring service for the incoming call, the GMSC interrogation manner based on the triggering of the terminating CAMEL service cannot be adopted to perform the across-domain routing control for subscribers, so the first method shall be adopted to perform the routing decision query directly, and shall forward the routing query request to the HLR when the routing decision is to deliver the incoming call via the CS domain. Or, the RPDP may directly forwards the routing query request to the HLR without performing the above checking; when receiving a rejection response containing the rejection reason returned by the HLR, the RPDP makes a routing decision again according to the specific reason in the rejection response and according to current routing policy and routing decision-making related information; if the routing decision made is changed to deliver the incoming call via the IMS, the RPDP shall sends a routing query response to the GMSC and returns a virtual MSRN pointing to the CS/IMS interworking gateway MGCF in the routing query response; if the routing decision made is still to deliver the incoming call via the CS domain, the RPDP shall forward the routing query rejection response with the specific reason of rejection to the GMSC which subsequently rejects the current call request according to the routing query rejection response.

Through such a method, it is the GMSC which fulfills the RPDP interrogation manner requirement that queries the RPDP for a routing decision through a CAP interface, so the RPDP may perform persistent control of a part of or the whole call process through configuring a basic call status model event detection point through a standard CAP interface operation. Therefore, when the GMSC receives a call failure message and submits an event report after performing call routing according to the routing information determined according to the routing decision and provided by the RPDP, the RPDP may still make the routing decision according to current routing policy and issue an indication to release the call or redirect the call, and the GMSC may release the call or reroute the call to the other domain according to the indication.

For example, when the subscriber has lost the radio connection to the network and the subscriber status stored in the HLR, or even in the VMSC/VLR, is not updated, the RPDP makes the routing decision according to the subscriber status and location information obtained and controls the GMSC to route the call to the VMSC, if there is no reply to the subscriber paging or the subscriber does not answer, the GMSC may report corresponding call failure event based on the event detection point configured by the RPDP upon receiving the call failure message returned by the VMSC. Then the RPDP may determine the routing decision again according to current routing policy and issue an indication to release the call or redirect the call to the CS/IMS interworking gateway MGCF, and the GMSC releases the call or reroutes the call to the CS/IMS interworking gateway MGCF and further to the other domain according to the indication.

As shown in Table 1, in the existing CAMEL mechanism the gsmSCF can dynamically configure the following event Detection Points (DPs) for the GMSC which functions as a gsmSSF on the terminating side.

**Table 1**

| **CAMEL Detection Point** | **DP Type** | **Description** |
|---|---|---|
| DP 13, DP T_Busy | EDP-N, EDP-R | Indication that: |
| | | - a busy indication is received from the destination exchange; |
| | | - Not reachable or call establishment failure event is determined from the HLR response or upon a cause IE in the ISUP release message. |
| DP 14, DP T_No_Answer | EDP-N, EDP-R | Indication that an application timer associated with the T_No_Answer DP expires. |
| DP 15, DP T_Answer | EDP-N, EDP-R | Call is accepted and answered by terminating party. |
| DP 17, DP T_Disconnect | EDP-N, EDP-R | A disconnect indication is received from the terminating party or from the originating party. |
| DP 18, DP T_Abandon | EDP-N | A disconnect indication is received from the originating party during the call establishment procedure. |

If the gsmSCF configures the DP Type of a DP as EDP-R, it is indicated that the gsmSCF requires the GMSC which acts as a gsmSSF to suspend the call when the DP is detected and to request the gsmSCF to provide an operation instruction for the GMSC, and the GMSC shall perform the subsequent call process according to the operation instruction received. If the gsmSCF configures the DP Type of a DP as EDP-N, it is indicated that the gsmSCF requires the GMSC which acts a gsmSSF to notify the gsmSCF of the event when the DP is detected, and the GMSC shall handle the call according to its own logic and does not need to wait for the operation instruction issued by the gsmSCF.

As shown in Figure 3c, the system in the present embodiment includes the HSS, HLR, RPDP, GMSC and SMS-GMSC. Wherein, the RPDP further comprises logic function entities such as an RPDP service logic, a gsmSCF and an STP. The RPDP service logic is used for storing a routing policy, performing a logic determination and interacting with the HLR and the HSS to obtain routing decision-making related information, the gsmSCF is used for establishing a connection to the GMSC and performing signaling interaction with the GMSC to support the second method described, i.e., interception interrogation manner in combination with the GMSC interrogation manner; the STP is used for establishing connection to GMSC, SMS-GMSC and HLR, and performing interaction with the GMSC, SMS-GMSC and HLR to intercept routing query interaction messages between the GMSC and the HLR or between the SMS-GMSC and the HLR.

Furthermore, the RPDP service logic provides interfaces with an OSS and/or with a subscriber terminal, and the interfaces are used for receiving operation signals from an operator and/or the subscriber respectively, including adding, deleting, querying, storing, and modifying the routing policy information stored in RPDP.

With regard to the fore-going two different methods, the HSS/HLR, RPDP, GMSC and SMS-GMSC perform different handling processes.

When the first method is adopted, the HSS/HLR for storing the IMS/CS subscriber's subscription data and current status/location information of the subscriber provides the subscriber information in the IMS/CS domain for the RPDP. The RPDP is used for making a routing decision according to current routing policy and routing decision-making related information such as information of the called subscriber in the HSS/HLR when corresponding routing query request sent from the GMSC or SMS-GMSC to the HLR is intercepted, and further used for returning the routing information determined according to the routing decision to the GMSC or SMS-GMSC. The GMSC or the SMS-GMSC is used for sending corresponding routing query request to the HLR, and performing subsequent routing control upon receiving the routing decision query response, i.e., the routing query response, from the RPDP and according to the routing information in the routing query response.

When the second method, i.e., interception interrogation manner in combination with the GMSC interrogation manner, is adopted, the HSS/HLR is used for storing the IMS/CS subscriber's subscription data and current status/location information of the subscriber, providing the information of subscriber in the IMS/CS domain for the RPDP and providing the routing query result information according to the routing query request forwarded by the RPDP; the RPDP is used for intercepting the routing query request sent from current GMSC to the HLR, determining whether current GMSC fulfills the RPDP interrogation manner requirement, querying, if the GMSC fulfills the RPDP interrogation manner requirement, the HLR for the T-CSI and providing the T-CSI for the GMSC, or, providing, if the GMSC fails to fulfill the RPDP interrogation manner requirement, the GMSC with the routing information of another GMSC that fulfills the RPDP interrogation manner requirement, and upon receiving the routing decision query request from the GMSC that fulfills the RPDP interrogation manner requirement, the RPDP is used for making a routing decision according to the current routing policy stored in the RPDP and the routing decision-making related information such as information of the called subscriber in the HSS/HLR, and providing the GMSC with the determined current routing decision; the GMSC is used for sending a routing query request to the HLR upon receiving the CS incoming call establishment request, routing the call to the GMSC that fulfills the RPDP interrogation manner requirement upon receiving the routing information of the GMSC that fulfills the RPDP interrogation manner requirement provided by the RPDP, and triggering a terminating CAMEL service according to the T-CSI provided by the RPDP which has obtained the T-CSI from the HLR, and thus sending the routing decision query request to the RPDP accordingly and upon receiving the routing decision query response returned by the RPDP, performing routing control according to the routing decision in the routing decision query response.

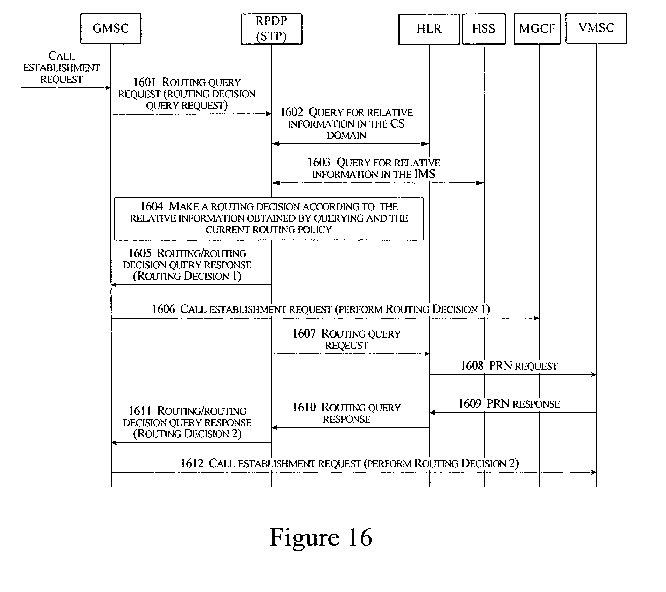

Figure 16 is a flow chart of a process in which the first method, i.e., signaling interception manner, is adopted to perform the across-domain routing control of a CS domain incoming call.

As shown in Figure 16, the embodiment includes the following steps.
1601: The GMSC of the CS domain sends a routing query request to the HLR upon receiving the call establishment request of a CS domain incoming call. The STP module in the RPDP intercepts the routing query request and sends the intercepted routing query request directly to the RPDP service logic module as a routing decision query request.
1602-1604: Upon receiving the routing decision query request, the RPDP service logic module optionally interacts with the HLR and the HSS respectively according to the current routing policy to query for relative information of the subscriber in the CS and IMS, and makes a routing decision according to relative information obtained by querying and the current routing policy.

Optionally, when the RPDP service logic module in 1602 queries the HLR for the relative information of the subscriber in the CS domain through a MAP ATI request, the HLR may initiates a MAP PSI operation request to the VMSC serving the subscriber upon receiving the MAP ATI request, and returns an MAP ATI response to the RPDP according to the information of the subscriber returned in the MAP PSI response from the VMSC.

Furthermore, when the VMSC supports a pre-paging function, the VMSC initiates, upon receiving the MAP PSI operation request from the HLR, subscriber paging according to the instruction in the MAP PSI operation request from the HLR and/or local configuration, and returns the current information of the subscriber to the HLR according to the paging result.

Through the MAP PSI operation and the pre-paging, accurate current status and location information of the subscriber can be obtained. However, as some networks do not support pre-paging, when the current routing policy requires a call to be delivered via the IMS if the subscriber is not paged in the CS domain, the operator or the subscriber may configure the routing policy as well as service data of Call Forward when Not Reachable and Call Forward when No Reply in the VLR through the HLR according to the existing service configuration method, wherein the forward-to number points to a CS/IMS interworking gateway MGCF. By doing that, the RPDP may make a routing decision according to the relative accurate status and location information obtained of the subscriber and controls the GMSC to deliver the call to the VMSC, and when there is no reply to the subscriber paging or the subscriber does not give an answer, the VMSC can still trigger corresponding forwarding handling according to these data and routes the call to the CS/IMS interworking gateway MGCF, and further to the IMS.
1605-1606: When the routing decision made is to continue to deliver the incoming call via the IMS, the RPDP service logic module in the RPDP sends a routing query response through the STP module in the RPDP to the GMSC and returns a virtual MSRN pointing to a CS/IMS interworking gateway MGCF in the response; the GMSC routes the call to the MGCF upon receiving the routing query response according to the virtual MSRN pointing to the CS/IMS interworking gateway MGCF, and the MGCF continues to deliver the incoming call via the IMS. The process is thus terminated.
1607-1612: When the routing decision made is to continue delivering the incoming call via the CS domain, the RPDP service logic module in the RPDP forwards the routing query from the GMSC to the HLR which subsequently sends a PRN request to the VMSC serving the called subscriber. Upon receiving the MSRN returned by the VMSC from the HLR, the RPDP service logic module in the RPDP sends a routing query response which contains the MSRN from the VMSC to the GMSC through the STP module in the RPDP, and the GMSC routes the incoming call to the VMSC serving the called according to the MSRN.

In the above process, when the RPDP service logic module makes a routing decision to deliver the incoming call via the CS domain and forwards the routing query request from the GMSC to the HLR, a routing query rejection response containing the reason of rejection will be sent to the RPDP service logic module by the HLR, if it is determined that the subscriber has an activated incoming call barring service and/or operator determined incoming call barring service that corresponds to the incoming call according to the subscriber's subscription information; the RPDP service logic module makes, upon receiving the routing query rejection response from the HLR, a routing decision again according to the reason in the routing query rejection response, the current routing policy and the routing decision-making related information. If the new routing decision is changed to deliver the incoming call via the IMS, the RPDP service logic module shall send through the STP module in the RPDP a routing query response to the GMSC and returns a virtual MSRN pointing to a CS/IMS interworking gateway MGCF in the response. If the new routing decision is still to deliver the incoming call via the CS domain, the RPDP service logic module shall forward through the STP module in the RPDP the routing query rejection response with the specific reason of rejection, and the GMSC shall reject the call request according to the routing query rejection response.

As described above, a handling process of terminating short message in the first method is very similar to the process of the above embodiment, and the only difference is that the routing control entity initiating the routing query is not the GMSC but the SMS-GMSC, and that the routing information obtained from the HLR or determined by the RPDP according to the routing decision is the short message routing information. Therefore, the process will not be described repeatedly as follows.

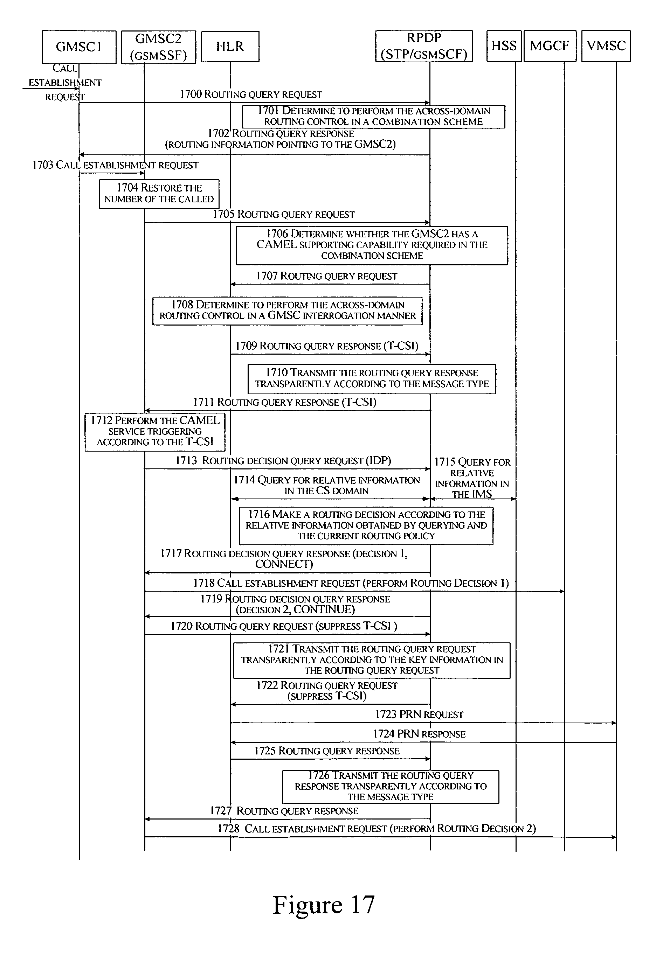

Figure 17 is a flow chart of a process in which the second method, i.e., the signaling interception manner in combination with the GMSC interrogation manner, is adopted to perform the across-domain routing control of a CS domain incoming call.
1700: The GMSC1 of the CS domain sends a routing query request to the HLR upon receiving the call establishment request of a CS domain incoming call.
1701-1702: The STP module in the RPDP intercepts the routing query request and sends the intercepted routing query request directly to the RPDP service logic module as a routing decision query request. Upon receiving the routing decision query request, the RPDP service logic module determines whether GMSC1 fulfills the RPDP interrogation manner requirement according to the CAMEL capability of the GMSC in the routing query request and/or the GMSC signaling point and RPDP local configurations, e.g., determines whether GMSC1 is capable of supporting CAMEL; and the RPDP service logic module will directly return the routing information of GMSC2 that fulfills the RPDP interrogation manner requirement to GMSC1 if GMSC1 fails to fulfill the RPDP interrogation manner requirement, which is the case of present embodiment.

And the above process of determining whether a GMSC fulfills the RPDP interrogation manner requirement may also include the steps of: interacting, by the RPDP service logic module, with the HLR to verify whether the subscriber has subscribed to a terminating CAMEL service and/or whether the subscriber has subscribed to an activated incoming call barring service and/or operator determined incoming call barring service that corresponds to the incoming call; making the routing decision directly through the first method if the subscriber does not subscribe to a terminating CAMEL service or there is an activated incoming call barring service and/or operator determined incoming call barring service that corresponds to the incoming call, and, when the routing decision is to deliver the incoming call via the CS domain and a rejection response from the HLR with the reason of rejection specified is received after forwarding the routing query request to the HLR, making a routing decision again according to the reason of rejection specified in the rejection response, the current routing policy and routing decision-making related information, and sending, if the routing decision made is changed to deliver the incoming call via the IMS, a routing query response to the GMSC through the STP module in the RPDP and returning a virtual MSRN pointing to a CS/IMS interworking gateway MGCF in the routing query response; or, forwarding, if the routing decision is still to deliver the incoming call via the CS domain, the routing query rejection response with the specified reason of rejection to the GMSC through the STP module in the RPDP, and the GMSC1 rejecting the current call request according to the routing query rejection response.
1703: GMSC1 routes the call to GMSC2 according to the received routing information.
1704-1705: GMSC 2 restores the number of the called subscriber according to an agreed number composition scheme and sends the routing query request to the HLR again.
1706-1711: The STP module in the RPDP intercepts the routing query request and sends the intercepted routing query request directly to the RPDP service logic module as a routing decision query request. Upon receiving the routing decision query request, the RPDP service logic module determines whether GMSC2 fulfills the RPDP interrogation manner requirement according to the CAMEL capability of the GMSC in the routing query request and/or the GMSC signaling point and RPDP local configurations, and if GMSC2 fulfills the RPDP interrogation manner requirement which is the case of present embodiment, the RPDP service logic module will forwards the routing query request from the GMSC2 to the HLR, and the HLR returns the T-CSI to the GMSC2 according to the subscriber's subscription through the RPDP service logic module and the STP module in the RPDP.
1712-1713: GMSC2 that supports CAMEL triggers a terminating CAMEL service according to the T-CSI and thus sends a routing decision query request (IDP) to the gsmSCF module in the RPDP.
1714-1716: Upon receiving the routing decision query request, the gsmSCF module in the RPDP forwards the routing decision query request (IDP) to the RPDP service logic module which optionally interacts with the HLR and the HSS respectively according to the current routing policy to query for relative information of the subscriber in the CS and IMS, and makes a routing decision according to the relative information obtained by querying and the current routing policy.
1717-1718: When the routing decision made is to deliver the incoming call via the IMS (Routing Decision 1), the RPDP service logic module returns a CONNECT message which contains a redirection number pointing to a CS/IMS interworking gateway MGCF to GMSC2 through the gsmSCF module in the RPDP, and GMSC2 performs Routing Decision 1 accordingly and routes the call to the MGCF which continues to deliver the incoming call via the IMS.
1719-1728: When the routing decision is to deliver the incoming call via the CS domain (Routing Decision 2), the RPDP service logic module returns a CONTINUE message to GMSC2 through the gsmSCF module in the RPDP, instructing GMSC2 to continue routing the call according to the original called number, and GMSC2 performs Routing Decision 2 accordingly and initiates to the HLR a routing query request with a suppress T-CSI indication. The routing query request is transmitted again through the STP module in the RPDP, which determines to transmit the routing query request transparently to the HLR via the RPDP service logic module according to the signaling message type and key information of the routing query request. The HLR sends a PRN request to the VMSC serving the called currently upon receiving the routing query request, and returns the MSRN returned by the VMSC in a PRN response in a routing query response. The routing query response is transmitted through the RPDP service logic module and the STP module in the RPDP, which determines to transmit the response transparently and directly to GMSC2 according to the signaling message type and key information of the routing query response. GMSC2 accordingly routes the call to the VMSC serving the called currently.

Optionally, the RPDP service logic module may issue, according to the current routing policy and/or routing decision, a Request Report BCSM Event (RRBE) to the GMSC which acts as a gsmSSF before issuing CONTINUE or CONNECT message to GMSC through the gsmSCF module in the RPDP, the RRBE carries configured event detection points including any one of DP 13, DP 14, DP 15 and DP 17, or any combination of them, of which the type is EDP-R, or including DP 18 of which the type is EDP-N. When the GMSC which acts as a gsmSSF in the subsequent process receives a call failure message returned and thus detects that a configured event has occurred, the GMSC submits an event report to the gsmSCF which performs control of the subsequent call procedure according to the event report and instructs the GMSC to release or redirect the call.

It can be seen that in the embodiments of interception manner shown in Figures 16 and 17, the routing query request sent by the GMSC to the HLR is obtained by the RPDP through MAP signaling interception, and the RPDP determines, according to certain policy and the reachability of subscriber in different domains, an enhanced across-domain routing control to route the service request of the service which can be provided in both the CS and the IMS to the called subscriber. Through the interception manner in accordance with the embodiment of the present invention, routing control can be realized without modifying the HLR and even when the interrogation network does not support CAMEL or the subscriber has activated incoming call barring or operator determined incoming call barring that prevents a terminating CAMEL service from being triggered.

Figure 3d is a schematic drawing, based on Figures 3a1, 3a2, 3b and 3c, of a system networking embodiment in which all interrogation manners provided by the present invention are realized. The network in the present embodiment includes the HSS, HLR, RPDP, GMSC, SMS-GMSC, I-CSCF/S-CSCF/AS, in which the routing control entities SMS-GMSC, GMSC and I-CSCF receive service requests to be handled through Interfaces 1, 3 and 7 respectively.

In the present embodiment the RPDP is further divided into an RPDP service logic module, a gsmSCF, an STP and an AS logic function module. The RPDP service logic is used for storing a routing policy, performing logic judgment and interacting with the HLR and the HSS through Interfaces 6 and 9 respectively to obtain routing decision-making related information, and the RPDP service logic module is further used for supporting Interface 13 connected to the OSS and Interface 14 connected to the subscriber so that the routing policy can be configured. The gsmSCF is used for establishing a CAMEL service connection through Interface 5 to the GMSC and performing a CAP signaling interaction with the GMSC to implement the CS domain indirect interrogation manner, mixed interrogation manner and interception interrogation in combination with the indirect interrogation manner. The STP is used for establishing connections to the GMSC and the HLR through Interfaces 4b1 and 4b2 respectively and connections to the SMS-GMSC and the HLR through Interfaces 2b1 and 2b2 so as to perform a MAP signaling interaction between the entities and intercept the routing interrogation interaction messages between the GMSC and the HLR and between the SMS-GMSC and the HLR, thus the interception manner is implemented. The AS in the RPDP is used for establishing a signaling connection to the S-CSCF through Interface 10 and performing an SIP signaling interaction with the S-CSCF to support IMS indirect interrogation manner and mixed interrogation manner.

Moreover, in non-interception manners including the direct, indirect and mixed interrogation manners, the routing control entities SMS-GMSC, GMSC and X-CSCF perform routing query through interfaces (Interfaces 2a, 4a and 8) to the HLR and the HSS.

In the direct interrogation manner, the RPDP service logic module further performs a routing decision query interaction through interfaces (Interfaces 6 and 9) to the HLR and the HSS.

In the direct interrogation manner and when the HSS assists to deliver an IMS incoming session via the CS domain, the HSS further needs to interact with another AS of the system apart from the RPDP through Interface 11 and insert into the AS the MSRN of the subscriber in the CS domain, which is obtained from the routing decision from the RPDP. Therefore, when the incoming call is routed to the S-CSCF according to the routing information returned by the HSS to the I-CSCF, the AS into which the MSRN is inserted performs service control interaction through Interface 12 with the S-CSCF to redirect the call and finally delivers the IMS incoming session via the CS domain.

Finally, it should be noted that, since network architectures and service request routing control methods of the CS domain and IMS in a CDMA system are basically the same, and the capabilities of the MAP and the protocols adopted for intelligent service control are equivalent although there exist slight differences, the CS domain and IMS mentioned in the fore-going description are not limited to the CS domain and IMS of WCDMA system. The method provided by the present invention is also applicable to the across-domain routing control in the CS domain and IMS of CDMA system.

## Claims

1. A method for routing control, applied to a communication system comprising a Circuit Switched (CS) domain and an IP Multimedia Subsystem (IMS), wherein a Routing Policy Decision-making Point (RPDP) connected to an interrogation network unit is set in the communication system and routing policy information is stored in the RPDP, the method comprising:
a. initiating, by the interrogation network unit, a routing decision query to the RPDP upon receiving a service request;
b. making, by the RPDP, a routing decision according to the routing policy information stored in the RPDP and routing decision-making related information, and returning the routing decision made by the RPDP to the interrogation network unit; and
c. performing, by the interrogation network unit, subsequent routing control according to the routing decision received from the RPDP.

2. The method of Claim 1, wherein the routing decision-making related information in step b comprises at least one piece of information selected from the group consisting of:
registration status information of a subscriber to which the service request points in each of the CS domain and the IMS, relative service subscription information of the subscriber in each of the CS domain and the IMS, and other terminating side routing decision-making assistant information.

3. The method of Claim 1, wherein the routing decision-making related information in step b is obtained by the RPDP by querying a subscriber subscription server.

4. The method of Claim 3, wherein the RPDP queries the subscriber subscription server for the routing decision-making related information through a Mobile Application Part (MAP) protocol, and the routing decision-making related information is obtained through a MAP-ANY-TIME-INTERROGATION (ATI) operation or through a MAP-ANY-TIME-SUBSCRIPTION-INTERROGATION operation; or
the subscriber subscription server communicates with the RPDP through a Diameter protocol, and the routing decision-making related information is obtained through a Diameter User-Data-Request / User-Data-Answer (UDR/UDA) operation, or through a Diameter User-Authorization-Request / User-Authorization-Answer (UAR/UAA) operation, or through a Diameter Location-Info-Request /Location-Info-Answer (LIR/LIA) operation; or
the subscriber subscription server communicates with the RPDP through internal message interaction between the internal modules of the same physical entity or through a shared data section method to query for the routing decision-making related information.

5. The method of Claim 3, wherein the RPDP queries a Home Location Register (HLR) in CS domain for the routing decision related information through a MAP ATI operation; the HLR initiates a MAP-PROVIDE-SUBSCRIBER-INFO (PSI) operation to the visited MSC (VMSC) which serves the subscriber currently upon the receipt of a MAP ATI request, and returns an MAP ATI response to the RPDP according to the subscriber information carried by a MAP PSI response from the VMSC.

6. The method of Claim 5, wherein the VMSC which serves the subscriber currently initiates paging a subscriber according to an instruction in the MAP PSI request from the HLR and/or local configuration upon the receipt of the MAP PSI request from the HLR, and returns the subscriber information to the HLR according to the paging result.

7. The method of Claim 1, wherein the routing decision-making related information in step b is stored in the RPDP; and
the subscriber subscription server updates the routing decision-making related information stored in the RPDP through an interface between the subscriber subscription server and the RPDP.

8. The method of Claim 7, wherein the subscriber subscription server communicates with the RPDP through a MAP protocol and the routing decision-making related information is updated through a MAP_UPDATE_LOCATION operation or a MAP-INSERT-SUBSCRIBER-DATA /MAP-DELETE-SUBSCRIBER-DATA operation; or
the subscriber subscription server communicates with the RPDP through a Diameter protocol, and the routing decision-making related information is updated through a Diameter Server-Assignment-Request / Server-Assignment-Answer (SAR/SAA) operation, or through a Diameter Push-Profile-Request /Push-Profile-Answer (PPR/PPA) operation, or through a Diameter Subscribe-Notifications-Request / Subscribe-Notifications-Answer (SNR/SNA) operation and Push-Notification-Request / Push-Notification-Answer (PNR/PNA) operation; or
the subscriber subscription server communicates with the RPDP through internal message interaction between the internal modules of the same physical entity or through a shared data section method to update the routing decision-making related information.

9. The method of Claim 1, further comprising:
configuring, by an operator, the routing policy information through an interface between an Operation Support System (OSS) and the RPDP, and/or
configuring, by a subscriber, the routing policy information through a Ut interface between a UE and the RPDP; wherein:
the configuring comprises: adding, and/or deleting, and/or modifying, and and/or querying, and/or storing.

10. The method of Claim 1, wherein the routing policy information is configured by an operator through an interface between an OSS and the RPDP, the method further comprising:
before the routing policy information is configured,
authenticating, by the RPDP, the identity of the operator, and allowing the operator to configure the routing policy information if the authentication passes;
and/or
the routing policy information is configured by a subscriber through an Ut interface between an RPDP and the UE, the method further comprising:
before the routing policy information is configured,
authenticating, by the RPDP, the identity of the subscriber; and allowing the subscriber to configure the routing policy information if the authentication passes.

11. The method of Claim 9 or 10, further comprising:
configuring, by the operator or the subscriber, forwarding data when Not Reachable and when No Reply at the Visited Mobile Switch Center (VMSC) serving the subscriber currently through the subscriber subscription server, when the routing policy information comprises routing to the IMS in the case that the subscriber is unreachable in the CS domain; wherein
the forwarding data contains a forward-to number pointing to a CS/IMS interworking gateway Media Gateway Control Function (MGCF).

12. The method of Claim 1, wherein the interrogation network unit comprises a Home Location Register (HLR) and a Gateway Mobile Switching Center (GMSC);
the service request is a call establishment request of a CS domain incoming call; and
step a comprises:
a11. sending, by the GMSC, a routing query request to the HLR upon receiving the CS incoming call establishment request;
a12. upon receiving the routing query request,
if a direct interrogation manner is adopted,
sending, by the HLR, the routing decision query request to the RPDP, and then cycle to step b;
if a GMSC interrogation manner is adopted,
returning, by the HLR, to the GMSC a routing query response containing the Terminating-CAMEL Subscription Information (T-CSI) of a called subscriber, and
triggering, by the GMSC, a terminating Customized Applications for Mobile network Enhanced Logic (CAMEL) service according to the T-CSI upon receiving the routing query response, and thus sending the routing decision query request to the RPDP acting as a gsmSCF, and then cycle to step b.

13. The method of Claim 12, further comprising: after the HLR has received the routing query request in step a12, before the direct interrogation manner or the GMSC interrogation manner is adopted, determining, by the HLR, the interrogation manner;
wherein:
the interrogation manner is determined according to pre-configured information, or according to at least one factors selected from the group consisting of: CAMEL support capability of the GMSC contained in the routing query request sent by the GMSC, the status of incoming call barring service of a subscriber recorded in the HLR, the status of operator determined incoming call barring service recorded in the HLR, and local configuration of the HLR.

14. The method of Claim 12, wherein the direct interrogation manner is adopted in step a12, and if the routing decision made by the RPDP is to deliver the CS domain incoming call via the IMS domain, the routing decision further comprises an E.164 number pointing to the CS/IMS interworking gateway MGCF; and
step c comprises:
c11. upon receiving the routing decision returned from the RPDP, if the routing decision made by the RPDP is to deliver the CS domain incoming call via the CS domain, continue with step c12; if the routing decision made by the RPDP is to deliver the CS domain incoming call via the IMS, continue with step c13;
c12. sending, by the HLR, a MAP_PROVIDE_ROAMING_NUMBER (PRN) request to the VMSC serving the called subscriber currently, and returning, by the HLR, a Mobile Station Roaming Number (MSRN), returned by the VMSC in a PRN response, to the GMSC in the routing query response; and routing, by the GMSC, the CS domain incoming call to the VMSC serving the called subscriber currently according to the MSRN; and terminate the procedure;
c13. returning, by the HLR, the E.164 number pointing to a CS/IMS interworking gateway MGCF, provided by the RPDP in the routing decision, to the GMSC in the routing query response,
routing, by the GMSC, the CS domain incoming call to the MGCF according to the E.164 number, and
delivering, by the MGCF, the CS domain incoming call to the IMS; and terminate the procedure.

15. The method of Claim 12, wherein the GMSC interrogation manner is adopted in step a12; if the routing decision is to deliver the CS domain incoming call via the IMS, the routing policy information in step b further comprises an E.164 number pointing to the CS/IMS interworking gateway MGCF; and
step c comprises:
c21. upon receiving the routing decision by the GMSC, if the routing decision is to deliver the CS domain incoming call via the CS domain, continue with step c22, if the routing decision is to deliver the CS domain incoming call via the IMS, continue with step c23;
c22. initiating, by the GMSC, to the HLR a routing query request with a suppress T-CSI indication,
sending, by the HLR, a PRN request to the VMSC serving the called subscriber currently upon receiving the routing query request,
returning, by the HLR, the MSRN, returned by the VMSC in a PRN response, to the GMSC in the routing query response,
routing, by the GMSC, the call to the VMSC serving the called subscriber according to the MSRN; and terminate the procedure;
c23. routing, by the GMSC, the CS domain incoming call to the MGCF according to the .164 number provided by the RPDP in the routing decision and pointing to the CS/IMS interworking gateway MGCF upon receiving the routing decision; and
delivering, by the MGCF, the CS domain incoming call to the IMS; and terminate the procedure.

16. The method of Claim 1, wherein the interrogation network unit comprises an HLR and an SMS-GMSC, and the service request is a terminating short message; and
step a comprises:
a21. sending, by the SMS-GMSC, a short message routing query request to the HLR upon receiving the terminating short message; and
a22. sending, by the HLR, a routing decision query request directly to the RPDP upon receiving the short message routing query request; and
the routing decision made by the RPDP in step b is to deliver the terminating short message via the CS domain or IMS; if the routing decision made by the RPDP is to deliver the terminating short message via the IMS, the routing decision further comprises: address information of a CS/IMS short message interworking gateway;
step c comprises:
c31. upon receiving the routing decision from the RPDP by the HLR, if the routing decision made by the RPDP is to deliver the terminating short message via the CS domain, continue with step c32; if the routing decision made by the RPDP is to deliver the terminating short message via the IMS, continue with step c33;
c32. returning, by the HLR, address information of a VMSC serving the called subscriber currently to the SMS-GMSC in a short message routing query response, and
routing, by the SMS-GMSC, the terminating short message to the VMSC serving the called subscriber currently; and terminate the procedure;
c33. returning, by the HLR, address information of a CS/IMS short message interworking gateway, returned by RPDP in the routing decision, to the SMS-GMSC in the short message routing query response,
routing, by the SMS-GMSC, the terminating short message to the CS/IMS short message interworking gateway, and
performing, by the CS/IMS short message interworking gateway, interworking and short message routing in the IMS.

17. The method of Claim 1, wherein the interrogation network unit comprises an Home Subscriber Server (HSS) and a Call Session Control Function (CSCF), the CSCF comprises an Interrogating-CSCF (I-CSCF) and a Serving-CSCF (S-CSCF), and the service request is a session establishment request of an IMS incoming session, hereafter referring to IMS incoming session establishment request, and
step a comprises:
a31. sending, by the I-CSCF, a routing query request to the HSS upon receiving the IMS incoming session establishment request;
a32. upon receiving the routing query request,
if a direct interrogation manner is adopted,
sending, by the HSS, a routing decision query request to the RPDP, and continue with step b;
if an S-CSCF interrogation manner is adopted, continue with step a33;
a33. returning, by the HSS, to the I-CSCF a routing query response containing the domain name of the S-CSCF allocated for the called subscriber, or the S-CSCF capability information needed for the I-CSCF for performing the S-CSCF assignment,
a34. forwarding, by the I-CSCF, upon receiving the routing query response, the IMS service request to the S-CSCF determined according to the domain name of the S-CSCF allocated for the called subscriber, or the S-CSCF capability information needed for the I-CSCF for performing the S-CSCF assignment returned by the HSS, and
performing, by the S-CSCF, IMS service triggering according to IMS service triggering data in subscriber's subscription data, and forwarding the IMS service request as the routing decision query request to the RPDP acting as an Application Server (AS), and continue with step b.

18. The method of Claim 17, further comprising:
in step 32, after the HSS has received the routing query request, and before the direct interrogation manner or the S-CSCF interrogation manner is adopted, determining, by the HSS, the interrogation manner; and
the interrogation manner is determined by according to local configuration of the HSS; or
when the routing query request in step a31 further comprises the service attributes and related information contained in the routing query request extended by the I-CSCF, determining, by the HSS, the interrogation manner in step 32 according to at least one of local configuration of the HSS and service attributes contained in the extended routing query request by the I-CSCF.

19. The method of Claim 17, wherein the direction interrogation manner is adopted in step a32; and if the routing decision is to deliver the IMS incoming session via the CS domain, the routing decision information further comprises: a domain name of the CS/IMS interworking gateway MGCF; and
step c comprises:
c41. upon receiving the routing decision by the HSS,
if the routing decision is to deliver the IMS incoming session via the CS domain, continue with step c42; if the routing decision is to deliver the IMS incoming session via the IMS, continue with c43;
c42. returning, by the HSS, a domain name of the CS/IMS interworking gateway MGCF, returned to the HSS by the RPDP, as the S-CSCF domain name, to the I-CSCF in a routing query response,
forwarding, by the I-CSCF, the IMS service request to the MGCF regarded as the S-CSCF, and
delivering, by the MGCF, the IMS incoming session to the CS domain; and terminate the procedure;
c43. returning, by the HSS, the domain name of the S-CSCF allocated for the called subscriber, or the S-CSCF capability information needed for the I-CSCF for performing the S-CSCF assignment returned by the HSS to the I-CSCF in a routing query response,
forwarding, by the I-CSCF, the IMS service request to the S-CSCF determined according to the domain name of the S-CSCF allocated for the called subscriber, or the S-CSCF capability information needed for the I-CSCF for performing the S-CSCF assignment returned by the HSS, and
performing, by the S-CSCF, IMS service triggering and subsequent IMS routing control; and terminate the procedure.

20. The method of Claim 17, wherein the direct interrogation manner is adopted in step 32, the routing decision in step b is to deliver the IMS incoming session via the CS domain, and the routing decision comprises an E.164 number pointing to a CS/IMS interworking gateway MGCF; and
step c comprises:
c51. upon receiving the routing decision,
inserting, by the HSS through a Push-Notification-Request operation, the E.164 number pointing to the CS/IMS interworking gateway MGCF and returned by the RPDP in the routing decision, into an AS which will be triggered in subsequent service process;
returning, in the routing query response, by the HSS, the domain name of the S-CSCF allocated for the called subscriber, or the S-CSCF capability information needed for the I-CSCF for performing the S-CSCF assignment returned by the HSS to the I-CSCF;
c52. forwarding, by the I-CSCF, the IMS incoming session establishment request to the S-CSCF determined according to the domain name of the S-CSCF allocated for the called subscriber, or the S-CSCF capability information needed for the I-CSCF for performing the S-CSCF assignment returned by the HSS;
c53. performing, by the S-CSCF, the IMS service triggering, and under the control of the AS into which the E.164 number is inserted, routing the IMS incoming session establishment request, to the MGCF via a BGCF, and
performing, by the MGCF, subsequent interworking and CS domain routing control; and terminate the procedure.

21. The method of Claim 17, wherein the S-CSCF interrogation manner is adopted in step a32 and the routing decision made by the RPDP in step b is to deliver the IMS incoming session via the CS domain;
the routing decision comprises: an E.164 number pointing to a CS/IMS interworking gateway MGCF;
the process of returning the routing decision to the interrogation network unit comprises:
modifying, by the RPDP, the Request-URI in the IMS incoming session establishment request received as the routing decision query request from the S-CSCF into the E.164 number pointing to the CS/IMS interworking gateway MGCF, and
sending the modified IMS incoming session establishment request to the S-CSCF; and
step c comprises:
routing, by the S-CSCF, the IMS incoming session establishment request to the MGCF via a BGCF according to the E.164 number pointing to the CS/IMS interworking gateway MGCF in the Request-URI in the modified IMS incoming session establishment request returned by the RPDP acting as the AS, and
performing, by the MGCF, interworking and routing in the CS domain.

22. The method of Claim 17, wherein the S-CSCF interrogation manner is adopted in step a32, and the routing decision made by the RPDP is to deliver the IMS incoming session via the IMS in step b;
the process of returning the routing decision to the interrogation network unit comprises:
sending, by the RPDP, the IMS incoming session establishment request to the S-CSCF without modifying the Request-URI in the IMS incoming session establishment request received as the routing decision query request from the S-CSCF; and
step c comprises:
performing, by the S-CSCF, subsequent IMS service triggering according to the Request-URI unmodified in the IMS incoming session establishment request returned by the RPDP acting as the AS, and performing routing in the IMS.

23. The method of Claim 1, wherein the interrogation network unit comprises an HLR and an SMS-GMSC, and the service request is a terminating short message; and
step a comprises:
a41. sending, by the SMS-GMSC, a short message routing query request to the HLR upon receiving the terminating short message; and
a42. intercepting, by the RPDP, the short message routing query request, and treating the short message routing query request as a routing decision query request; and continue with step b.

24. The method of Claim 23, wherein the routing decision made by the RPDP is to deliver the terminating short message via the IMS in step b;
step b comprises:
providing, by the RPDP, the routing decision by returning a short message routing query response to the SMS-GMSC directly, wherein the routing decision comprises address information of a CS/IMS short message interworking gateway; and
step c comprises:
routing, by the SMS-GMSC, the terminating short message to the CS/IMS short message interworking gateway according to the short message routing query response; and
performing, by the CS/IMS short message interworking gateway, subsequent interworking and short message routing in the IMS.

25. The method of Claim 23, wherein the routing decision made by the RPDP is to deliver the terminating short message via the CS domain in step b;
the process of returning the routing decision to the interrogation network unit in step b comprises:
forwarding, by the RPDP, the short message routing query request from the SMS-GMSC to the HLR; and
step c comprises:
returning, by the HLR, a short message routing query response containing the address information of the VMSC serving the called subscriber currently to the RPDP;
forwarding, by the RPDP, the short message routing query response to the SMS-GMSC; and
routing, by the SMS-GMSC, the terminating short message to the VMSC serving the called subscriber currently according to the short message routing query response.

26. The method of Claim 1, wherein the interrogation network unit comprises an HLR and a GMSC, and the service request is a call establishment request of a CS domain incoming call, hereafter referring to CS incoming call establishment request;
step a comprises:
c 51. sending, by the GMSC, a routing query request to the HLR upon receiving the CS incoming call establishment request; and
c52. intercepting, by the RPDP, the routing query request, and treating the routing query request as the routing decision query request, and continue with step b.

27. The method of Claim 26, wherein the routing decision made by the RPDP is to deliver the CS domain incoming call via the CS domain in step b;
the process of returning the routing decision to the interrogation network unit in step b comprises:
forwarding, by the RPDP, the routing query request from the GMSC to the HLR; and
step c comprises:
c61. communicating, by the HLR, with the VMSC serving the called subscriber currently to obtain an MSRN, and sending the MSRN contained in a routing query response to the RPDP;
c62. forwarding, by the RPDP, the routing query response containing the MSRN to the GMSC, and
routing, by the GMSC, the CS domain incoming call to the VMSC serving the called subscriber currently according to the MSRN.

28. The method of Claim 26, wherein the routing decision made by the RPDP in step b is to deliver the CS domain incoming call via the CS domain, and for the CS domain incoming call in the CS domain, the subscriber has at least one incoming call barring service selected from the group consisting of: an activated incoming call barring service and an operator determined incoming call barring service;
the process of returning the routing decision to the interrogation network unit in step b comprises:
forwarding, by the RPDP, the routing query request from the GMSC to the HLR; and
step c comprises:
c71. sending, by the HLR, a routing query rejection response containing a rejection reason to the RPDP according to subscriber's subscription;
c72. according to the rejection reason contained in the routing query rejection response,
making, by the RPDP, the routing decision again according to the routing policy information and the routing decision-making related information stored in the CS/IMS domain; and
if the routing decision made by the RPDP is to deliver the CS domain incoming call via the IMS,
sending, by the RPDP, to the GMSC, a routing query response containing an E.164 number pointing to a CS/IMS interworking gateway MGCF;
if the routing decision made by the RPDP is still to deliver the CS domain incoming call via the CS domain,
forwarding, by the RPDP, the routing query rejection response containing the rejection reason to the GMSC, and
rejecting, by the GMSC, the CS incoming call establishment request according to the routing query rejection response.

29. The method of Claim 26, wherein when the routing decision made by the RPDP is to deliver the CS domain incoming call via the IMS in step b, the process of returning the routing decision to the interrogation network unit in step b comprises:
sending, by the RPDP, the routing query response directly to the GMSC and returning an E.164 number pointing to a CS/IMS interworking gateway MGCF in the routing query response; and
step c comprises:
routing, by the GMSC, the CS domain incoming call to the MGCF according to the E.164 number upon receiving the routing query response, and performing, by the MGCF, subsequent interworking and routing in the IMS.

30. The method of Claim 1, wherein when the interrogation network unit comprises an HLR and more than one GMSC and the service request is a call establishment request of a CS domain incoming call, hereafter referring to CS incoming call establishment request, and step a comprises:
a60. sending, by a current GMSC, a routing query request to the HLR upon receiving the CS incoming call establishment request;
a61. intercepting, by the RPDP, the routing query request which is sent by the current GMSC to the HLR, checking whether the current GMSC fulfills an RPDP interrogation manner requirement; and
if the current GMSC fulfills the RPDP interrogation manner requirement, continue with step a62;
if the current GMSC does not fulfill the RPDP interrogation manner requirement,,
returning, by the RPDP, the routing information of a second GMSC which fulfills the RPDP interrogation manner requirement to the current GMSC, routing, by the current GMSC, the CS domain incoming call to the second GMSC, sending, by the second GMSC acting as the current GMSC, the routing query request to the HLR, and repeating step a61;
a62. obtaining, by the RPDP, a T-CSI from the HLR, and returning the T-CSI to the current GMSC, performing, by the current GMSC, the terminating service triggering according to the T-CSI, and thus sending the routing decision query request to the RPDP; and continue with step b.

31. The method of Claim 30, after the routing query request sent by the current GMSC to the HLR is intercepted in step a61 and before checking whether the GMSC fulfills the RPDP interrogation manner requirement, the method further comprising:
a611. forwarding, by the RPDP, the routing query request to the HLR directly, or communicating, by the RPDP, with the HLR to check whether the subscriber has subscribed to the terminating CAMEL service, and/or the subscriber has an activated incoming call barring service, and/or the subscriber has an activated operator determined incoming call barring service for the CS domain incoming call in the CS domain;
if the checking result is selected from the group consisting of that: the subscriber has not subscribed to the terminating CAMEL service, the subscriber has an activated incoming call barring service, and the subscriber has an activated operator determined incoming call barring service for the CS domain incoming call in the CS domain, making, by the RPDP, the routing decision directly;
if the routing decision made by the RPDP is to deliver the CS domain incoming call via the CS domain, forwarding, by the RPDP, the routing query request to the HLR; otherwise, continuing, by the RPDP, the process of checking whether the GMSC fulfills the RPDP interrogation manner requirement, and performing different handling according to the checking result;
a622. if a rejection response containing a rejection reason returned by the HLR is received by the RPDP after forwarding the routing query request,
making, by the RPDP, the routing decision again according to the routing policy information and the routing decision-making related information stored in the CS/IMS domain according to the rejection reason contained in the rejection response;
if the routing decision made by the RPDP is to deliver the CS domain incoming call via the IMS,
sending a routing query response to the GMSC and returning an E.164 number pointing to a CS/IMS interworking gateway MGCF in the routing query response to the GMSC; and
if the routing decision made by the RPDP is still deliver the CS domain incoming call via the CS domain,
forwarding, by the RPDP, the routing query rejection response to the GMSC, and
rejecting, by the GMSC, the CS incoming call establishment request according to the rejection response; and terminate the procedure.

32. The method of Claim 30, wherein the routing decision made by the RPDP is to deliver the CS domain incoming call via the IMS or CS domain in step b;
if the routing decision made by the RPDP is to deliver the CS domain incoming call via the IMS, the routing decision comprises an E.164 number pointing to a CS/IMS interworking gateway MGCF, and step c comprises:
routing, by the current GMSC, the CS domain incoming call to the MGCF according to the E.164 number comprised in the routing decision, and performing, by the MGCF, interworking and routing in the IMS; and
if the routing decision made by the RPDP is to deliver the CS domain incoming call via the CS domain, step c comprises:
c81. initiating, by the current GMSC, to the HLR the routing query request with a suppress T-CSI indication, wherein the routing query request again passes through the RPDP acting as a Signaling Transfer Point (STP), and transmitting transparently, by the RPDP, the routing query request to the HLR according to at least one of: the signaling message type of the routing query request and the key information in the routing query request; and
c82. sending, by the HLR, a PRN request to the VMSC serving the called subscriber, returning, by the HLR, the MSRN, returned by the VMSC in a PRN response, in a routing query response to the RPDP acting as the STP, transmitting transparently, by the RPDP, the routing query response to the current GMSC according to at least one of: the message type of the routing query response and the key information in the routing query response, and routing, by the current GMSC, the CS domain incoming call to the VMSC serving the called subscriber.

33. The method of Claim 30, wherein the routing information of the second GMSC that fulfills the RPDP interrogation manner requirement in step a61 is chosen at random from the route information saved in the RPDP of the GMSCs that fulfill the RPDP interrogation manner requirement, or is chosen according to predetermined priority level.

34. The method of Claim 30, wherein the process of checking whether the GMSC fulfills the RPDP interrogation manner requirement in step a61 comprises:
checking whether the GMSC is capable of supporting CAMEL according to a special information element indication in the routing query request sent by the GMSC; or
checking whether the Origination Signaling Point Code contained in the routing query request sent by the GMSC is coincident with the Signaling Point Code configured in the RPDP.

35. The method of Claim 1, wherein the interrogation network unit is a network unit in the CS domain and the service request is a call establishment request of a CS domain incoming call, hereafter referring to CS incoming call establishment request; when the routing decision made by the RPDP is to deliver the CS domain incoming call via the IMS in step b, the routing decision comprises: an E.164 number pointing to a CS/IMS interworking gateway MGCF, and the E.164 number is composed as a virtual Mobile Station Roaming Number (MSRN) according to a roaming number composition scheme based on a local configured MGCF number; and
step c comprises:
c91. forwarding, by the GMSC in the interrogation network unit of the CS domain, the CS incoming call establishment request to the CS/IMS interworking gateway MGCF according to the virtual MSRN; and
c92. restoring, by the MGCF, subscriber's Mobile Station International ISDN Number (MSISDN) according to the virtual MSRN, performing CS/IMS interworking of the CS domain incoming call to establish a CS-IMS interworking call, and routing the CS domain incoming call to the IMS.

36. The method of Claim 35, wherein:
the process of returning the routing decision to the interrogation network unit in step b comprises:
initiating, by the RPDP, a PRN operation to the MGCF, obtaining the virtual MSRN which is allocated by the MGCF, including the virtual MSRN in the routing decision to be returned to the interrogation network unit; and
recording, by the MGCF, the relation between the allocated virtual MSRN and the MSISDN of the subscriber; and
step 92 comprises:
restoring, by the MGCF, the MSISDN according to the virtual MSRN in the incoming call signaling and the recorded relation between the allocated virtual MSRN and the MSISDN of the subscriber.

37. The method of Claim 35, wherein:
the process of returning the routing decision to the interrogation network unit in step b comprises:
generating, by the RPDP, the virtual MSRN according to the MGCF information and the MSISDN information of the subscriber, returning the routing decision carrying the virtual MSRN to the interrogation network unit; and
step c92 comprises:
restoring, by the MGCF, the MSISDN according to the virtual MSRN in the CS incoming call establishment request and an agreed virtual MSRN composition scheme.

38. The method of Claim 35, wherein
step b further comprises:
storing, by the RPDP, the routing decision made by the RPDP of the CS domain incoming call, and
the process of routing the CS domain incoming call to the IMS in step c92 comprises:
c9211. sending, by the interrogation network unit of the IMS, a routing decision query request to the RPDP; and
c9212. returning, by the RPDP, upon receiving the routing decision query request, the routing decision according to the routing decision of the CS domain incoming call stored in step b.

39. The method of Claim 35, wherein the process of routing the CS domain incoming call to the IMS in step c92 comprises:
c9221. adding, by the MGCF, the indication of suppress routing decision query in the IMS incoming session establishment request obtained by the CS/IMS interworking, and
c9222. directly performing, by the interrogation network unit of the IMS, the standard CS-IMS interworking session establishment procedure without querying the RPDP according to the indication of suppress routing decision query.

40. The method of Claim 1, wherein the interrogation network unit is a network unit in the IMS and the service request is a session establishment request of an IMS incoming session, hereafter referring to IMS incoming session establishment request, the routing decision made by the RPDP is to deliver the IMS incoming session via the CS domain in step b, and the routing decision comprises an MSRN of the called subscriber in the CS domain; and
the process of returning the routing decision to the interrogation network unit in step b comprises:
sending, by the RPDP, a routing query to the HLR, sending, by the HLR, a PRN request to the MSC/VLR serving the subscriber currently, returning, by the HLR, to the RPDP a routing query response containing the MSRN returned by the MSC/VLR in a PRN response, and returning, by the RPDP, the routing decision containing the MSRN to the interrogation network unit.

41. The method of Claim 40, wherein step c comprises:
c1001. returning, by the HSS contained in the interrogation network unit of the IMS, the routing query response containing the MSRN obtained from the RPDP in the extended signaling to the I-CSCF upon receiving the routing decision;
c1002. forwarding, by the I-CSCF, the IMS incoming session establishment request to the BGCF upon receiving the routing query response;
c1003. sending, after having chosen an MGCF by the BGCF, the IMS incoming session establishment request to the MGCF;
c1004. performing, by the MGCF receiving the IMS incoming session establishment request, IMS/CS interworking of the IMS incoming session upon receiving the IMS incoming session establishment request, and forwarding the IMS incoming session to the CS domain,
determining, by the CS domain, that the MSRN belongs to MSRN segment, and routing the IMS incoming session directly to the VMSC serving the subscriber currently; and
c1005. paging and connecting, by the VMSC, the called subscriber, and continuing to establish an IMS-CS interworking call.

42. The method of Claim 40, wherein step c comprises:
c1101. returning, by the HSS contained in the interrogation network unit of the IMS, upon receiving the routing decision, the routing query response to the I-CSCF; wherein the routing information sent to the I-CSCF carries the S-CSCF domain name allocated for the called subscriber by the IMS domain in the case that the called subscriber registers to the IMS domain, or carries the S-CSCF domain name allocated for the called subscriber by the IMS domain in the case that the called subscriber does not register to the IMS domain, or carries the S-CSCF capability requirement information for allocating the S-CSCF by the I-CSCF;
c1102. setting, by the HSS, through an Sh interface, data for forwarding the IMS incoming session to the MSRN obtained form the RPDP, at an AS which will be triggered to control the IMS incoming session according to subscriber's subscription data;
c1103. forwarding, by the I-CSCF, the IMS incoming session establishment request to the S-CSCF determined according to the received routing query response; triggering, by the S-CSCF, the IMS incoming session to the AS at which the data has been set for forwarding the IMS incoming session to the MSRN;
c1104. modifying, by the AS, the session destination address of the IMS incoming session into the MSRN of the called subscriber in the CS domain according to the data set by the HSS, forwarding, by the S-CSCF, the IMS incoming session to the BGCF, according to the analysis of the session destination address of the IMS incoming session modified by the AS;
c1105. sending, by the BGCF, the IMS incoming session establishment request to an MGCF after having chosen the MGCF;
c1106. performing, by the MGCF which receives the IMS incoming session establishment request, IMS/CS interworking of the IMS incoming session, and forwarding the IMS incoming session to the CS domain, determining, by the CS domain, that the MSRN belongs to MSRN segment, and routing the IMS incoming session directly to the VMSC serving the subscriber currently; and
c1107. paging and connecting, by the VMSC, the called subscriber and continuing to establish an IMS-CS interworking call.

43. The method of Claim 40, wherein step c comprises:
c1201. forwarding, by the S-CSCF contained in the interrogation network unit of the IMS, the IMS incoming session to the BGCF according to the MSRN, upon receiving the routing decision;
c1202. sending, upon having chosen an MGCF by the BGCF, an IMS incoming session establishment request to the MGCF;
c1203. performing, by the MGCF which receives the IMS incoming session establishment request, IMS/CS interworking of the IMS incoming session, and forwarding the IMS incoming session to the CS domain; determining, by the CS domain, that the MSRN belongs to MSRN segment, and routing the IMS incoming session directly to the VMSC serving the subscriber currently; and
c1204. paging and connecting, by the VMSC, the called subscriber and continuing to establish an IMS-CS interworking call.

44. The method of Claim 1, wherein the interrogation network unit is a network unit in the IMS and the service request is the IMS incoming session establishment request of an IMS incoming session, and when the routing decision made by the RPDP is to deliver the IMS incoming session via the CS domain in step b, the routing decision comprises MGCF information selected from the group consisting of: the number of the MGCF, the serial number of the MGCF and the domain name of the MGCF; and
step c comprises:
c1301. returning, by the HSS contained in the interrogation network unit of the IMS, a routing information containing the MGCF domain name obtained from the MGCF information to the I-CSCF upon receiving the routing decision;
c1302. forwarding, by the I-CSCF, the IMS incoming session establishment request to the MGCF upon receiving the routing information;
c1303. performing, by the MGCF, IMS/CS interworking of the IMS incoming session upon receiving the IMS incoming session establishment request and initiating a CS routing query directly to the HLR according to the subscriber number segment and local configuration;
c1304. initiating, upon receiving the CS routing query, by the HLR, a PRN operation to the VMSC serving the subscriber currently according to the originating signaling point of the CS routing query and local configuration without querying for routing decision, and returning the MSRN obtained from the PRN response to the MGCF;
c1305. routing, by the MGCF, according to MSRN analysis, the IMS incoming session to the VMSC serving the subscriber currently; and
paging and connecting, by the VMSC, the called subscriber, and continuing to establish an IMS-CS interworking call.

45. The method of Claim 44, further comprising:
after the MGCF initiates the CS routing query directly to the HLR,
returning, by the HLR, subscriber's T-CSI according to subscriber subscription; and
performing, by the MGCF, an intelligent service triggering of the subscriber at the terminating side in the CS domain according to the subscriber's T-CSI returned by the HLR; and
after a SCP indicates continuing the call connection,
initiating, by the MGCF, to the HLR a CS routing query with suppresses T-CSI indication; and continue step c1304.

46. The method of any one of Claims 41 to 46, further comprising:
after routing the call in the CS domain to the VMSC serving the subscriber currently in step c,
triggering, at the terminating office through VT-CSI subscription, the intelligent service of the subscriber at the terminating side in the CS domain.

47. A system for routing control, applied to a communication system comprising a Circuit Switched (CS) domain and an IP Multimedia Subsystem (IMS), comprising an interrogation network unit and a Routing Policy Decision-making Point (RPDP), wherein:
the interrogation network unit is connected to the RPDP, and is capable of receiving a service request destined to a subscriber in the communication network, querying the RPDP for a routing decision, and performing the subsequent routing control for the service request according to the routing decision returned by the RPDP; and
the RPDP is capable of storing routing policy information, making the routing decision according to the routing policy information and routing decision-making related information, and returning the routing decision to the interrogation network unit.

48. The system of Claim 47, wherein the RPDP comprises an interface with an Operation Support System (OSS); the interface is capable of receiving operation signals initiated by an operator to perform at least one operation of the routing policy information stored in the RPDP; the at least one operation is selected from the group consisting of: adding, deleting, querying, storing and modifying.

49. The system of Claim 47, wherein the RPDP comprises an interface with a subscriber's terminal; the interface is capable of receiving operation signals initiated by the subscriber through the subscriber's terminal to perform at least one operation of the routing policy information stored in the RPDP; the at least one operation is selected from the group consisting of: adding, deleting, querying, storing and modifying.

50. The system of Claim 47, wherein the interrogation network unit comprises a subscriber subscription server and a routing control entity; and
the subscriber subscription server is selected from the group consisting of: a Home Location Register (HLR) of the CS domain, a Home Subscriber Server (HSS) of the IMS, and a physical entity composed of both the HLR and the HSS, and is capable of storing and providing the routing decision-making related information for the RPDP.

51. The system of Claim 50, wherein the RPDP is selected from the group consisting of: an independent physical entity, a logical entity embedded in the HLR of the CS domain, a logical entity embedded in the HSS of the IMS, and a logical entity embedded in a physical entity composed of both the HLR and the HSS; and
the subscriber subscription server is capable of performing signaling interaction with the RPRP through at least one protocol selected from the group consisting of a Mobile Application Part (MAP) protocol and a Diameter protocol if the RPDP is an independent entity; and
the RPDP is capable of communicating with the subscriber subscription server through an internal message interaction between the internal modules of the same physical entity or through a shared data section method if the RPDP is embedded in the subscriber subscription server.

52. The system of Claim 50, wherein:
the service request destined to the subscriber is a session/call establishment request or a terminating short message from the originating side, and the routing control entity is a GMSC, or a CSCF, or an SMS-GMSC; and
the subscriber subscription server is capable of directly querying the RPDP for the routing decision upon receiving a routing query request from the routing control entity, and providing the routing control entity with routing information determined according to the routing decision; or subscriber subscription server is capable of returning routing query result information to the routing control entity according to the subscriber's subscription data and the current status/location information of the subscriber upon receiving a routing query request from the routing control entity; and
the routing control entity is capable of sending the routing query request to the subscriber subscription server upon receiving the service request destined to the subscriber, and performing routing control according to the routing decision upon receiving the routing information determined according to the routing decision returned by the subscriber subscription server; or the routing control entity is capable of sending the routing decision query request to the RPDP upon receiving the routing query result information returned by the subscriber subscription server, and performing routing control according to the routing decision returned by the RPDP.

53. The system of Claim 52, wherein the subscriber subscription server is further capable of determining whether to adopt the manner in which the subscriber subscription server directly queries the RPDP for the routing decision upon receiving the routing query request from the routing control entity and provides the routing control entity with the routing information which is determined according to the routing decision, or to adopt the manner in which the subscriber subscription server returns the routing query result information to the routing control entity according to the subscriber's subscription data and the current status/location information of the subscriber;
wherein the interrogation manner is determined according to at least one factor selected from the group consisting of: CAMEL support capability of the routing control entity contained in the routing query request sent by the routing control entity, the status of incoming call barring service of the subscriber recorded in the subscriber subscription server, the status of operator determined incoming call barring service recorded in the subscriber subscription server, and local configuration of the subscriber subscription server.

54. The system of Claim 53, wherein the routing control entity is further capable of sending to the subscriber subscription server the routing query request expanded to contain the service attribute of the service request and related information, according to which the subscriber subscription server may choose a routing decision interrogation manner.

55. The system of Claim 52 or 53, wherein the routing control entity is a GMSC which communicates with the RPDP through a CAMEL Application Part (CAP) protocol interface and the service request of the subscriber is a CS incoming call establishment request; and
the GMSC is further capable of triggering a terminating Customized Applications for Mobile network Enhanced Logic (CAMEL) service according to CAMEL subscription information provided by the subscriber subscription server in the routing query result information, and thus sending the routing decision query request to the RPDP, and performing routing control according to the routing decision made by the RPDP.

56. The system of Claim 52 or 53, wherein the routing control entity is a Call Session Control Function (CSCF) and the service request of the subscriber is an IMS incoming session establishment request;
the CSCF further comprises an Interrogating-CSCF (I-CSCF) and a Serving-CSCF (S-CSCF);
the I-CSCF is further capable of determining the S-CSCF according to a domain name of the S-CSCF allocated for the called subscriber, or the S-CSCF capability information needed for the I-CSCF for performing the S-CSCF assignment returned by the HSS, and routing the IMS incoming session establishment request to the S-CSCF; and
the S-CSCF is further capable of communicating with the RPDP through a Session Initiation Protocol (SIP) protocol interface, triggering an IMS terminating service according to the IMS service triggering data in the subscriber's subscription data, and thus sending the routing decision query request to the RPDP, and performing routing control according to the routing decision made by the RPDP.

57. The system of Claim 50, wherein:
the service request destined to the subscriber is a call establishment request or a terminating short message from the originating side of short message; the routing control entity is a GMSC or an SMS-GMSC; the routing control entity is capable of communicating with the RPDP through a MAP protocol interface, and the RPDP is capable of communicating with the subscriber subscription server of the CS domain through the MAP protocol interface;
the routing control entity is capable of sending a routing query request to the subscriber subscription server upon receiving the service request destined to the subscriber, and performing routing control according to the routing decision returned by the RPDP; and
the RPDP is further capable of intercepting the routing query request sent by the routing control entity to the subscriber subscription server, using the intercepted routing query request as the routing decision query request, determining routing information according to the routing decision made by RPDP, and returning the routing information as the routing decision to the routing control entity.

58. The system of Claim 57, wherein the RPDP makes the routing decision to deliver the service request via the CS domain;
the RPDP is further capable of sending the intercepted routing query request directly to the subscriber subscription server, and obtaining the routing information from the subscriber subscription server;
the subscriber subscription server is further capable of providing the routing information upon receiving the routing query sent by the RPDP;
if the service request is a terminating short message, and the routing information comprises the number of the VMSC serving the subscriber currently; and
if the service request is a CS incoming call establishment request, and the routing information comprises an MSRN, and the subscriber subscription server is further capable of obtaining the MSRN as the routing information.

59. The system of Claim 57, wherein the service request is a CS incoming call establishment request, the routing control entity is a GMSC; when the routing decision is to deliver the service request via the IMS, the routing information is a virtual MSRN pointing to a CS/IMS interworking gateway MGCF;
the RPDP is further capable of sending to the GMSC a routing query response including the virtual MSRN pointing to the CS/IMS interworking gateway MGCF; and
the GMSC is capable of routing the CS domain incoming call to the MGCF which performs the subsequent routing in the IMS, according to the virtual MSRN pointing to the CS/IMS interworking gateway MGCF, upon receiving the routing query response sent by the RPDP.

60. The system of Claim 57, wherein the service request is a terminating short message, the routing control entity is an SMS-GMSC; when the routing decision is to deliver the service request via the IMS, the routing information is address information of the CS/IMS short message interworking gateway; and
the RPDP is further capable of sending a short message routing query response directly to the SMS-GMSC and returning the address information of the CS/IMS short message interworking gateway to the SMS-GMSC through a short message routing query response;
the SMS-GMSC is capable of routing the terminating short message to the CS/IMS short message interworking gateway which performs the subsequent routing in the IMS, upon receiving the short message routing query response sent by the RPDP.

61. The system of Claim 57, wherein the service request is a CS incoming call establishment request, the routing control entity is a GMSC; when the routing decision is to deliver a CS incoming call via the CS domain and the subscriber has at least one incoming call barring service selected from the group consisting of: an activated incoming call barring service and an operator determined incoming call barring service for the CS incoming call,
the RPDP is further capable of forwarding the routing query request sent from the GMSC to the subscriber subscription server, and making the routing decision again according to a routing query rejection reason in a rejection response returned by the subscriber subscription server, routing policy information and routing decision-making related information; capable of sending a routing query response to the GMSC including a virtual MSRN pointing to a CS / IMS interworking gateway MGCF if the routing decision is changed to deliver the CS incoming call via the IMS; and capable of forwarding the routing query rejection response containing the rejection reason, which is returned by the subscriber subscription server, to the GMSC, if the routing decision is still to deliver the CS incoming call via the CS domain;
the GMSC is capable of routing the CS domain incoming call to the MGCF which performs the subsequent routing in the IMS, according to the virtual MSRN pointing to the CS/IMS interworking gateway MGCF if receiving the routing query response sent by the RPDP, and capable of rejecting the CS incoming call establishment request if receiving the routing query rejection response sent by the RPDP; and
the subscriber subscription server is further capable of sending the routing query rejection request containing the rejection reason to the RPDP, according to the subscriber subscription, upon receiving the routing query request from the RPDP.

62. The system of Claim 50, wherein the routing control entity comprises more than one GMSC, the GMSC is capable of communicating with the RPDP through a MAP protocol interface, and the RPDP is capable of communicating with the subscriber subscription server of the CS domain through the MAP protocol interface as well;
the subscriber subscription server is further capable of providing routing query result information according to the routing query request forwarded by the RPDP;
the RPDP is further capable of intercepting the routing query request sent by a current GMSC to the subscriber subscription server and determining whether the current GMSC fulfills the RPDP interrogation manner requirement; obtaining the routing query result information from the subscriber subscription server and providing the current GMSC with the routing query result information which comprises the T-CSI if the current GMSC fulfills the RPDP interrogation manner requirement; providing the current GMSC with the routing information pointing to another GMSC which fulfills the RPDP interrogation manner requirement if the current GMSC fails to fulfill the RPDP interrogation manner requirement; determining the routing decision upon receiving the routing decision query request sent by the GMSC which fulfills the RPDP interrogation manner requirement and according to the routing policy and the called subscriber information provided by the subscriber subscription server, and providing the routing decision made by the RPDP for the GMSC which fulfills the RPDP interrogation manner requirement;
the routing control entity is capable of sending the routing query request to the subscriber subscription server upon receiving a CS incoming call establishment request, performing routing of the incoming call according to the routing information provided by the RPDP and pointing to the GMSC which fulfills the RPDP interrogation manner requirement if receiving the routing information, and performing routing of the CS domain incoming call according to the routing decision, if receiving the routing decision; and
the GMSC which fulfills the RPDP interrogation manner requirement is capable of communicating with the RPDP through a CAP protocol interface, and further capable of triggering a terminating CAMEL service according to the subscriber's T-CSI obtained from the subscriber subscription server and provided for the GMSC by the RPDP, in order to send a routing decision query request to the RPDP.

63. The system of Claim 62, wherein after the RPDP has intercepted the routing query request sent from current GMSC to the subscriber subscription server and before verifying whether the GMSC fulfills the RPDP interrogation manner requirement,
the RPDP further communicates with the subscriber subscription server and forwards the routing query request directly to the subscriber subscription server, or, verifies whether the subscriber has a terminating CAMEL service, and/or, whether the subscriber has an activated incoming call barring service and/or an operator determined incoming call barring service for the incoming call, if the subscriber does not subscribe to the terminating CAMEL service or there is the activated incoming call barring service and/or the operator determined incoming call barring service for the incoming call, the RPDP determines the routing decision directly and, when current routing decision is to deliver the incoming call via the CS domain, forwards the routing query request to the subscriber subscription server; and
the RPDP is further capable of making the routing decision again based on the reason of rejection in the reject response and according to the routing policy and routing decision related information saved in the CS/IMS domain, when a reject response comprising the reason of rejection is returned by the subscriber subscription server after the routing query request is forwarded; if the current routing decision is changed to deliver the incoming call via the IMS domain, the RPDP sends a routing query response to the GMSC and returning through the routing query response to the GMSC a virtual roaming number pointing to the CS/IMS interworking gateway MGCF; if the current routing decision is still to deliver the incoming call via the CS domain, the RPDP forwards the routing query reject response containing the reason of rejection to the GMSC; and
the GMSC further rejects current call request according to the reject response.
